# EUROPEAN PATENT APPLICATION

(11) **EP 4 105 187 A1**
(43) Date of publication of application: **21.12.2022**
(21) Application number: 22744996.4
(22) Date of filing: 04.01.2022
(51) Int. Cl.: C03C 10/04, C03C 10/02, C03C 10/12, C03C 10/14, C03C 1/04, C03C 4/02, C03B 32/02, C03C 21/00, C03C 3/097, C03B 27/03

(54) **MICROCRYSTALLINE GLASS, AND MICROCRYSTALLINE GLASS PRODUCT AND MANUFACTURING METHOD THEREFOR**

(30) Priority: 28.01.2021 CN 202110116889
(71) Applicant: CDGM Glass Co. Ltd., Chengdu, Sichuan 610100 (CN)
(72) Inventor: YUAN, Baoping, Chengdu, Sichuan 610100 (CN); LI, Sai, Chengdu, Sichuan 610100 (CN); JIANG, Tao, Chengdu, Sichuan 610100 (CN); CHEN, Xuemei, Chengdu, Sichuan 610100 (CN); YU, Tianlai, Chengdu, Sichuan 610100 (CN); SU, Yong, Chengdu, Sichuan 610100 (CN)
(74) Representative: Bandpay & Greuter
(86) International application number: PCT/CN2022/070074
(87) International publication number: WO 2022/161118

(57) **Abstract**

The present invention provides a microcrystalline glass and microcrystalline glass product with excellent mechanical properties, microcrystalline glass product, the components of which, expressed in weight percent, contain: SiO₂: 65~80%; Al₂O₃: below 5%; Li₂O: 10~25%; ZrO₂: 5~15%; P₂O₅: 1~8%. Through the reasonable component design, the microcrystalline glass product obtained by the present invention have excellent mechanical properties.

## Description

### Technical Field

The present invention relates to a microcrystalline glass, in particular to a microcrystalline glass with excellent mechanical properties, a microcrystalline glass product and a method of manufacturing thereof.

### Background

In recent years, with the rise and development of consumer electronics, glass has been used in a large number of such electronic devices as a transparent and high performance material. Devices such as LED and LCD displays and computer monitors can have a 'touch' function, which makes it necessary for the glass used in them to come into contact with various objects (such as the user's finger and/or stylus device), so that the glass needs to be strong and chemically stable enough to withstand regular contact without damage. In addition, such glass is used in portable electronics, such as mobile phones (handsets), tablets and personal media terminals, where the glass needs to withstand not only the regular 'touch' contact from the application for extended periods of time, but also the occasional bending, scratching and impact that may occur during use, which puts forward higher requirements for the relevant properties of glass.

Microcrystalline glass is a material that is crystallised within the glass by heat treatment and has superior mechanical properties to conventional glass. The formation of micro-crystals in the glass gives it a significant advantage over conventional glass in terms of bending, abrasion and drop resistance. On the other hand, microcrystalline glass can also be chemically strengthened to further improve its mechanical properties. Based on the above advantages, microcrystalline glass or its treated microcrystalline glass products are currently used in display devices or electronic devices that require higher resistance to drops, pressure and scratches, especially in the front and rear covers of portable electronic devices (such as mobile phones, watches, PADs, etc.).

With the development of science and technology, electronic devices or display devices have put forward higher requirements for the optical properties of the glass materials used in them. Optical properties refer to the performance of substances in the absorption, reflection and refraction of light, including light transmission rate, haze and refractive index. However, the microcrystalline glass currently on the market has poor chemical strengthening properties, high haze and low light transmission rate, which makes it difficult to be used in demanding display devices or electronic devices.

Therefore, to develop a microcrystalline glass and microcrystalline glass products with excellent mechanical properties and suitable for display devices or electronic devices becomes a goal pursued by scientists.

### Summary

The technical problem to be solved by the present invention is to provide a microcrystalline glass and microcrystalline glass product with excellent mechanical properties.

The technical solutions used in the present invention to solve the technical problem are:
(1)Microcrystalline glass product, comprising the following components by weight percentage: SiO₂: 65~80%; AL₂O₃: below 5%; Li₂O: 10~25%; ZrO₂: 5~15%; P₂O₅: 1~8%.
(2)Microcrystalline glass product, comprising the following components by weight percentage: SiO₂: 55~80%; AL₂O₃: below 10%; Li₂O: 8~25%; ZrO₂: 5~15%; P₂O₅: 1~8%.
(3)The microcrystalline glass product according to (1) or (2), further comprising the following components by weight percentage:K₂O: 0~5%; and/or MgO: 0~3%; and/or ZnO: 0~3%; and/orNa₂O: 0~6%; and/or SrO: 0~5%; and/or BaO: 0~5%; and/or CaO: 0~5%; and/or TiO₂: 0~5%; and/or B₂O₃: 0~5%; and/or Y₂O₃: 0~6%; and/or fining agent: 0~2%.
(4) Microcrystalline glass product with components containing SiO₂, Al₂O₃, Li₂O, ZrO₂ and P₂O₅, such microcrystalline glass product containing a lithium silicate crystalline phase, the lithium silicate crystalline phase having a higher weight percentage than the other crystalline phases.
(5) Microcrystalline glass product, which contain SiO₂, Li₂O, ZrO₂ and P₂O₅ in its components, and the average light | B | value of 400-800nm for microcrystalline glass products with thickness below 1mm is 0.9 or less.
(6) Microcrystalline glass product contains lithium silicate crystalline phase, the drop ball test height of such microcrystalline glass product is above 1400 mm.
(7)Microcrystalline glass product with components containing SiO_{2,} Al₂O₃, Li₂O, ZrO₂ and P₂O₅, the components of which are expressed in weight percentages, where Al₂O₃/(P₂O₅+ZrO₂) is below 1.2, this microcrystalline glass product contains lithium silicate crystalline phase, and the drop ball test height of such microcrystalline glass product is above 1400 mm.
(8)Microcrystalline glass product with components containing SiO_{2,} Li₂O, ZrO₂ and P₂O₅, the components of which are expressed in weight percentages, where SiO₂/ZrO₂ is 4.0~15.8, this microcrystalline glass product contains lithium silicate crystalline phase, which has a higher weight percentage than the other crystalline phases.
(9)The microcrystalline glass product according to any one of (4)to(8), comprising the following components by weight percentage: SiO₂: 55~80%; and/or Li₂O: 8~25%; and/or ZrO₂: 5~15%; and/or P₂O₅: 1~8%.
(10)Microcrystalline glass product, comprising the following components by weight percentage: SiO₂: 55~80%; Li₂O: 8~25%; ZrO₂: 5~15%; P₂O₅: 1~8%.
(11)The microcrystalline glass product according to any one of(4)to(10), further comprising the following components by weight percentage: AL₂O₃: below 10%; and/or K₂O: 0~5%; and/or MgO: 0~3%; and/or ZnO: 0~3%; and/or Na₂O: 0~6%; and/or SrO: 0~5%; and/or BaO: 0~5%; and/or CaO: 0~5%; and/or TiO₂: 0~5%; and/or B₂O₃: 0~5%; and/or Y₂O₃: 0~6%; and/or fining agent: 0~2%.
(12) The microcrystalline glass product according to any one of (1) to (11), wherein the components is expressed in weight percentage, satisfying one or more of the following 10 situations:
   1)Al₂O₃/ (P₂O₅+ZrO₂) is below 1.2, preferably Al₂O₃/ (P₂O₅+ZrO₂) is below 1.0, more preferably Al₂O₃/ (P₂O₅+ZrO₂) is 0.05~0.7;
   2)SiO₂/ZrO₂ is 4.0~15.8, preferably SiO₂/ZrO₂ is 4.5~12.0, more preferably SiO₂/ZrO₂ is 5.0~9.5, further preferably SiO₂/ZrO₂ is 6.0~9.0;
   3)P₂O₅+ZrO₂: 6~21%, preferably P₂O₅+ZrO₂: 7~18%, more preferably P₂O₅+ZrO₂: 8~16%, further preferably P₂O₅+ZrO₂: 10~16%;
   4)SiO₂/ (P₂O₅+ZrO₂) is 2.5~12.0, preferably SiO₂/ (P₂O₅+ZrO₂) is 3.0~10.0, more preferably SiO₂/ (P₂O₅+ZrO₂) is 3.5~7.5, further preferably SiO₂/ (P₂O₅+ZrO₂) is 4.0~6.5;
   5) (ZrO₂+Li₂O) /Al₂O₃ is above 2.0, preferably (ZrO₂+Li₂O) /Al₂O₃ is above 2.5, more preferably (ZrO₂+Li₂O) /Al₂O₃ is 2.5~30.0;
   6) (SiO₂+Al₂O₃) /ZrO₂ is 4.0~16.0, preferably (SiO₂+Al₂O₃) /ZrO₂ is 4.5~12.0, more preferably (SiO₂+Al₂O₃) /ZrO₂ is 5.0~10.0, further preferably (SiO₂+Al₂O₃) /ZrO₂ is 6.0~ 9.5;
   7) (Li₂O+ZrO₂) /SiO₂ is 0.19~0.55, preferably (Li₂O+ZrO₂) /SiO₂ is 0.2~0.5, more preferably (Li₂O+ZrO₂) /SiO₂ is 0.25~0.45, further preferably (Li₂O+ZrO₂) /SiO₂ is 0.25~ 0.4;
   8) (MgO+ZnO) /ZrO₂ is below 0.65, preferably (MgO+ZnO) /ZrO₂ is below 0.4, more preferably (MgO+ZnO) /ZrO₂ is below 0.2, further preferably (MgO+ZnO) /ZrO₂ is below 0.1;
   9) (Li₂O+Al₂O₃) /ZrO₂ is 0.8~5.0, preferably (Li₂O+Al₂O₃) /ZrO₂ is 1.0~4.0, more preferably (Li₂O+Al₂O₃) /ZrO₂ is 1.2~3.0, further preferably (Li₂O+Al₂O₃) /ZrO₂ is 1.5~ 2.5;
   10)Li₂O/ (ZrO₂+P₂O₅) is 0.5~3.0, preferably Li₂O/ (ZrO₂+P₂O₅) is 0.6~2.5, more preferably Li₂O/ (ZrO₂+P₂O₅) is 0.7~2.0, further preferably Li₂O/ (ZrO₂+P₂O₅) is 0.8~1.5.
(13)The microcrystalline glass product according to any one of (1) to (11), wherein the components is expressed in weight percentage:Al₂O₃/ (Li₂O+ZrO₂+P₂O₅) is below 0.3, preferably Al₂O₃/ ( Li₂O+ZrO₂+P₂O₅ ) is below 0.25 , more preferably Al₂O₃/ (Li₂O+ZrO₂+P₂O₅) is 0.01~0.2, further preferably Al₂O₃/ (Li₂O+ZrO₂+P₂O₅) is 0.01~0.1; and/or Al₂O₃/Li₂O is below 0.4, preferably Al₂O₃/Li₂O is below 0.3, more preferably Al₂O₃/Li₂O is below 0.2, further preferably Al₂O₃/Li₂O is below 0.1.
(14)The microcrystalline glass product according to any one of(1)to(11), comprising the following components by weight percentage:SiO₂: 68~78%, preferably SiO₂: 70~76%; and/or AL₂O₃: 0.1~4.5%, preferably AL₂O₃: 0.5~3%; and/or Li₂O: 12.5~22%, preferably Li₂O: 12.5~20%; and/or ZrO₂: 6~12%, preferably ZrO₂: 7~12%; and/or P₂O₅: 1.5~ 7%, preferably P₂O₅: 2~6%; and/or K₂O: 0~4%, preferably K₂O: 0~2%; and/or MgO: 0~2%, preferably MgO: 0~1%; and/or ZnO: 0~2%, preferably ZnO: 0~1%; and/or Na₂O: 0~4%, preferably Na₂O: 0.5~3%; and/or SrO: 0~2%, preferably SrO: 0~1%; and/or BaO: 0~2%, preferably BaO: 0~1%; and/or CaO: 0~2%, preferably CaO: 0~1%; and/or TiO₂: 0~2%, preferably TiO₂: 0~1%; and/or B₂O₃: 0~3%, preferably B₂O₃: 0~2%; and/or Y₂O₃: 0~4%, preferably Y₂O₃: 0~2%; and/or fining agent: 0~1%, preferably fining agent: 0~0.5%.
(15)The microcrystalline glass product according to any one of(2), (4)~(11), wherein the components is expressed in weight percentage:Al₂O₃/ (Li₂O+ZrO₂+P₂O₅) is below 0.4, preferably Al₂O₃/ (Li₂O+ZrO₂+P₂O₅) is below 0.3, more preferably Al₂O₃/ (Li₂O+ZrO₂+P₂O₅) is below 0.25; and/or Al₂O₃/Li₂O is below 0.7, preferably Al₂O₃/Li₂O is below 0.6, more preferably Al₂O₃/Li₂O is below 0.5, further preferably Al₂O₃/Li₂O is below 0.45; and/or Al₂O₃/ (P₂O₅+ZrO₂) is 0.1~0.6; and/or (ZrO₂+Li₂O) /Al₂O₃ is 3.0~20.0.
(16)The microcrystalline glass product according to any one of(2), (4)~(11), comprising the following components by weight percentage:SiO₂: 58~78%, preferably SiO₂: 60~ 76%; and/or AL₂O₃: 0.1~8%, preferably AL₂O₃: 0.5~7%; and/or Li₂O: 9~22%, preferably Li₂O: 10~20%; and/or ZrO₂: 6~12%, preferably ZrO₂: 7~12%; and/or P₂O₅: 1.5~7%, preferably P₂O₅: 2~6%; and/or K₂O: 0~4%, preferably K₂O: 0~2%; and/or MgO: 0~2%, preferably MgO: 0~1%; and/or ZnO: 0~2%, preferably ZnO: 0~ 1%; and/or Na₂O: 0~4%, preferably Na₂O: 0.5~3%; and/or SrO: 0~2%, preferably SrO: 0~1%; and/or BaO: 0~2%, preferably BaO: 0~1%; and/or CaO: 0~2%, preferably CaO: 0~1%; and/or TiO₂: 0~2%, preferably TiO₂: 0~1%; and/or B₂O₃: 0~ 3%, preferably B₂O₃: 0~2%; and/or Y₂O₃: 0~4%, preferably Y₂O₃: 0~2%; and/or fining agent: 0~1%, preferably fining agent: 0~0.5%.
(17)The microcrystalline glass product according to any one of (1) to (11), further comprising the following components by weight percentage:La₂O₃+Gd₂O₃+Yb₂O₃+Nb₂O₅+WO₃+Bi₂O₃+Ta₂O₅+TeO₂+GeO₂: 0~5%, preferably La₂O₃+Gd₂O₃+Yb₂O₃+Nb₂O₅+WO₃+Bi₂O₃+Ta₂O₅+TeO₂+GeO₂: 0~2% , more preferably La₂O₃+Gd₂O₃+Yb₂O₃+Nb₂O₅+WO₃+Bi₂O₃+Ta₂O₅+TeO₂+GeO₂: 0~1%.
(18)The microcrystalline glass product according to any one of (1) to (11), wherein the components do not contain SrO; and/or do not contain BaO; and/or do not contain MgO; and/or do not contain CaO; and/or do not contain ZnO; and/or do not contain PbO; and/or do not contain AS₂O₃; and/or do not contain TiO₂; and/or do not contain B₂O₃; and/or do not contain Y₂O₃; and/or do not contain F.
(19)The microcrystalline glass product according to any one of (1) to (11), crystalline phase of the microcrystalline glass product contains lithium silicate crystalline phase; and/or lithium phosphate crystalline phase; and/or petalite crystalline phase; and/or quartz solid solution crystalline phase.
(20)The microcrystalline glass product according to any one of (1) to (11), the microcrystalline glass product contains lithium silicate crystalline phase, which has a higher weight percentage than the other crystalline phases, the preferably lithium silicate crystalline phase as a percentage by weight of the microcrystalline glass product is 10~70%, more preferably lithium silicate crystalline phase as a percentage by weight of the microcrystalline glass product is 10~65%, further preferably lithium silicate crystalline phase as a percentage by weight of the microcrystalline glass product is 15~60%, much further preferably lithium silicate crystalline phase as a percentage by weight of the microcrystalline glass product is 20~55%.
(21)The microcrystalline glass product according to any one of (1) to (11), the microcrystalline glass product contains lithium monosilicate crystalline phase, which has a higher weight percentage than the other crystalline phases, the preferably lithium monosilicate crystalline phase as a percentage by weight of the microcrystalline glass product is 30~65%, more preferably lithium monosilicate crystalline phase as a percentage by weight of the microcrystalline glass product is 35~60%, further preferably lithium monosilicate crystalline phase as a percentage by weight of the microcrystalline glass product is 40~55%.
(22)The microcrystalline glass product according to any one of (1) to (11), the microcrystalline glass product contains lithium disilicate crystalline phase, which has a higher weight percentage than the other crystalline phases, the preferably lithium disilicate crystalline phase as a percentage by weight of the microcrystalline glass product is 10~60%, more preferably lithium disilicate crystalline phase as a percentage by weight of the microcrystalline glass product is 15~50%, further preferably lithium disilicate crystalline phase as a percentage by weight of the microcrystalline glass product is 20~45%.
(23)The microcrystalline glass product according to any one of (1) to (11), the microcrystalline glass product contains lithium phosphate crystalline phase, the weight percentage of lithium phosphate crystalline phase in microcrystalline glass product is below 10%,the preferably lithium phosphate crystalline phase as a percentage by weight of the microcrystalline glass product is below 5%.
(24)The microcrystalline glass product according to any one of (1) to (11), the microcrystalline glass product contains quartz solid solution crystalline phase, the weight percentage of quartz solid solution crystalline phase in microcrystalline glass product is below 10%,the preferably quartz solid solution crystalline phase as a percentage by weight of the microcrystalline glass product is below 5%.
(25)The microcrystalline glass product according to any one of (1) to (11), the microcrystalline glass product contains petalite crystalline phase, the weight percentage of petalite crystalline phase in microcrystalline glass product is below 18%,the preferably petalite crystalline phase as a percentage by weight of the microcrystalline glass product is below 15%, more preferably petalite crystalline phase as a percentage by weight of the microcrystalline glass product is below 10%, further preferably petalite crystalline phase as a percentage by weight of the microcrystalline glass product is below 5%.
(26)The microcrystalline glass product according to any one of (1) to (11),the microcrystalline glass product have a four-point bending strength of above 600MPa, preferably above 650MPa, more preferably above 700MPa; and/or an ion exchange layer depth of above 20µm, preferably above 30µm, more preferably above 40µm; and/or a drop ball test height of above 1400mm, preferably above 1500mm, more preferably above 1600mm; and/or a fracture toughness of above 1MPa • m^{1/2}, preferably above 1.3MPa • m^{1/2}, more preferably above 1.5MPa • m^{1/2}; and/or a Vickers hardness of above 730kgf/mm², preferably above 750kgf/mm², more preferably above 780kgf/mm²; and/or a dielectric constant εᵣ of above 5.4, preferably above 5.8, more preferably above 6.0; and/or a dielectric loss tanδ of below 0.05, preferably below 0.04, more preferably below 0.02, further preferably below 0.01.
(27)The microcrystalline glass product according to any one of (1) to (11),the microcrystalline glass product has a crystallinity of above 50%, preferably above 60%, more preferably above 70%; and/or a grain size of below 80 nm, preferably below 50 nm, more preferably below 30 nm.
(28)The microcrystalline glass product according to any one of (1) to (11),the haze of the microcrystalline glass product with a thickness of less than 1mm is below 0.2%, preferably below 0.18%, more preferably below 0.15%; and/or the average light transmittance of 400 to 800nm is above 87%, preferably above 89%, more preferably above 90%; and/or the light transmittance of 550nm is above 88%, preferably above 90%, more preferably above 91%; and/or an average light |B| value of 400 to 800 nm is below 0.9, preferably below 0.8, more preferably below 0.7.
(29)The microcrystalline glass product according to (28),the microcrystalline glass product has a thickness of 0.2~1 mm, preferably 0.3~0.9 mm, more preferably 0.5~0.8 mm, further preferably 0.55 mm or 0.6 mm or 0.68 mm or 0.7 mm or 0.75 mm.
(30)The microcrystalline glass product according to any one of (1) to (11),the microcrystalline glass product contains colorants.
(31)The microcrystalline glass product according to (30), the colorants comprise the following components by weight percentage: NiO: 0~4%; and/or Ni₂O₃: 0~4%; and/or CoO: 0~2%; and/or CO₂O₃: 0~2%; and/or Fe₂O₃: 0~7%; and/or MnO₂: 0~4%; and/or Er₂O₃: 0~8%; and/or Nd₂O₃ : 0~8%; and/or Cu₂O: 0~4%; and/or Pr₂O₃: 0~ 8%; and/or CeO₂: 0~4%.
(32)The microcrystalline glass product according to (30), the colorants comprise the following components by weight percentage: NiO: 0.1~4%; and/or Ni₂O₃: 0.1~4%; and/or CoO: 0.05~2%; and/or Co₂O₃: 0.05~2%; and/or Fe₂O₃: 0.2~7%; and/or MnO₂: 0.1~4%; and/or Er₂O₃: 0.4~8%; and/or Nd₂O₃ : 0.4~8%; and/or Cu₂O: 0.5~ 4%; and/or Pr₂O₃: 0.4~8%; and/or CeO₂: 0.5~4%.
(33)The microcrystalline glass product according to (30), the colorants comprise the following components by weight percentage: NiO: 0.1~3%; and/or Ni₂O₃: 0.1~3%; and/or CoO: 0.05~1.8%; and/or Co₂O₃: 0.05~1.8%; and/or Fe₂O₃: 0.2~5%; and/or MnO₂: 0.1~3%; and/or Er₂O₃: 0.4~6%; and/or Nd₂O₃ : 0.4~6%; and/or Cu₂O: 0.5~ 3%; and/or Pr₂O₃: 0.4~6%; and/or CeO₂: 0.5~3%.
(34)The microcrystalline glass product according to (30), the colorants comprise the following components by weight percentage: NiO: 0.1~3%; and/or Ni₂O₃: 0.1~3%.
(35)The microcrystalline glass product according to (30), the colorants comprise the following components by weight percentage: CoO: 0.05~1.8%; and/or Co₂O₃: 0.05~1.8%.
(36)The microcrystalline glass product according to (30), the colorants comprise the following components by weight percentage:Cu₂O: 0.5~3%; and/or CeO₂: 0.5~3%.
(37)The microcrystalline glass product according to (30), the colorants comprise the following components by weight percentage:Fe₂O₃: 0.2~5%, CoO: 0.05~0.3%;or Fe₂O₃: 0.2~5%, Co₂O₃: 0.05~0.3%;or Fe₂O₃: 0.2~5%, CoO: 0.05~0.3%, NiO: 0.1~1%;or Fe₂O₃: 0.2~5%, Co₂O₃: 0.05~0.3%, NiO: 0.1~1%.
(38)The microcrystalline glass product according to (30), the colorants comprise the following components by weight percentage:Pr₂O₃: 0.4~6%;or Fe₂O₃: 0.2~5%;or MnO₂: 0.1~3%; or Er₂O₃: 0.4~6%;or Nd₂O₃: 0.4~6%.
(39)The microcrystalline glass product according to (30), the colorants comprise the following components by weight percentage:Er₂O₃: 0.4~6%, Nd₂O₃: 0.4~4%, MnO₂: 0.1~2%.
(40)Microcrystalline glass, the components of which, comprising the following components by weight percentage: SiO₂: 65~80%; Al₂O₃:below 5%; Li₂O: 10~25%; ZrO₂: 5~15%; P₂O₅: 1~8%.
(41)Microcrystalline glass, the components of which, comprising the following components by weight percentage: SiO₂: 55~80%; Al₂O₃:below 10%; Li₂O: 8~25%; ZrO₂: 5~15%; P₂O₅: 1~8%.
(42)The microcrystalline glass according to (40)or(41), further comprising the following components by weight percentage: K₂O: 0~5%; and/or MgO: 0~3%; and/or ZnO: 0~ 3%; and/or Na₂O: 0~6%; and/or SrO: 0~5%; and/or BaO: 0~5%; and/or CaO: 0~ 5%; and/or TiO₂: 0~5%; and/or B₂O₃: 0~5%; and/or Y₂O₃: 0~6%; and/or fining agent: 0~2%.
(43)Microcrystalline glass with components containing SiO_{2,} Al₂O₃N Li₂O, ZrO₂ and P₂O₅, such microcrystalline glass containing lithium silicate crystalline phase, which has a higher weight percentage than the other crystalline phases.
(44)Microcrystalline glass, which contain SiO_{2,} Li₂O, ZrO₂ and P₂O₅ in its components, the average light |B| value of 400-800nm for microcrystalline glass with thickness less than 1mm is below 0.9.
(45)Microcrystalline glass containing a lithium silicate crystalline phase, the microcrystalline glass having a body drop height of above 1700mm.
(46)Microcrystalline glass with components containing SiO_{2,} Al₂O₃, Li₂O, ZrO₂ and P₂O₅, the components of which are expressed in weight percentages, where Al₂O₃/(P₂O₅+ZrO₂) is below 1.2, the microcrystalline glass contains a lithium silicate crystalline phase, and the microcrystalline glass having a body drop height of above 1700mm.
(47)Microcrystalline glass with components containing SiO_{2,} Li₂O, ZrO₂ and P₂O₅, the components of which are expressed in weight percentages, where SiO₂/ZrO₂ is 4.0~15.8, the microcrystalline glass contains lithium silicate crystalline phase, which has a higher weight percentage than the other crystalline phases.
(48)The microcrystalline glass according to any one of(43)to(47), comprising the following components by weight percentage:SiO₂: 55~80%; and/or Li₂O: 8~25%; and/or ZrO₂: 5~ 15%; and/or P₂O₅: 1~8%.
(49)Microcrystalline glass product containing a lithium silicate crystalline phase, comprising the following components by weight percentage: SiO₂: 55~80%; Li₂O: 8~25%; ZrO₂: 5~15%; P₂O₅: 1~8%.
(50)The microcrystalline glass according to any one of (43)to(49), comprising the following components by weight percentage: Al₂O₃: below 10%; and/or K₂O: 0~5%; and/or MgO: 0~3%; and/or ZnO: 0~3%; and/or Na₂O: 0~6%; and/or SrO: 0~5%; and/or BaO: 0~5%; and/or CaO: 0~5%; and/or TiO₂: 0~5%; and/or B₂O₃: 0~5%; and/or Y₂O₃: 0~6%; and/or fining agent: 0~2%.
(51) The microcrystalline glass according to any one of (40) to (50), wherein the components is expressed in weight percentage, satisfying one or more of the following 10 situations:
   1)Al_{2O3}/ (P₂O₅+ZrO₂) is below 1.2, preferably Al₂O₃/ (P₂O₅+ZrO₂) is below 1.0, more preferably Al₂O₃/ (P₂O₅+ZrO₂) is 0.05~0.7;
   2)SiO₂/ZrO₂ is 4.0~15.8, preferably SiO₂/ZrO₂ is 4.5~12.0, more preferably SiO₂/ZrO₂ is 5.0~9.5, further preferably SiO₂/ZrO₂ is 6.0~9.0;
   3)P₂O₅+ZrO₂: 6~21%, preferably P₂O₅+ZrO₂: 7~18%, more preferably P₂O₅+ZrO₂: 8~16%, further preferably P₂O₅+ZrO₂: 10~16%;
   4)SiO₂/ (P₂O₅+ZrO₂) is 2.5~12.0, preferably SiO₂/ (P₂O₅+ZrO₂) is 3.0~10.0, more preferably SiO₂/ (P₂O₅+ZrO₂) is 3.5~7.5, further preferably SiO₂/ (P₂O₅+ZrO₂) is 4.0~ 6.5;
   5) (ZrO₂+Li₂O) /Al₂O₃ is above 2.0, preferably (ZrO₂+Li₂O) /Al₂O₃ is above 2.5, more preferably (ZrO₂+Li₂O) /Al₂O₃ is 2.5~30.0;
   6) (SiO₂+Al₂O₃) /ZrO₂ is 4.0~16.0,preferably (SiO₂+Al₂O₃) /ZrO₂ is 4.5~12.0, more preferably (SiO₂+Al₂O₃) /ZrO₂ is 5.0~10.0, further preferably (SiO₂+Al₂O₃) /ZrO₂ is 6.0~ 9.5;
   7) (Li₂O+ZrO₂) /SiO₂ is 0.19~0.55, preferably (Li₂O+ZrO₂) /SiO₂ is 0.2~0.5, more preferably (Li₂O+ZrO₂) /SiO₂ is 0.25~0.45, further preferably (Li₂O+ZrO₂) /SiO₂ is 0.25~ 0.4;
   8) (MgO+ZnO) /ZrO₂ is below 0.65, preferably (MgO+ZnO) /ZrO₂ is below 0.4, more preferably (MgO+ZnO) /ZrO₂ is below 0.2, further preferably (MgO+ZnO) /ZrO₂ is below 0.1;
   9) (Li₂O+AlO₃) /ZrO₂ is 0.8~5.0, preferably (Li₂O+AlO₃) /ZrO₂ is 1.0~4.0, more preferably (Li₂O+AlO₃) /ZrO₂ is 1.2~3.0, further preferably (Li₂O+AlO₃) /ZrO₂ is 1.5~ 2.5;
   10)Li₂O/ (ZrO₂+P₂O₅) is 0.5~3.0, preferably Li₂O/ (ZrO₂+P₂O₅) is 0.6~2.5, more preferablyLi₂O/ (ZrO₂+P₂O₅) is 0.7~2.0, further preferably Li₂O/ (ZrO₂+P₂O₅) is 0.8~1.5.
(52)The microcrystalline glass according to any one of(40)to(50), wherein the components is expressed in weight percentage:Al₂O₃/ (Li₂O+ZrO₂+P₂O₅) is below 0.3, preferably Al₂O₃/ (Li₂O+ZrO₂+P₂O₅) is below 0.25, more preferably Al₂O₃/ (Li₂O+ZrO₂+P₂O₅) is 0.01~ 0.2,further preferably Al₂O₃/ (Li₂O+ZrO₂+P₂O₅) is 0.01~0.1; and/or Al₂O₃/Li₂O is below 0.4, preferably Al₂O₃/Li₂O is below 0.3, more preferably Al₂O₃/Li₂O is below 0.2, further preferably Al₂O₃/Li₂O is below 0.1.
(53)The microcrystalline glass according to any one of(40)to(50), comprising the following components by weight percentage:SiO₂: 68~78%, preferably SiO₂: 70~76%; and/or Al₂O₃: 0.1~4.5%, preferably Al₂O₃: 0.5~3%; and/or Li₂O: 12.5~22%, preferably Li₂O: 12.5~20%; and/or ZrO₂: 6~12%, preferably ZrO₂: 7~12%; and/or P₂O₅: 1.5~7%, preferably P₂O₅: 2~6%; and/or K₂O: 0~4%, preferably K₂O: 0~2%; and/or MgO: 0~ 2%, preferably MgO: 0~1%; and/or ZnO: 0~2%, preferably ZnO: 0~1%; and/or Na₂O: 0~4%, preferably Na₂O: 0.5~3%; and/or SrO: 0~2%, preferably SrO: 0~1%; and/or BaO: 0~2%, preferably BaO: 0~1%; and/or CaO: 0~2%, preferably CaO: 0~ 1%; and/or TiO₂: 0~2%, preferably TiO₂: 0~1%; and/or B₂O₃: 0~3%, preferably B₂O₃: 0~2%; and/or Y₂O₃: 0~4%, preferably Y₂O₃: 0~2%; and/or fining agent: 0~ 1%, preferably fining agent: 0~0.5%.
(54)The microcrystalline glass according to any one of(41), (43)to(50), wherein the components is expressed in weight percentage:Al₂O₃/ (Li₂O+ZrO₂+P₂O₅ ) is below 0.4,preferably Al₂O₃/ ( Li₂O+ZrO₂+P₂O₅ ) is below 0.3,more preferably Al₂O₃/ (Li₂O+ZrO₂+P₂O₅) is below 0.25; and/orAl₂O_{3/}Li₂Ois below 0.7, preferably Al₂O₃/Li₂O is below 0.6, more preferably Al₂O₃/Li₂O is below 0.5, further preferably Al₂O₃/Li₂O is below 0.45; and/or Al₂O₃/ (P₂O₅+ZrO₂) is 0.1~0.6; and/or (ZrO₂+Li₂O) /Al₂O₃is 3.0~20.0.
(55)The microcrystalline glass according to any one of(41), (43)to(50), comprising the following components by weight percentage:SiO₂: 58~78%, preferably SiO₂: 60~76%; and/or Al₂O₃: 0.1~8%, preferably Al₂O₃: 0.5~7%; and/or Li₂O: 9~22%, preferably Li₂O: 10~20%; and/or ZrO₂: 6~12%, preferably ZrO₂: 7~12%; and/or P₂O₅: 1.5~ 7%, preferably P₂O₅: 2~6%; and/or K₂O: 0~4%, preferably K₂O: 0~2%; and/or MgO: 0~2%, preferably MgO: 0~1%; and/or ZnO: 0~2%, preferably ZnO: 0~1%; and/or Na₂O: 0~4%, preferably Na₂O: 0.5~3%; and/or SrO: 0~2%, preferably SrO: 0~1%; and/or BaO: 0~2%, preferably BaO: 0~1%; and/or CaO: 0~2%, preferably CaO: 0~1%; and/or TiO₂: 0~2%, preferably TiO₂: 0~1%; and/or B₂O₃: 0~3%, preferably B₂O₃: 0~2%; and/or Y₂O₃: 0~4%, preferably Y₂O₃: 0~2%; and/or fining agent: 0~1%, preferably fining agent: 0~0.5%.
(56)The microcrystalline glass according to any one of(40)~(50),further comprising the following components by weight percentage:La₂O₃+Gd₂O₃+Yb₂O₃+Nb₂O₅+WO₃+Bi₂O₃+Ta₂O₅+TeO₂+GeO₂: 0 ~ 5%,preferably La₂O₃+Gd₂O₃+Yb₂O₃+Nb₂O₅+WO₃+Bi₂O₃+Ta₂O₅+TeO₂+GeO₂: 0 ~ 2%,more preferably La₂O₃+Gd₂O₃+Yb₂O₃+Nb₂O₅+WO₃+Bi₂O₃+Ta₂O₅+TeO₂+GeO₂:0~1%.
(57)The microcrystalline glass according to any one of (40) to (50), wherein the components do not contain SrO; and/or do not contain BaO; and/or do not contain MgO; and/or do not contain CaO; and/or do not contain ZnO; and/or do not contain PbO; and/or do not contain AS₂O₃; and/or do not contain TiO₂; and/or do not contain B₂O₃; and/or do not contain Y₂O₃; and/or do not contain F.
(58)The microcrystalline glass according to any one of (40) to (50), crystalline phase of the microcrystalline glass contains lithium silicate crystalline phase; and/or lithium phosphate crystalline phase; and/or petalite crystalline phase; and/or quartz solid solution crystalline phase.
(59)The microcrystalline glass according to any one of (40) to (50), the microcrystalline glass contains lithium silicate crystalline phase, which has a higher weight percentage than the other crystalline phases, the preferably lithium silicate crystalline phase as a percentage by weight of the microcrystalline glass is 10~70%, more preferably lithium silicate crystalline phase as a percentage by weight of the microcrystalline glass is 10~65%, further preferably lithium silicate crystalline phase as a percentage by weight of the microcrystalline glass product is 15~60%, much further preferably lithium silicate crystalline phase as a percentage by weight of the microcrystalline glass is 20~55%.
(60)The microcrystalline glass according to any one of (40) to (50), the microcrystalline glass contains lithium monosilicate crystalline phase, which has a higher weight percentage than the other crystalline phases, the preferably lithium monosilicate crystalline phase as a percentage by weight of the microcrystalline glass is 30~65%, more preferably lithium monosilicate crystalline phase as a percentage by weight of the microcrystalline glass is 35~ 60%, further preferably lithium monosilicate crystalline phase as a percentage by weight of the microcrystalline glass is 40~55%.
(61)The microcrystalline glass according to any one of (40) to (50), the microcrystalline glass contains lithium disilicate crystalline phase, which has a higher weight percentage than the other crystalline phases, the preferably lithium disilicate crystalline phase as a percentage by weight of the microcrystalline glass is 10~60%, more preferably lithium disilicate crystalline phase as a percentage by weight of the microcrystalline glass is 15~50%, further preferably lithium disilicate crystalline phase as a percentage by weight of the microcrystalline glass is 20~ 45%.
(62)The microcrystalline glass according to any one of (40) to (50), the microcrystalline glass contains lithium phosphate crystalline phase, the weight percentage of lithium phosphate crystalline phase in microcrystalline glass is below 10%,the preferably lithium phosphate crystalline phase as a percentage by weight of the microcrystalline glass is below 5%.
(63)The microcrystalline glass according to any one of (40) to (50), the microcrystalline glass contains quartz solid solution crystalline phase, the weight percentage of quartz solid solution crystalline phase in microcrystalline glass is below 10%,the preferably quartz solid solution crystalline phase as a percentage by weight of the microcrystalline glass is below 5%.
(64)The microcrystalline glass according to any one of (40) to (50), the microcrystalline glass contains petalite crystalline phase, the weight percentage of petalite crystalline phase in microcrystalline glass is below 18%,the preferably petalite crystalline phase as a percentage by weight of the microcrystalline glass is below 15%, more preferably petalite crystalline phase as a percentage by weight of the microcrystalline glass is below 10%, further preferably petalite crystalline phase as a percentage by weight of the microcrystalline glass is below 5%.
(65)The microcrystalline glass according to any one of (40) to (50), the microcrystalline glass have a crystallinity of above 50%, preferably above 60%, more preferably above 70%; and/or a grain size of below 80nm, preferably below 50nm, more preferably below 30nm; and/or a coefficient of thermal expansion of 70 x 10-⁷/K~90 × 10⁻⁷/K; and/or a refractive index of 1.5520~1.5700.
(66)The microcrystalline glass according to any one of (40) to (50), the microcrystalline glass have a body drop height of above 1700mm, preferably above 1900mm, more preferably above 2000mm; and/or a Vickers hardness of above 630kgf/mm², preferably above 650kgf/mm², more preferably above 680kgf/mm²; and/or a dielectric constant of above 5.4, preferably of above 5.8, more preferably of above 6.0; and/or a dielectric loss of below 0.05, preferably of below 0.04, more preferably of below 0.03, further preferably of below 0.01; and/or a surface resistance of above 1 × 10⁹ Ω •cm, preferably of above 1 × 10¹⁰ Ω •cm, more preferably above 1 x 10¹¹Ω•cm.
(67)The microcrystalline glass according to any one of (40) to (50),the haze of the microcrystalline glass with a thickness of less than 1mm is below 0.2%, preferably below 0.18%, more preferably below 0.15%; and/or the average light transmittance of 400 to 800nm is above 87%, preferably above 89%, more preferably above 90%; and/or the light transmittance of 550nm is above 88%, preferably above 90%, more preferably above 91%; and/or an average light |B| value of 400~800 nm is below 0.9, preferably below 0.8, more preferably below 0.7.
(68)The microcrystalline glass according to (67),the microcrystalline glass has a thickness of 0.2~1 mm, preferably 0.3~0.9 mm, more preferably 0.5~0.8 mm, further preferably 0.55 mm or 0.6 mm or 0.68 mm or 0.7 mm or 0.75 mm.
(69)The microcrystalline glass according to any one of (40) to (50),the microcrystalline glass contains colorants.
(70)The microcrystalline glass according to (69), the colorants comprise the following components by weight percentage: NiO: 0~4%; and/or Ni₂O₃: 0~4%; and/or CoO: 0~ 2%; and/or Co₂O₃: 0~2%; and/or Fe₂O₃: 0~7%; and/or MnO₂: 0~4%; and/or Er₂O₃: 0~8%; and/or Nd₂O₃ : 0~8%; and/or Cu₂O: 0~4%; and/or Pr₂O₃: 0~8%; and/or CeO₂: 0~4%.
(71)The microcrystalline glass according to (69), the colorants comprise the following components by weight percentage: NiO: 0.1~4%; and/or Ni₂O₃: 0.1~4%; and/or CoO: 0.05~2%; and/or Co₂O₃: 0.05~2%; and/or Fe₂O₃: 0.2~7%; and/or MnO₂: 0.1~4%; and/or Er₂O₃: 0.4~8%; and/or Nd₂O₃: 0.4~8%; and/or Cu₂O: 0.5~4%; and/or Pr₂O₃: 0.4~8%; and/or CeO₂: 0.5~4%.
(72)The microcrystalline glass according to (69), the colorants comprise the following components by weight percentage: NiO: 0.1~3%; and/or Ni₂O₃: 0.1~3%; and/or CoO: 0.05~1.8%; and/or Co₂O₃: 0.05~1.8%; and/or Fe₂O₃: 0.2~5%; and/or MnO₂: 0.1~ 3%; and/or Er₂O₃: 0.4~6%; and/or Nd₂O₃ : 0.4~6%; and/or Cu₂O: 0.5~3%; and/or Pr₂O₃: 0.4~6%; and/or CeO₂: 0.5~3%.
(73)The microcrystalline glass according to (69), the colorants comprise the following components by weight percentage: NiO: 0.1~3%; and/or Ni₂O₃: 0.1~3%.
(74)The microcrystalline glass according to (69), the colorants comprise the following components by weight percentage: CoO: 0.05~1.8%; and/or Co₂O₃: 0.05~1.8%.
(75)The microcrystalline glass according to (69), the colorants comprise the following components by weight percentage:Cu₂O: 0.5~3%; and/or CeO₂: 0.5~3%.
(76)The microcrystalline glass according to (69), the colorants comprise the following components by weight percentage:Fe₂O₃: 0.2~5%, CoO: 0.05~0.3%; or Fe₂O₃: 0.2~ 5%, CO₂O₃: 0.05~0.3%; or Fe₂O₃: 0.2~5%, CoO: 0.05~0.3%, NiO: 0.1~1%; or Fe₂O₃: 0.2~5%, CO₂O₃: 0.05~0.3%, NiO: 0.1~1%.
(77)The microcrystalline glass according to (69), the colorants comprise the following components by weight percentage:Pr₂O₃: 0.4~6%; or Fe₂O₃: 0.2~5%; or MnO₂: 0.1~ 3%; or Er₂O₃: 0.4~6%; or Nd₂O₃: 0.4~6%.
(78)The microcrystalline glass according to (69), the colorants comprise the following components by weight percentage:Er₂O₃: 0.4~6%, Nd₂O₃: 0.4~4%, MnO₂: 0.1~2%.
(79)Matrix glass, comprising the following components by weight percentage:SiO₂: 65~ 80%; Al₂O₃: below 5%; Li₂O: 10~25%; ZrO₂: 5~15%; P₂O₅: 1~8%.
(80)Matrix glass, comprising the following components by weight percentage:SiO₂: 55~ 80%; Al₂O₃: below 10%; Li₂O: 8~25%; ZrO₂: 5~15%; P₂O₅: 1~8%.
(81)Matrix glass with components containing SiO₂, Al₂O₃, Li₂O, ZrO₂ and P₂O₅, wherein the components is expressed in weight percentage, Al₂O₃/(P₂O₅+ZrO₂) is below 1.2, and the coefficient of thermal expansion of this matrix glass is 65 x 10⁻⁷/K to 79 x 10⁻⁷/K.
(82)A matrix glass with SiO₂, Li₂O, ZrO₂ and P₂O₅ in components expressed in weight percentages with SiO₂/ZrO₂ of 4.0 to 15.8.
(83)The matrix glass according to any one of(81)or(82), comprising the following components by weight percentage:SiO₂: 55~80%; and/or Al₂O₃: below 10%; and/or Li₂O: 8~25%; and/or ZrO₂: 5~15%; and/or P₂O₅: 1~8%.
(84)The matrix glass according to any one of(79)to(83), further comprising the following components by weight percentage:K₂O: 0~5%; and/or MgO: 0~3%; and/or ZnO: 0~ 3%; and/or Na₂O: 0~6%; and/or SrO: 0~5%; and/or BaO: 0~5%; and/or CaO: 0~ 5%; and/or TiO₂: 0~5%; and/or B₂O₃: 0~5%; and/or Y₂O₃: 0~6%; and/or fining agent: 0~2%.
(85) The matrix glass according to any one of (79) to (83), wherein the components is expressed in weight percentage , satisfying one or more of the following 10 situations:
   1)Al₂O₃/ (P₂O₅+ZrO₂) is below 1.2, preferably Al₂O₃/ (P₂O₅+ZrO₂) is below 1.0, more preferably Al₂O₃/ (P₂O₅+ZrO₂) is 0.05~0.7;
   2)SiO₂/ZrO₂ is 4.0~15.8, preferably SiO₂/ZrO₂ is 4.5~12.0, more preferably SiO₂/ZrO₂ is 5.0~9.5, further preferably SiO₂/ZrO₂ is 6.0~9.0;
   3)P₂O₅+ZrO₂: 6~21%, preferably P₂O₅+ZrO₂: 7~18%, more preferably P₂O₅+ZrO₂: 8~16%, further preferably P₂O₅+ZrO₂: 10~16%;
   4)SiO₂/ (P₂O₅+ZrO₂) is 2.5~12.0, preferably SiO₂/ (P₂O₅+ZrO₂) is 3.0~10.0, more preferably SiO₂/ (P₂O₅+ZrO₂) is 3.5~7.5, further preferably SiO₂/ (P₂O₅+ZrO₂) is 4.0~ 6.5;
   5) (ZrO₂+Li₂O) /Al₂O₃ is above 2.0, preferably (ZrO₂+Li₂O) /Al₂O₃ is above 2.5, more preferably (ZrO₂+Li₂O) /Al₂O₃ is 2.5~30.0;
   6) (SiO₂+Al₂O₃) /ZrO₂ is 4.0~16.0, preferably (SiO₂+Al₂O₃) /ZrO₂ is 4.5~12.0, more preferably (SiO₂+Al₂O₃) /ZrO₂ is 5.0~10.0, further preferably (SiO₂+Al₂O₃) /ZrO₂ is 6.0~ 9.5;
   7) (Li₂O+ZrO₂) /SiO₂ is 0.19~0.55, preferably (Li₂O+ZrO₂) /SiO₂ is 0.2~0.5, more preferably (Li₂O+ZrO₂) /SiO₂ is 0.25~0.45, further preferably (Li₂O+ZrO₂) /SiO₂ is 0.25~ 0.4;
   8) (MgO+ZnO) /ZrO₂ is below 0.65, preferably (MgO+ZnO) /ZrO₂ is below 0.4, more preferably (MgO+ZnO) /ZrO₂ is below 0.2, further preferably (MgO+ZnO) /ZrO₂ is below 0.1;
   9) (Li₂O+AlO₃) /ZrO₂ is 0.8~5.0, preferably (Li₂O+AlO₃) /ZrO₂ is 1.0~4.0, more preferably (L₂O+Al₂O₃) /ZrO₂ is 1.2∼3.0, further preferably (L₂O+Al₂O₃) /ZrO₂ is 1.5∼ 2.5;
   10)Li₂O/ (ZrO₂+P₂O₅) is 0.5∼3.0, preferably Li₂O/ (ZrO₂+P₂O₅) is 0.6∼2.5, more preferably Li₂O/ (ZrO₂+P₂O₅) is 0.7∼2.0, further preferably Li₂O/ (ZrO₂+P₂O₅) is 0.8∼1.5.
(86)The matrix glass according to any one of(79)to(83), wherein the components is expressed in weight percentage:Al₂O₃/ (Li₂O+ZrO₂+P₂O₅) is below 0.3, preferably Al₂O₃/ (Li₂O+ZrO₂+P₂O₅) is below 0.25, more preferably Al₂O₃/(Li₂O+ZrO₂+P₂O₅) is 0.01 ∼ 0.2,further preferably Al₂O₃/(Li₂O+ZrO₂+P₂O₅) is 0.01∼0.1; and/or Al₂O_{3/}Li₂O is below 0.4, preferably Al₂O_{3/}Li₂O is below 0.3, more preferably Al₂O_{3/}Li₂O is below 0.2, further preferably Al₂O_{3/}Li₂O is below 0.1.
(87)The matrix glass according to any one of(79)to(83), comprising the following components by weight percentage:SiO₂: 68∼78%, preferably SiO₂: 70∼76%; and/or Al₂O₃: 0.1∼4.5%, preferably Al₂O₃: 0.5∼3%; and/or Li₂O: 12.5∼22%, preferably Li₂O: 12.5∼20%; and/or ZrO₂: 6∼12%, preferably ZrO₂: 7∼12%; and/or P₂O₅: 1.5∼7%, preferably P₂O₅: 2∼6%; and/or K₂O: 0∼4%, preferably K₂O: 0∼2%; and/or MgO: 0∼ 2%, preferably MgO: 0∼1%; and/or ZnO: 0∼2%, preferably ZnO: 0∼1%; and/or Na₂O: 0∼4%, preferably Na₂O: 0.5∼3%; and/or SrO: 0∼2%, preferably SrO: 0∼1%; and/or BaO: 0∼2%, preferably BaO: 0∼1%; and/or CaO: 0∼2%, preferably CaO: 0∼ 1%; and/or TiO₂: 0∼2%, preferably TiO₂: 0∼1%; and/or B₂O₃: 0∼3%, preferably B₂O₃: 0∼2%; and/or Y₂O₃: 0∼4%, preferably Y₂O₃: 0∼2%; and/or fining agent: 0∼ 1%, preferably fining agent: 0∼0.5%.
(88)The matrix glass according to any one of(80)to(83), wherein the components is expressed in weight percentage:Al₂O_{3/} (Li₂O+ZrO₂+P₂O₅) is below 0.4,preferably Al₂O₃/ (Li₂O+ZrO₂+P₂O₅) is below 0.3,more preferably Al₂O₃/(Li₂O+ZrO₂+P₂O₅) is below 0.25; and/or Al₂O_{3/}Li₂O is below 0.7, preferably Al₂O_{3/}Li₂O is below 0.6, more preferably Al₂O_{3/}Li₂O is below 0.5, further preferably Al₂O_{3/}Li₂O is below 0.45; and/or Al₂O₃/(P₂O₅+ZrO₂) is 0.1∼ 0.6; and/or (ZrO₂+Li₂O) /Al₂O₃ is 3.0∼20.0.
(89)The matrix glass according to any one of(80)to(83), comprising the following components by weight percentage:SiO₂: 58∼78%, preferably SiO₂: 60∼76%; and/or Al₂O₃: 0.1∼8%, preferably Al₂O₃: 0.5∼7%; and/or Li₂O: 9∼22%, preferably Li₂O: 10∼ 20%; and/or ZrO₂: 6∼12%, preferably ZrO₂: 7∼12%; and/or P₂O₅: 1.5∼7%, preferably P₂O₅: 2∼6%; and/or K₂O: 0∼4%, preferably K₂O: 0∼2%; and/or MgO: 0∼2%, preferably MgO: 0∼1%; and/or ZnO: 0∼2%, preferably ZnO: 0∼1%; and/or Na₂O: 0∼ 4%, preferably Na₂O: 0.5∼3%; and/or SrO: 0∼2%, preferably SrO: 0∼1%; and/or BaO: 0∼2%, preferably BaO: 0∼1%; and/or CaO: 0∼2%, preferably CaO: 0∼1%; and/or TiO₂: 0∼2%, preferably TiO₂: 0∼1%; and/or B₂O₃: 0∼3%, preferably B₂O₃: 0∼ 2%; and/or Y₂O₃: 0 ∼ 4%, preferably Y₂O₃: 0 ∼ 2%; and/or fining agent: 0 ∼ 1%, preferably fining agent: 0∼0.5%.
(90)The matrix glass according to any one of(79)∼(83), further comprising the following components by weight percentage:La₂O₃+Gd₂O₃+Yb₂O₃+Nb₂O₅+WO₃+Bi₂O₃+Ta₂O₅+TeO₂+GeO₂ : 0 ∼ 5%,preferably La₂O₃+Gd₂O₃+Yb₂O₃+Nb₂O₅+WO₃+Bi₂O₃+Ta₂O₅+TeO₂+GeO₂ : 0 ∼ 2%,more preferably La₂O₃+Gd₂O₃+Yb₂O₃+Nb₂O₅+WO₃+Bi₂O₃+Ta₂O₅+TeO₂+GeO₂: 0∼1%.
(91)The matrix glass according to any one of (79) to (83), wherein the components do not contain SrO; and/or do not contain BaO; and/or do not contain MgO; and/or do not contain CaO; and/or do not contain ZnO; and/or do not contain PbO; and/or do not contain As₂O₃; and/or do not contain TiO₂; and/or do not contain B₂O₃; and/or do not contain Y₂O₃; and/or do not contain F.
(92)The matrix glass according to any one of (79) to (83), the matrix glass having a coefficient of thermal expansion of 65 × 10⁻⁷ /K∼80 × 10⁻⁷ /K; and/or a refractive index of 1.5400∼1.5600.
(93)The matrix glass according to any one of (79) to (83),the matrix glass contains colorants.
(94)The matrix glass according to (93), the colorants comprise the following components by weight percentage: NiO: 0∼4%; and/or Ni₂O₃: 0∼4%; and/or CoO: 0∼2%; and/or Co₂O₃: 0∼2%; and/or Fe₂O₃: 0∼7%; and/or MnO₂: 0∼4%; and/or Er₂O₃: 0∼8%; and/or Nd₂O₃ : 0∼8%; and/or Cu₂O: 0∼4%; and/or Pr₂O₃: 0∼8%; and/or CeO₂ : 0∼ 4%.
(95)The matrix glass according to (93), the colorants comprise the following components by weight percentage NiO: 0.1∼4%; and/or Ni₂O₃: 0.1∼4%; and/or CoO: 0.05∼2%; and/or Co₂O₃: 0.05 ∼ 2%; and/or Fe₂O₃: 0.2 ∼ 7%; and/or MnO₂: 0.1 ∼ 4%; and/or Er₂O₃: 0.4∼8%; and/or Nd₂O₃ : 0.4∼8%; and/or Cu₂O: 0.5∼4%; and/or Pr₂O₃: 0.4∼ 8%; and/or CeO₂: 0.5∼4%.
(96)The matrix glass according to (93), the colorants comprise the following components by weight percentage: NiO: 0.1∼3%; and/or Ni₂O₃: 0.1∼3%; and/or CoO: 0.05∼1.8%; and/or Co₂O₃: 0.05∼1.8%; and/or Fe₂O₃: 0.2∼5%; and/or MnO₂: 0.1∼3%; and/or Er₂O₃: 0.4∼6%; and/or Nd₂O₃ : 0.4∼6%; and/or Cu₂O: 0.5∼3%; and/or Pr₂O₃: 0.4∼ 6%; and/or CeO₂: 0.5∼3%.
(97)The matrix glass according to (93), the colorants comprise the following components by weight percentage: NiO: 0.1∼3%; and/or Ni₂O₃: 0.1∼3%.
(98)The matrix glass according to (93), the colorants comprise the following components by weight percentage: CoO: 0.05∼1.8%; and/or Co₂O₃: 0.05∼1.8%.
(99)The matrix glass according to (93), the colorants comprise the following components by weight percentage:Cu₂O: 0.5∼3%; and/or CeO₂: 0.5∼3%.
(100)The matrix glass according to (93), the colorants comprise the following components by weight percentage:Fe₂O₃: 0.2∼5%, CoO: 0.05∼0.3%; or Fe₂O₃: 0.2∼5%, Co₂O₃: 0.05∼0.3%; or Fe₂O₃: 0.2∼5%, CoO: 0.05∼0.3%, NiO: 0.1∼1%; or Fe₂O₃: 0.2∼ 5%, Co₂O₃: 0.05∼0.3%, NiO: 0.1∼1%.
(101)The matrix glass according to (93), the colorants comprise the following components by weight percentage:Pr₂O₃: 0.4∼6%; or Fe₂O₃: 0.2∼5%; or MnO₂: 0.1∼3%; or Er₂O₃: 0.4∼6%; or Nd₂O₃: 0.4∼6%.
(102)The matrix glass according to (93), the colorants comprise the following components by weight percentage:Er₂O₃: 0.4∼6%, Nd₂O₃: 0.4∼4%, MnO₂: 0.1∼2%.
(103)Microcrystalline glass forming body, containing any one of the microcrystalline glasses described in (40) to (78).
(104)Glass cover, containing the microcrystalline glass product as described in any one of (1) to (39), and/or the microcrystalline glass as described in any one of (40) to (78), and/or the matrix glass as described in any one of (79) to (102), and/or the microcrystalline glass forming body as described in (103).
(105)Glass components, containing the microcrystalline glass product as described in any one of (1) to (39), and/or the microcrystalline glass as described in any one of (40) to (78), and/or the matrix glass as described in any one of (79) to (102), and/or the microcrystalline glass forming body as described in (103).
(106)Display device, containing a microcrystalline glass product as described in any one of (1) to (39), and/or a microcrystalline glass as described in any one of (40) to (78), and/or a matrix glass as described in any one of (79) to (102), and/or a microcrystalline glass forming body as described in (103), and/or a glass cover as described in (104), and/or a glass component as described in (105).
(107)Electronic device, containing a microcrystalline glass product as described in any one of (1) to (39), and/or a microcrystalline glass as described in any one of (40) to (78), and/or a matrix glass as described in any one of (79) to (102), and/or a microcrystalline glass forming body as described in (103), and/or a glass cover as described in (104), and/or a glass component as described in (105).
(108)Method of manufacturing microcrystalline glass product, the method comprising the steps of: forming a matrix glass, forming the matrix glass into a microcrystalline glass by a crystallisation process, and then forming a microcrystalline glass product by a chemical strengthening process, the microcrystalline glass product comprising the following components by weight percentage:SiO₂: 65∼80%; Al₂O₃: below 5%; Li₂O: 10∼25%; ZrO₂: 5∼15%; P₂O₅: 1∼8%.
(109)Method of manufacturing microcrystalline glass product, the method comprising the steps of: forming a matrix glass, forming the matrix glass into a microcrystalline glass by a crystallisation process, and then forming a microcrystalline glass product by a chemical strengthening process, the microcrystalline glass product comprising the following components by weight percentage:SiO₂: 55∼80%; Al₂O₃: below 10%; Li₂O: 8∼25%; ZrO₂: 5∼15%; P₂O₅: 1∼8%.
(110)Method of manufacturing microcrystalline glass product, the method comprising the steps of: forming a matrix glass, forming the matrix glass into a microcrystalline glass by a crystallisation process, and then forming a microcrystalline glass product by a chemical strengthening process. The microcrystalline glass product contains lithium silicate crystalline phase, the components of which are expressed in weight percentages, wherein:Al₂O₃/ (P₂O₅+ZrO₂) is below 1.2.
(111)Method of manufacturing microcrystalline glass product, the method comprising the steps of: forming a matrix glass, forming the matrix glass into a microcrystalline glass by a crystallisation process, and then forming a microcrystalline glass product by a chemical strengthening process. The microcrystalline glass product contains lithium silicate crystalline phase, which has a higher weight percentage than the other crystalline phases.
(112)The method of manufacturing a microcrystalline glass product according to (110) or (111), wherein the components of the microcrystalline glass product, comprising the following components by weight percentage: SiO₂: 55∼80%; and/or Al₂O₃: below 10%; and/or Li₂O: 8∼25%; and/or ZrO₂: 5∼15%; and/or P₂O₅: 1∼8%.
(113)The method of manufacturing a microcrystalline glass product according to (108) ∼ (112), wherein the components of the microcrystalline glass product, further comprising the following components by weight percentage: K₂O: 0∼5%; and/or MgO: 0∼3%; and/or ZnO: 0∼3%; and/or Na₂O: 0∼6%; and/or SrO: 0∼5%; and/or BaO: 0∼5%; and/or CaO: 0∼5%; and/or TiO₂: 0∼5%; and/or B₂O₃: 0∼5%; and/or Y₂O₃: 0∼6%; and/or fining agent: 0∼2%.
(114)For the method of manufacturing microcrystalline glass product according to any one of(108)to(113),wherein the components of the microcrystalline glass product expressed in weight percentage , satisfying one or more of the following 10 situations:
   1)Al₂O₃/ (P₂O₅+ZrO₂) is below 1.2, preferably Al₂O₃/(P₂O₅+ZrO₂) is below 1.0, more preferably Al₂O₃/(P₂O₅+ZrO₂) is 0.05∼0.7;
   2)SiO₂/ZrO₂ is 4.0∼15.8, preferably SiO₂/ZrO₂ is 4.5∼12.0, more preferably SiO₂/ZrO₂ is 5.0∼9.5, further preferably SiO₂/ZrO₂ is 6.0∼9.0;
   3)P₂O₅+ZrO₂: 6∼21%, preferably P₂O₅+ZrO₂: 7∼18%, more preferably P₂O₅+ZrO₂: 8∼ 16%, further preferably P₂O₅+ZrO₂: 10∼16%;
   4)SiO₂/ (P₂O₅+ZrO₂) is 2.5∼12.0, preferably SiO₂/ (P₂O₅+ZrO₂) is 3.0∼10.0, more preferably SiO₂/ (P₂O₅+ZrO₂) is 3.5∼7.5, further preferably SiO₂/ (P₂O₅+ZrO₂) is 4.0∼6.5;
   5) (ZrO₂+Li₂O) /Al₂O₃ is above 2.0, preferably (ZrO₂+Li₂O) /Al₂O₃ is above 2.5, more preferably (ZrO₂+Li₂O) /Al₂O₃ is 2.5∼30.0;
   6) (SiO₂+Al₂O₃) /ZrO₂ is 4.0∼16.0, preferably (SiO₂+Al₂O₃) /ZrO₂ is 4.5∼12.0, more preferably (SiO₂+Al₂O₃) /ZrO₂ is 5.0∼10.0, further preferably (SiO₂+Al₂O₃) /ZrO₂ is 6.0∼ 9.5;
   7) (Li₂O+ZrO₂) /SiO₂ is 0.19∼0.55, preferably (Li₂O+ZrO₂) /SiO₂ is 0.2∼0.5, more preferably (Li₂O+ZrO₂) /SiO₂ is 0.25∼0.45, further preferably (Li₂O+ZrO₂) /SiO₂ is 0.25∼ 0.4;
   8) (MgO+ZnO) /ZrO₂ is below 0.65, preferably (MgO+ZnO) /ZrO₂ is below 0.4, more preferably (MgO+ZnO) /ZrO₂ is below 0.2, further preferably (MgO+ZnO) /ZrO₂ is below 0.1;
   9) (L₂O+Al₂O₃) /ZrO₂ is 0.8∼5.0, preferably (L₂O+Al₂O₃) /ZrO₂ is 1.0∼4.0, more preferably (L₂O+Al₂O₃) /ZrO₂ is 1.2∼3.0, further preferably (L₂O+Al₂O₃) /ZrO₂ is 1.5∼ 2.5;
   10)Li₂O/ (ZrO₂+P₂O₅) is 0.5∼3.0, preferably Li₂O/ (ZrO₂+P₂O₅) is 0.6∼2.5, more preferably Li₂O/ (ZrO₂+P₂O₅) is 0.7∼2.0, further preferablyLi₂O/ (ZrO₂+P₂O₅) is 0.8∼1.5.
(115)The method of manufacturing a microcrystalline glass product according to any one of (108) to (112),the components of the microcrystalline glass product is expressed in weight percentage: Al₂O₃/(Li₂O+ZrO₂+P₂O₅) is below 0.3, preferably Al₂O₃/(Li₂O+ZrO₂+P₂O₅) is below 0.25, more preferably Al₂O₃/(Li₂O+ZrO₂+P₂O₅) is 0.01∼0.2, further preferably Al₂O₃/(Li₂O+ZrO₂+P₂O₅) is 0.01∼0.1; and/or Al₂O₃/Li₂Ois below 0.4, preferably Al₂O_{3/}Li₂O is below 0.3,more preferably Al₂O_{3/}Li₂O is below 0.2, further preferably Al₂O_{3/}Li₂O is below 0.1.
(116)The method of manufacturing a microcrystalline glass product according to any one of (108) to (112), the microcrystalline glass product comprise the following components by weight percentage:SiO₂: 68∼78%,preferab!y SiO₂: 70∼76%; and/or Al₂O₃: 0.1∼4.5%, preferably Al₂O₃: 0.5∼3%; and/or Li₂O: 12.5∼22%, preferably Li₂O: 12.5∼20%; and/or ZrO₂: 6∼ 12%,preferably ZrO₂: 7∼12%; and/or P₂O₅: 1.5∼7%, preferably P₂O₅: 2∼6%; and/or K₂O: 0∼4%, preferably K₂O: 0∼2%; and/or MgO: 0∼2%,preferably MgO: 0∼1%; and/or ZnO: 0∼2%, preferably ZnO: 0∼1%; and/or Na₂O: 0∼4%, preferably Na₂O: 0.5∼3%; and/or SrO: 0∼2%, preferably SrO: 0∼1%; and/or BaO: 0∼2%, preferably BaO: 0∼1%; and/or CaO: 0∼2%, preferably CaO: 0∼1%; and/or TiO₂: 0∼2%, preferably TiO₂: 0∼1%; and/or B₂O₃: 0∼3%, preferably B₂O₃: 0∼2%; and/or Y₂O₃: 0∼ 4%, preferably Y₂O₃: 0∼2%; and/or fining agent: 0∼1%, preferably fining agent: 0∼ 0.5%.
(117)The method of manufacturing a microcrystalline glass product according to any one of (109) to (112),wherein:Al₂O₃/ (Li₂O+ZrO₂+P₂O₅) is below 0.4 , preferably Al₂O₃/ (Li₂O+ZrO₂+P₂O₅) is below 0.3, more preferably Al₂O₃/(Li₂O+ZrO₂+P₂O₅) is below 0.25; and/or Al₂O_{3/}Li₂O is below 0.7, preferably Al₂O_{3/}Li₂O is below 0.6, more preferably Al₂O_{3/}Li₂O is below 0.5, further preferably Al₂O_{3/}Li₂O is below 0.45; and/or Al₂O₃/(P₂O₅+ZrO₂) is 0.1∼ 0.6; and/or (ZrO₂+Li₂O) /Al₂O₃ is 3.0∼20.0.
(118)The method of manufacturing a microcrystalline glass product according to any one of (109) to (112), the microcrystalline glass product comprise the following components by weight percentage:SiO₂: 58∼78%,preferably SiO₂: 60∼76%; and/or Al₂O₃: 0.1∼8%, preferably Al₂O₃: 0.5∼7%; and/or Li₂O: 9∼22%, preferably Li₂O: 10∼20%; and/or ZrO₂: 6∼12%,preferably ZrO₂: 7∼12%; and/or P₂O₅: 1.5∼7%, preferably P₂O₅: 2∼ 6%; and/or K₂O: 0∼4%, preferably K₂O: 0∼2%; and/or MgO: 0∼2%,preferably MgO: 0∼1%; and/or ZnO: 0∼2%, preferably ZnO: 0∼1%; and/or Na₂O: 0∼4%, preferably Na₂O: 0.5∼3%; and/or SrO: 0∼2%, preferably SrO: 0∼1%; and/or BaO: 0∼2%, preferably BaO: 0∼1%; and/or CaO: 0∼2%, preferably CaO: 0∼1%; and/or TiO₂: 0∼ 2%, preferably TiO₂: 0∼1%; and/or B₂O₃: 0∼3%, preferably B₂O₃: 0∼2%; and/or Y₂O₃: 0∼4%, preferably Y₂O₃: 0∼2%; and/or fining agent: 0∼1%, preferably fining agent: 0∼0.5%.
(119)The method of manufacturing a microcrystalline glass product according to any one of (108) to (112), further the microcrystalline glass product comprise the following components by weight percentage:La₂O₃+Gd₂O₃+Yb₂O₃+Nb₂O₅+WO₃+Bi₂O₃+Ta₂O₅+TeO₂+GeO₂ : 0 ∼ 5%,preferably La₂O₃+Gd₂O₃+Yb₂O₃+Nb₂O₅+WO₃+Bi₂O₃+Ta₂O₅+TeO₂+GeO₂ : 0 ∼ 2%, more preferably La₂O₃+Gd₂O₃+Yb₂O₃+Nb₂O₅+WO₃+Bi₂O₃+Ta₂O₅+TeO₂+GeO₂: 0∼1%.
(120)The method of manufacturing microcrystalline glass product according to any one of (108) to (112), wherein the components do not contain SrO; and/or do not contain BaO; and/or do not contain MgO; and/or do not contain CaO; and/or do not contain ZnO; and/or do not contain PbO; and/or do not contain As₂O₃; and/or do not contain TiO₂; and/or do not contain B₂O₃; and/or do not contain Y₂O₃; and/or do not contain F.
(121)The method of manufacturing microcrystalline glass product according to any one of (108) to (112), crystalline phase of the microcrystalline glass product contains lithium silicate crystalline phase; and/or lithium phosphate crystalline phase; and/or petalite crystalline phase; and/or quartz solid solution crystalline phase.
(122)The method of manufacturing microcrystalline glass product according to any one of (108) to (112), the microcrystalline glass product contains lithium silicate crystalline phase, which has a higher weight percentage than the other crystalline phases, the preferably lithium silicate crystalline phase as a percentage by weight of the microcrystalline glass product is 10∼ 70%, more preferably lithium silicate crystalline phase as a percentage by weight of the microcrystalline glass product is 10∼65%, further preferably lithium silicate crystalline phase as a percentage by weight of the microcrystalline glass product is 15∼60%, much further preferably lithium silicate crystalline phase as a percentage by weight of the microcrystalline glass product is 20∼ 55%.
(123)The method of manufacturing microcrystalline glass product according to any one of (108) to (112), the microcrystalline glass product contains lithium monosilicate crystalline phase, which has a higher weight percentage than the other crystalline phases, the preferably lithium monosilicate crystalline phase as a percentage by weight of the microcrystalline glass product is 30∼65%, more preferably lithium monosilicate crystalline phase as a percentage by weight of the microcrystalline glass product is 35∼60%, further preferably lithium monosilicate crystalline phase as a percentage by weight of the microcrystalline glass product is 40∼55%.
(124)The method of manufacturing microcrystalline glass product according to any one of (108) to (112), the microcrystalline glass product contains lithium disilicate crystalline phase, which has a higher weight percentage than the other crystalline phases, the preferably lithium disilicate crystalline phase as a percentage by weight of the microcrystalline glass product is 10∼60%, more preferably lithium disilicate crystalline phase as a percentage by weight of the microcrystalline glass product is 15∼50%, further preferably lithium disilicate crystalline phase as a percentage by weight of the microcrystalline glass product is 20∼45%.
(125)The method of manufacturing microcrystalline glass product according to any one of (108) to (112), the microcrystalline glass product contains lithium phosphate crystalline phase, the weight percentage of lithium phosphate crystalline phase in microcrystalline glass product is below 10%,the preferably lithium phosphate crystalline phase as a percentage by weight of the microcrystalline glass product is below 5%.
(126)The method of manufacturing microcrystalline glass product according to any one of (108) to (112), the microcrystalline glass product contains quartz solid solution crystalline phase, the weight percentage of quartz solid solution crystalline phase in microcrystalline glass product is below 10%,the preferably quartz solid solution crystalline phase as a percentage by weight of the microcrystalline glass product is below 5%.
(127)The method of manufacturing microcrystalline glass product according to any one of (108) to (112), the microcrystalline glass product contains petalite crystalline phase, the weight percentage of petalite crystalline phase in microcrystalline glass product is below 18%,the preferably petalite crystalline phase as a percentage by weight of the microcrystalline glass product is below 15%, more preferably petalite crystalline phase as a percentage by weight of the microcrystalline glass product is below 10%, further preferably petalite crystalline phase as a percentage by weight of the microcrystalline glass product is below 5%.
(128)The method of manufacturing a microcrystalline glass product according to any one of (108) to (112), the microcrystalline glass product having a four-point bending strength of above 600MPa, preferably above 650MPa, more preferably above 700MPa; and/or an ionexchange layer depth of above 20µm, preferably above 30µm, more preferably above 40µm; and/or a drop ball test height of above 1400mm, preferably above 1500mm, more preferably above 1600mm; and/or a fracture toughness of above 1MPa-m^{1/2}, preferably above 1.3MPa-m^{1/2}, more preferably above 1.5MPa-m^{1/2} ; and/or a Vickers hardness of above 730kgf/mm², preferably above 750kgf/mm², more preferably above 780kgf/mm²; and/or a dielectric constant of above 5.4, preferably above 5.8, more preferably above 6.0; and/or a dielectric loss of below 0.05, preferably below 0.04, more preferably below 0.02, further preferably below 0.01; and/or a crystallinity of above 50%, preferably above 60%, more preferably above 70%; and/or a grain size of below 80nm, preferably below 50nm, more preferably below 30nm.
(129)The method of manufacturing a microcrystalline glass product according to any one of (108) to (112), wherein the microcrystalline glass product with a thickness of less than 1 mm has a haze of below 0.2%, preferably below 0.18%, more preferably below 0.15%; and/or an average light transmittance at 400 to 800nm of above 87%, preferably above 89%, more preferably above 90%; and/or The light transmittance at 550nm is above 88%, preferably above 90%, more preferably above 91%; and/or the average light |B| value at 400 to 800nm is below 0.9, preferably below 0.8, more preferably below 0.7.
(130)The method of manufacturing a microcrystalline glass product according to (129), the microcrystalline glass product having a thickness of 0.2∼1 mm, preferably 0.3∼0.9 mm, more preferably 0.5∼0.8 mm, further preferably 0.55 mm or 0.6 mm or 0.68 mm or 0.7 mm or 0.75 mm.
(131)The method of manufacturing a microcrystalline glass product according to any one of (108) to (112), the microcrystalline glass product comprising colorant, the colorant comprise the following components by weight percentage: NiO: 0 to 4%; and/or Ni₂O₃: 0 to 4%; and/or CoO: 0 to 2%; and/or Co₂O₃: 0 to 2%; and/or Fe₂O₃: 0 to 7%; and/or MnO₂: 0 to 4%; and/or Er₂O₃: 0 to 8%; and/or Nd₂O₃ : 0 to 8%; and/or Cu₂O: 0 to 4%; and/or Pr₂O₃: 0 to 8%; and/or CeO₂: 0 to 4%.
(132)The method of manufacturing a microcrystalline glass product according to (131), the colorant comprise the following components by weight percentage: NiO: 0.1∼4%; and/or Ni₂O₃: 0.1∼4%; and/or CoO: 0.05∼2%; and/or Co₂O₃: 0.05∼2%; and/or Fe₂O₃: 0.2∼ 7%; and/or MnO₂: 0.1∼4%; and/or Er₂O₃: 0.4∼8%; and/or Nd₂O₃ : 0.4∼8%; and/or Cu₂O: 0.5∼4%; and/or Pr₂O₃: 0.4∼8%; and/or CeO₂: 0.5∼4%.
(134)The method of manufacturing a microcrystalline glass product according to (131), the colorant comprise the following components by weight percentage: NiO: 0.1∼3%; and/or Ni₂O₃: 0.1∼3%; and/or CoO: 0.05∼1.8%; and/or Co₂O₃: 0.05∼1.8%; and/or Fe₂O₃: 0.2∼5%; and/or MnO₂: 0.1∼3%; and/or Er₂O₃: 0.4∼6%; and/or Nd₂O₃: 0.4∼6%; and/or Cu₂O: 0.5∼3%; and/or Pr₂O₃: 0.4∼6%; and/or CeO₂: 0.5∼3%.
(134)The method of manufacturing a microcrystalline glass product according to (131), the colorant comprise the following components by weight percentage: NiO: 0.1∼3%; and/or Ni₂O₃: 0.1∼3%.
(135)The method of manufacturing a microcrystalline glass product according to (131), the colorant comprise the following components by weight percentage: CoO: 0.05∼1.8%; and/or Co₂O₃: 0.05∼1.8%.
(136)The method of manufacturing a microcrystalline glass product according to (131), the colorant comprise the following components by weight percentage:Cu₂O: 0.5∼3%; and/or CeO₂: 0.5∼3%.
(137)The method of manufacturing a microcrystalline glass product according to (131), the colorant comprise the following components by weight percentage:Fe₂O₃: 0.2∼5%, CoO: 0.05∼0.3%; or Fe₂O₃: 0.2∼5%, Co₂O₃: 0.05∼0.3%; or Fe₂O₃: 0.2∼5%, CoO: 0.05∼ 0.3%, NiO: 0.1∼1%; or Fe₂O₃: 0.2∼5%, Co₂O₃: 0.05∼0.3%, NiO: 0.1∼1%.
(138)The method of manufacturing a microcrystalline glass product according to (131), the colorant comprise the following components by weight percentage:Pr₂O₃: 0.4∼6%; or Fe₂O₃: 0.2∼5%; or MnO₂: 0.1∼3%; or Er₂O₃: 0.4∼6%; or Nd₂O₃: 0.4∼6%.
(139)The method of manufacturing a microcrystalline glass product according to (131), the colorant comprise the following components by weight percentage:Er₂O₃: 0.4∼6%, Nd₂O₃: 0.4∼4%, MnO₂: 0.1∼2%.
(140)The method of manufacturing a microcrystalline glass product according to any one of (108) to (112), the crystallization process comprising the steps of: increasing the temperature to a defined crystallization treatment temperature, maintaining the temperature for a certain period of time after reaching the crystallization treatment temperature and then lowering the temperature, the crystallization treatment temperature being 580∼750°C, preferably 600∼ 700°C, and the holding time at the crystallization treatment temperature being 0∼8 hours, preferably 1∼6 hours.
(141)The method of manufacturing a microcrystalline glass product according to any one of (108) to (112), the crystallization process comprising the steps of: carrying out a nucleation process at a 1st temperature, followed by a crystal growth process at a 2nd temperature higher than the nucleation process temperature.
(142)The method of manufacturing a microcrystalline glass product according to (141), the crystallization process comprising the steps of: a 1st temperature of 470∼580°C and a 2nd temperature of 600∼750°C; a holding time at the 1st temperature of 0∼24 hours, preferably 2∼15 hours; and a holding time at the 2nd temperature of 0∼10 hours, preferably 0.5∼6 hours.
(143)The method of manufacturing a microcrystalline glass product according to any one of (108) to (112), the chemical strengthening process comprising: immersing the microcrystalline glass in a salt bath of molten Na salt at a temperature of 350°C∼470°C for 1∼ 36 hours, preferably in the temperature range of 380°C∼460°C and preferably in the time range of 2∼24 hours; and/or the microcrystalline glass is immersed in a salt bath of molten K salt at a temperature of 360°C∼450°C for 1∼36 hours, preferably in the range of 2∼24 hours; and/or the microcrystalline glass is immersed in a salt bath of molten K and Na salts at a temperature of 360°C∼450°C for 1∼36 hours, preferably in the range of 2∼24 hours.
(144)Method of manufacturing microcrystalline glass, the method comprising the steps of: forming a matrix glass, forming the matrix glass into microcrystalline glass by a crystallization process, the components of the microcrystalline glass, expressed as a percentage by weight, containing:SiO₂: 65∼80%; Al₂O₃: below 5%; Li₂O: 10∼25%; ZrO₂: 5∼15%; P₂O₅: 1∼ 8%.
(145)Method of manufacturing microcrystalline glass, the method comprising the steps of: forming a matrix glass, forming the matrix glass into microcrystalline glass by a crystallization process, the microcrystalline glass comprise the following components by weight percentage:SiO₂: 55∼80%; Al₂O₃: below 10%; Li₂O: 8∼25%; ZrO₂: 5∼15%; P₂O₅: 1∼8%.
(146)Method of manufacturing microcrystalline glass, the method comprising the steps of: forming a matrix glass, forming the matrix glass into microcrystalline glass by a crystallization process. The microcrystalline glass contains lithium silicate crystalline phase, the components of which, expressed as a percentage by weight, wherein: Al₂O₃/(P₂O₅+ZrO₂) is below 1.2.
(147)Method of manufacturing microcrystalline glass, the method comprising the steps of: forming a matrix glass, forming the matrix glass into microcrystalline glass by a crystallization process. The microcrystalline glass contains lithium silicate crystalline phase, which has a higher weight percentage than the other crystalline phases.
(148)The method of manufacturing a microcrystalline glass according to any one of (146) to (147), the microcrystalline glass comprise the following components by weight percentage:SiO₂: 55∼80%;and/or Al₂O₃: below 10%; and/or Li₂O: 8∼25%; and/or ZrO₂: 5∼15%; and/or P₂O₅: 1∼8%.
(149)The method of manufacturing a microcrystalline glass according to any one of (144) to (148), the microcrystalline glass comprise the following components by weight percentage:K₂O: 0∼5%; and/or MgO: 0∼3%; and/or ZnO: 0∼3%; and/or Na₂O: 0∼ 6%; and/or SrO: 0∼5%; and/or BaO: 0∼5%; and/or CaO: 0∼5%; and/or TiO₂: 0∼ 5%; and/or B₂O₃: 0∼5%; and/or Y₂O₃: 0∼6%; and/or fining agent: 0∼2%.
(150)For the method of manufacturing microcrystalline glass according to any one of(144)to(149),wherein the components of the microcrystalline glass is expressed in weight percentage , satisfying one or more of the following 10 situations:
   1)Al₂O₃/ (P₂O₅+ZrO₂) is below 1.2, preferably Al₂O₃/(P₂O₅+ZrO₂) is below 1.0, more preferably Al₂O₃/(P₂O₅+ZrO₂) is 0.05∼0.7;
   2)SiO₂/ZrO₂ is 4.0∼15.8, preferably SiO₂/ZrO₂ is 4.5∼12.0, more preferably SiO₂/ZrO₂ is 5.0∼9.5, further preferably SiO₂/ZrO₂ is 6.0∼9.0;
   3)P₂O₅+ZrO₂: 6∼21%, preferably P₂O₅+ZrO₂: 7∼18%, more preferably P₂O₅+ZrO₂: 8∼16%, further preferably P₂O₅+ZrO₂: 10∼16%;
   4)SiO₂/ (P₂O₅+ZrO₂) is 2.5∼12.0, preferably SiO₂/ (P₂O₅+ZrO₂) is 3.0∼10.0, more preferably SiO₂/ (P₂O₅+ZrO₂) is 3.5∼7.5, further preferably SiO₂/ (P₂O₅+ZrO₂) is 4.0∼ 6.5;
   5) (ZrO₂+Li₂O) /Al₂O₃ is above 2.0, preferably (ZrO₂+Li₂O) /Al₂O₃ is above 2.5, more preferably (ZrO₂+Li₂O) /Al₂O₃ is 2.5∼30.0;
   6) (SiO₂+Al₂O₃) /ZrO₂ is 4.0∼16.0, preferably (SiO₂+Al₂O₃) /ZrO₂ is 4.5∼12.0, more preferably (SiO₂+Al₂O₃) /ZrO₂ is 5.0∼10.0, further preferably (SiO₂+Al₂O₃) /ZrO₂ is 6.0∼ 9.5;
   7) (Li₂O+ZrO₂) /SiO₂ is 0.19∼0.55, preferably (Li₂O+ZrO₂) /SiO₂ is 0.2∼0.5, more preferably (Li₂O+ZrO₂) /SiO₂ is 0.25∼0.45, further preferably (Li₂O+ZrO₂) /SiO₂ is 0.25∼ 0.4;
   8) (MgO+ZnO) /ZrO₂ is below 0.65, preferably (MgO+ZnO) /ZrO₂ is below 0.4, more preferably (MgO+ZnO) /ZrO₂ is below 0.2, further preferably (MgO+ZnO) /ZrO₂ is below 0.1;
   9) (L₂O+Al₂O₃) /ZrO₂ is 0.8∼5.0, preferably (L₂O+Al₂O₃) /ZrO₂ is 1.0∼4.0, more preferably (L₂O+Al₂O₃) /ZrO₂ is 1.2∼3.0, further preferably (L₂O+Al₂O₃) /ZrO₂ is 1.5∼ 2.5;
   10)Li₂O/ (ZrO₂+P₂O₅) is 0.5∼3.0, preferably Li₂O/ (ZrO₂+P₂O₅) is 0.6∼2.5, more preferably Li₂O/ (ZrO₂+P₂O₅) is 0.7∼2.0, further preferably Li₂O/ (ZrO₂+P₂O₅) is 0.8∼1.5.
(151)The method of manufacturing a microcrystalline glass according to any one of (144) to (149), wherein the components of the microcrystalline glass is expressed in weight percentage: Al₂O₃/(Li₂O+ZrO₂+P₂O₅) is below 0.3, preferably Al₂O₃/(Li₂O+ZrO₂+P₂O₅) is below 0.25, more preferably Al₂O₃/(Li₂O+ZrO₂+P₂O₅) is 0.01∼0.2, further preferably Al₂O₃/(Li₂O+ZrO₂+P₂O₅) is 0.01∼0.1; and/or Al₂O_{3/}Li₂O is below 0.4, preferably Al₂O₃/Li₂O is below 0.3, more preferably Al₂O₃/Li₂O is below 0.2, further preferably Al₂O₃/Li₂O is below 0.1.
(152)The method of manufacturing a microcrystalline glass according to any one of (144) to (149), the microcrystalline glass comprise the following components by weight percentage: SiO₂: 68∼78%, preferably SiO₂: 70∼76%; and/or Al₂O₃: 0.1∼4.5%, preferably Al₂O₃: 0.5∼3%; and/or Li₂O: 12.5∼22%, preferably Li₂O: 12.5∼20%; and/or ZrO₂: 6∼12%, preferably ZrO₂: 7∼12%; and/or P₂O₅: 1.5∼7%, preferably P₂O₅: 2∼6%; and/or K₂O: 0∼4%, preferably K₂O: 0∼2%; and/or MgO: 0∼2%, preferably MgO: 0∼1%; and/or ZnO: 0∼2%, preferably ZnO: 0∼1%; and/or Na₂O: 0∼4%, preferably Na₂O: 0.5∼3%; and/or SrO: 0∼2%, preferably SrO: 0∼1%; and/or BaO: 0∼2%, preferably BaO: 0∼ 1%; and/or CaO: 0∼2%, preferably CaO: 0∼1%; and/or TiO₂: 0∼2%, preferably TiO₂: 0∼1%; and/or B₂O₃: 0∼3%, preferably B₂O₃: 0∼2%; and/or Y₂O₃: 0∼4%, preferably Y₂O₃: 0∼2%; and/or fining agent: 0∼1%, preferably fining agent: 0∼0.5%.
(153)The method of manufacturing a microcrystalline glass according to any one of (145) to (149),wherein:Al₂O₃/ (Li₂O+ZrO₂+P₂O₅) is below 0.4, preferably Al₂O₃/(Li₂O+ZrO₂+P₂O₅) is below 0.3, more preferably Al₂O₃/(Li₂O+ZrO₂+P₂O₅) is below 0.25; and/or Al₂O₃/Li₂O is below 0.7, preferably Al₂O₃/Li₂O is below 0.6, more preferably Al₂O₃/Li₂O is below 0.5, further preferably Al₂O₃/Li₂O is below 0.45; and/or Al₂O₃/(P₂O₅+ZrO₂) is 0.1∼0.6; and/or (ZrO₂+Li₂O) /Al₂O₃ is 3.0∼20.0.
(154)The method of manufacturing a microcrystalline glass according to any one of (145) to (149), the microcrystalline glass comprise the following components by weight percentage: SiO₂: 58∼78%, preferably SiO₂: 60∼76%; and/or Al₂O₃: 0.1∼8%, preferably Al₂O₃: 0.5∼7%; and/or Li₂O: 9∼22%, preferably Li₂O: 10∼20%; and/or ZrO₂: 6∼12%, preferably ZrO₂: 7∼12%; and/or P₂O₅: 1.5∼7%, preferably P₂O₅: 2∼6%; and/or K₂O: 0∼4%, preferably K₂O: 0∼2%; and/or MgO: 0∼2%, preferably MgO: 0∼1%; and/or ZnO: 0∼2%, preferably ZnO: 0∼1%; and/or Na₂O: 0∼4%, preferably Na₂O: 0.5∼3%; and/or SrO: 0∼2%, preferably SrO: 0∼1%; and/or BaO: 0∼2%, preferably BaO: 0∼ 1%; and/or CaO: 0∼2%, preferably CaO: 0∼1%; and/or TiO₂: 0∼2%, preferably TiO₂: 0∼1%; and/or B₂O₃: 0∼3%, preferably B₂O₃: 0∼2%; and/or Y₂O₃: 0∼4%, preferably Y₂O₃: 0∼2%; and/or fining agent: 0∼1%, preferably fining agent: 0∼0.5%.
(155)The method of manufacturing a microcrystalline glass according to any one of (144) to (149), further the microcrystalline glass comprise the following components by weight percentage : La₂O₃+Gd₂O₃+Yb₂O₃+Nb₂O₅+WO₃+Bi₂O₃+Ta₂O₅+TeO₂+GeO₂: 0∼5%, preferably La₂O₃+Gd₂O₃+Yb₂O₃+Nb₂O₅+WO₃+Bi₂O₃+Ta₂O₅+TeO₂+GeO₂ : 0 ∼ 2%, more preferably La₂O₃+Gd₂O₃+Yb₂O₃+Nb₂O₅+WO₃+Bi₂O₃+Ta₂O₅+TeO₂+GeO₂: 0∼1%.
(156) The method of manufacturing a microcrystalline glass according to any one of (144) to (149), wherein the components of the microcrystalline glass do not contain SrO; and/or do not contain BaO; and/or do not contain MgO; and/or do not contain CaO; and/or do not contain ZnO; and/or do not contain PbO; and/or do not contain As₂O₃; and/or do not contain TiO₂; and/or do not contain B₂O₃; and/or do not contain Y₂O₃; and/or do not contain F.
(157) The method of manufacturing a microcrystalline glass according to any one of (144) to (149), crystalline phase of the microcrystalline glass contains lithium silicate crystalline phase; and/or lithium phosphate crystalline phase; and/or petalite crystalline phase; and/or quartz solid solution crystalline phase.
(158) The method of manufacturing a microcrystalline glass according to any one of (144) to (149),the microcrystalline glass contains lithium silicate crystalline phase, which has a higher weight percentage than the other crystalline phases, the preferably lithium silicate crystalline phase as a percentage by weight of the microcrystalline glass is 10∼70%, more preferably lithium silicate crystalline phase as a percentage by weight of the microcrystalline glass is 10∼ 65%, further preferably lithium silicate crystalline phase as a percentage by weight of the microcrystalline glass is 15∼60%, much further preferably lithium silicate crystalline phase as a percentage by weight of the microcrystalline glass is 20∼55%.
(159) The method of manufacturing a microcrystalline glass according to any one of (144) to (149), the microcrystalline glass contains lithium monosilicate crystalline phase, which has a higher weight percentage than the other crystalline phases, the preferably lithium monosilicate crystalline phase as a percentage by weight of the microcrystalline glass is 30∼65%, more preferably lithium monosilicate crystalline phase as a percentage by weight of the microcrystalline glass is 35∼60%, further preferably lithium monosilicate crystalline phase as a percentage by weight of the microcrystalline glass is 40∼55%.
(160) The method of manufacturing a microcrystalline glass according to any one of (144) to (149), the microcrystalline glass contains lithium disilicate crystalline phase, which has a higher weight percentage than the other crystalline phases, the preferably lithium disilicate crystalline phase as a percentage by weight of the microcrystalline glass is 10∼60%, more preferably lithium disilicate crystalline phase as a percentage by weight of the microcrystalline glass is 15∼50%, further preferably lithium disilicate crystalline phase as a percentage by weight of the microcrystalline glass is 20∼45%.
(161)The method of manufacturing microcrystalline glass according to any one of (144) to (149), the microcrystalline glass contains lithium phosphate crystalline phase, the weight percentage of lithium phosphate crystalline phase in microcrystalline glass is below 10%,the preferably lithium phosphate crystalline phase as a percentage by weight of the microcrystalline glass is below 5%.
(162)The method of manufacturing microcrystalline glass according to any one of (144) to (149), the microcrystalline glass contains quartz solid solution crystalline phase, the weight percentage of quartz solid solution crystalline phase in microcrystalline glass is below 10%,the preferably quartz solid solution crystalline phase as a percentage by weight of the microcrystalline glass is below 5%.
(163)The method of manufacturing microcrystalline glass according to any one of (144) to (149), the microcrystalline glass contains petalite crystalline phase, the weight percentage of petalite crystalline phase in microcrystalline glass is below 18%,the preferably petalite crystalline phase as a percentage by weight of the microcrystalline glass is below 15%, more preferably petalite crystalline phase as a percentage by weight of the microcrystalline glass is below 10%, further preferably petalite crystalline phase as a percentage by weight of the microcrystalline glass is below 5%.
(164)The method of manufacturing microcrystalline glass according to any one of (144) to (149), the microcrystalline glass having a degree of crystallinity of above 50%, preferably above 60%, more preferably above 70%; and/or a grain size of below 80nm, preferably below 50nm, more preferably below 30nm; and/or a coefficient of thermal expansion of 70 × 10⁻⁷/K∼90 × 10⁻⁷/K; and/or a refractive index of 1.5520∼1.5700; and/or a body drop height of above 1700mm, preferably above 1900mm, more preferably above 2000mm; and/or a Vickers hardness of above 630kgf/mm², preferably above 650kgf/mm², more preferably above 680kgf/mm²; and/or a dielectric constant of 5.4 above, preferably above 5.8, more preferably above 6.0; and/or a dielectric loss of 0.05 or less, preferably below 0.04, more preferably below 0.03, further preferably below 0.01; and/or a surface resistance of 1 × 10⁹Ω•cm or more, preferably above 1 × 10¹⁰Ω•cm , more preferably 1×10¹¹Ω•cm or more.
(165)The method of manufacturing a microcrystalline glass according to any one of (144) to (149), wherein the microcrystalline glass with a thickness of 1 mm or less has a haze of 0.2% or less, preferably 0.18% or less, more preferably 0.15% or less; and/or an average light transmittance at 400∼800nm of 87% or more, preferably 89% or more, more preferably 90% or more; and/or the light transmittance at 550nm is above 88%, preferably above 90%, more preferably above 91%; and/or the average light |B| value at 400∼800nm is below 0.9, preferably below 0.8, more preferably below 0.7.
(166)The method of manufacturing a microcrystalline glass according to (165), the microcrystalline glass having a thickness of 0.2~1 mm, preferably 0.3~0.9 mm, more preferably 0.5~0.8 mm, further preferably 0.55 mm or 0.6 mm or 0.68 mm or 0.7 mm or 0.75 mm.
(167)The method of manufacturing a microcrystalline glass according to any one of (144) to (149), the microcrystalline glass comprising a colorant, the colorant comprise the following components by weight percentage: NiO: 0 to 4%; and/or Ni₂O₃: 0 to 4%; and/or CoO: 0 to 2%; and/or Co₂O₃: 0 to 2%; and/or Fe₂O₃: 0 to 7%; and/or MnO₂: 0 to 4%; and/or Er₂O₃: 0 to 8%; and/or Nd₂O₃ : 0 to 8%; and/or Cu₂O: 0 to 4%; and/or Pr₂O₃: 0 to 8%; and/or CeO₂: 0 to 4%.
(168)The method of manufacturing a microcrystalline glass according to(167), the colorant comprise the following components by weight percentage: NiO: 0.1 to 4%; and/or Ni₂O₃: 0.1 to 4%; and/or CoO: 0.05 to 2%; and/or Co₂O₃: 0.05 to 2%; and/or Fe₂O₃: 0.2 to 7%; and/or MnO₂: 0.1 to 4%; and/or Er₂O₃: 0.4 to 8%; and/or Nd₂O₃ : 0.4 to 8%; and/or Cu₂O: 0.5 to 4%; and/or Pr₂O₃: 0.4 to 8%; and/or CeO₂: 0.5 to 4%.
(169)The method of manufacturing a microcrystalline glass according to(167), the colorant comprise the following components by weight percentage: NiO: 0.1~3%; and/or Ni₂O₃: 0.1~3%; and/or CoO: 0.05~1.8%; and/or Co₂O₃: 0.05~1.8%; and/or Fe₂O₃: 0.2~5%; and/or MnO₂: 0.1~3%; and/or Er₂O₃: 0.4~6%; and/or Nd₂O₃: 0.4~6%; and/or Cu₂O: 0.5~3%; and/or Pr₂O₃: 0.4~6%; and/or CeO₂: 0.5~3%.
(170)The method of manufacturing a microcrystalline glass according to(167), the colorant comprise the following components by weight percentage: NiO: 0.1~3%; and/or Ni₂O₃: 0.1~3%.
(171)The method of manufacturing a microcrystalline glass according to(167), the colorant comprise the following components by weight percentage: CoO: 0.05~1.8%; and/or Co₂O₃: 0.05~1.8%.
(172)The method of manufacturing a microcrystalline glass according to(167), the colorant comprise the following components by weight percentage:Cu₂O: 0.5~3%; and/or CeO₂: 0.5~3%.
(173)The method of manufacturing a microcrystalline glass according to(167), the colorant comprise the following components by weight percentage:Fe₂O₃: 0.2~5%, CoO: 0.05~ 0.3%; or Fe₂O₃: 0.2~5%, Co₂O₃: 0.05~0.3%; or Fe₂O₃: 0.2~5%, CoO: 0.05~0.3%, NiO: 0.1~1%; or Fe₂O₃: 0.2~5%, Co₂O₃: 0.05~0.3%, NiO: 0.1~1%.
(174)The method of manufacturing a microcrystalline glass according to(167), the colorant comprise the following components by weight percentage:Pr₂O₃: 0.4~6%; or Fe₂O₃: 0.2~ 5%; or MnO₂: 0.1~3%; or Er₂O₃: 0.4~6%; or Nd₂O₃: 0.4~6%.
(175)The method of manufacturing a microcrystalline glass according to(167), the colorant comprise the following components by weight percentage:Er₂O₃: 0.4~6%, Nd₂O₃: 0.4~ 4%, MnO₂: 0.1~2%.
(176)The method of manufacturing microcrystalline glass according to any one of (144) to (149), the crystallization process comprising the steps of: increasing the temperature to a defined crystallization treatment temperature, maintaining the temperature for a certain period of time after reaching the crystallization treatment temperature and then cooling down, the crystallization treatment temperature being 580~750°C, preferably 600~700°C, and the holding time at the crystallization treatment temperature being 0~8 hours, preferably 1~6 hours.
(177)The method for manufacturing microcrystalline glass according to any of (144) to (149), the crystallization process comprising the steps of: a nucleation process at a 1st temperature, followed by a crystal growth process at a 2nd temperature higher than the nucleation process temperature.
(178)The method of manufacturing microcrystalline glass according to (177), the crystallization process comprising the steps of: a 1st temperature of 470~580°C and a 2nd temperature of 600~750°C; a holding time at the 1st temperature of 0~24 hours, preferably 2~15 hours; and a holding time at the 2nd temperature of 0~10 hours, preferably 0.5~6 hours.
(179)Method of manufacturing microcrystalline glass forming body, the method comprising grinding or polishing microcrystalline glass to make microcrystalline glass forming body, or making microcrystalline glass forming body from a matrix glass or microcrystalline glass by means of a heat bending process or a press molding process at a certain temperature.
(180)Method of manufacturing a microcrystalline glass forming body, the method comprising the steps of: subjecting the matrix glass to a crystallization heat treatment process comprising heating up, holding nucleation, heating up, holding crystallization and cooling down to room temperature to form a pre-crystallized glass; and thermally processing the pre-crystallized glass to form the microcrystalline glass forming body.
(181)Method of manufacturing a microcrystalline glass forming body, the method comprising the steps of:
   1)Preheating: the matrix glass or pre-crystallized glass or microcrystalline glass placed in the mold, the mold in the heat bender through each heating station in turn, and stay in each station for a certain period of time insulation, preheating zone temperature of 400~800 °C, pressure of 0.01~0.05MPa, time of 40~200s.
   2)Pressurized forming: the mold is transferred to the forming site after preheating, the hot bender applies a certain pressure to the mold, the pressure range is 0.1~0.8Mpa, the temperature range at the forming site is 650~850°C, and the forming time range is 40~ 200s.
   3)Holding pressure cooling: transfer the mold to the cooling station to cool down station by station, cooling temperature range 750~500°C, pressure 0.01~0.05Mpa, time 40~200s.

The beneficial effect of the present invention is that through a reasonable component design, the microcrystalline glass or microcrystalline glass products obtained by the present invention have excellent mechanical properties.

### Detailed Description

The microcrystalline glasses and microcrystalline glass product of the present invention are materials with a crystalline phase (sometimes referred to as a crystal) and a glass phase, which are distinct from amorphous solids. The crystalline phase of microcrystalline glasses and microcrystalline glass products can be identified by the angle of the peak appearing in the X-ray diffraction pattern of the X-ray diffraction analysis and/or measured by TEMEDX.

The inventors of the present invention have, after repeated trials and studies, obtained the microcrystalline glass or microcrystalline glass products of the present invention at a lower cost by specifying the content and the proportion of the content of the specific components that make up the microcrystalline glass and microcrystalline glass products to a specific value and by causing them to precipitate a specific crystal phase.

In the following, the ranges of the components (compositions) of the matrix glass, microcrystalline glass and microcrystalline glass product of the present invention are described. In this specification, the content of each component is expressed as a percentage by weight (wt%) of the total substance of the matrix glass, or microcrystalline glass, or microcrystalline glass product, relative to the composition converted to oxide, unless otherwise stated. In this context, the term "converted to oxide composition" refers to the total amount of matter of oxides, complex salts and hydroxides used as raw materials for the composition of the matrix glass, microcrystalline glass or microcrystalline glass products of the present invention, if they decompose and are converted to oxides when melted, as 100% of the total amount of matter of the oxides. In addition, when referred to in this specification as glass only, it is referred to as matrix glass before crystallization (i.e. crystallization process treatment), after crystallization (i.e. crystallization process treatment) of the matrix glass it is referred to as microcrystalline glass, and microcrystalline glass products are products obtained after chemical strengthening of microcrystalline glass.

Unless otherwise indicated in a particular case, the range of values set out herein includes upper and lower limits, and "above" and "below" includes endpoint values, as well as all integers and fractions within that range, and is not limited to the specific values listed when the range is defined. As used herein, the term "approximately" refers to formulations, parameters and other quantities and characteristics that are not, and need not be, exact, but may be approximate and/or greater or lesser if required, reflecting tolerances, conversion factors, measurement errors, etc. The term "and/or" is used herein in an inclusive sense, e.g. "A; and/or B" means that only A, or only B, or both A and B are present.

The crystalline phase in the microcrystalline glass or microcrystalline glass product of the present invention contains a lithium silicate crystalline phase; and/or a lithium phosphate crystalline phase; and/or a petalite crystalline phase; and/or a quartz solid solution crystalline phase.

In some embodiments of the present invention, the crystalline phase in the microcrystalline glass or microcrystalline glass product contains a lithium silicate crystalline phase (one or both of lithium monosilicate and lithium disilicate). In some embodiments, the lithium silicate crystalline phase has a higher weight percentage than the other crystalline phases. In some embodiments, the lithium silicate crystalline phase is 10~70% by weight of the microcrystalline glass or microcrystalline glass product, preferably lithium silicate crystalline phase is 10~65% by weight of the microcrystalline glass or microcrystalline glass product, more preferably lithium silicate crystalline phase is 15~60% by weight of the microcrystalline glass or microcrystalline glass product, further preferably lithium silicate crystalline phase is 20~55% by weight of the microcrystalline glass or microcrystalline glass product. In some embodiments, the lithium silicate crystalline phase as a percentage by weight of the microcrystalline glass or microcrystalline glass product is10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%.

In some embodiments of the present invention, the crystalline phase in the microcrystalline glass or microcrystalline glass product contains lithium monosilicate crystalline phase. In some embodiments, the lithium monosilicate crystalline phase has a higher weight percentage than the other crystalline phases. In some embodiments, the lithium monosilicate crystalline phase is 30~65% by weight of the microcrystalline glass or microcrystalline glass product, preferably lithium monosilicate crystalline phase is 35~60% by weight of the microcrystalline glass or microcrystalline glass product, more preferably lithium monosilicate crystalline phase is 40~55% by weight of the microcrystalline glass or microcrystalline glass product. In some embodiments, the lithium monosilicate crystalline phase as a percentage by weight of the microcrystalline glass or microcrystalline glass product is30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%.

In some embodiments of the present invention, the crystalline phase in the microcrystalline glass or microcrystalline glass product contains lithium disilicate crystalline phase. In some embodiments, the lithium disilicate crystalline phase has a higher weight percentage than the other crystalline phases. In some embodiments, the lithium disilicate crystalline phase is 10~60% by weight of the microcrystalline glass or microcrystalline glass product, preferably lithium disilicate crystalline phase is 15~50% by weight of the microcrystalline glass or microcrystalline glass product, more preferably lithium disilicate crystalline phase is 20~45% by weight of the microcrystalline glass or microcrystalline glass product. In some embodiments, the lithium disilicate crystalline phase as a percentage by weight of the microcrystalline glass or microcrystalline glass product is10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%.

In some embodiments of the present invention, the crystalline phase in the microcrystalline glass or microcrystalline glass product contains lithium phosphate crystalline phase, the lithium phosphate crystalline phase is below 10% by weight of the microcrystalline glass or microcrystalline glass product, and the preferably lithium phosphate crystalline phase is below 5% by weight of the microcrystalline glass or microcrystalline glass product. In some embodiments, the lithium phosphate crystalline phase as a percentage by weight of the microcrystalline glass or microcrystalline glass product is 0%, above 0%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%.

In some embodiments of the present invention, the crystalline phase in the microcrystalline glass or microcrystalline glass product contains quartz solid solution crystalline phase, the quartz solid solution crystalline phase is below 10% by weight of the microcrystalline glass or microcrystalline glass product, and the preferably quartz solid solution crystalline phase is below 5% by weight of the microcrystalline glass or microcrystalline glass product. In some embodiments, the quartz solid solution crystalline phase as a percentage by weight of the microcrystalline glass or microcrystalline glass product is 0%, above 0%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%.

In some embodiments of the present invention, the crystalline phase in the microcrystalline glass or microcrystalline glass product contains petalite crystalline phase, the petalite crystalline phase is below 18% by weight of the microcrystalline glass or microcrystalline glass product, the preferably petalite crystalline phase is below 15% by weight of the microcrystalline glass or microcrystalline glass product, the more preferably petalite crystalline phase is below 10% by weight of the microcrystalline glass or microcrystalline glass product, and the further preferably petalite crystalline phase is below 5% by weight of the microcrystalline glass or microcrystalline glass product. In some embodiments, the petalite crystalline phase as a percentage by weight of the microcrystalline glass or microcrystalline glass product is 0%, above 0%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%.

SiO₂ is a necessary component to form the network structure of the glass of the present invention and is one of the main components for the formation of crystals after heat treatment. If the content of SiO₂ is below 55%, the transparency of the microcrystalline glass and microcrystalline glass products formed after the glass crystallization treatment is not high and the formation of crystals in the microcrystalline glass will become less, which affects the body drop height of the microcrystalline glass and the drop resistance of the microcrystalline glass products. Therefore, the lower limit of the SiO₂ content is 55%, preferably is 58%, more preferably is 60%. In some embodiments, the lower limit of the preferably SiO₂ content is 65%, more preferably is 68%, further preferably is 70%. On the other hand, if the SiO₂ content is above 80%, glass forming is difficult, glass is not easily formed, the number of crystal forming species in the microcrystalline glass changes, raising the chilling temperature (Ts) of the microcrystalline glass, affecting the heat bending of glass and microcrystalline glass and having a greater impact on the surface stress and ion exchange layer depth of the microcrystalline glass product. Therefore, the upper limit of SiO₂ content is 80%, preferably is 78% and more preferably is 76%.In some embodiments, it may comprise about 55%, 55.5%, 56%, 56.5%, 57%, 57.5%, 58%, 58.5%, 59%, 59.5%, 60%, 60.5%, 61%, 61.5%, 62%, 62.5%, 63%, 63.5%, 64%, 64.5%, 65%, 65.5%, 66%, 66.5%, 67%, 67.5%, 68%, 68.5%, 69%, 69.5%, 70%, 70.5%, 71%, 71.5%, 72%, 72.5%, 73%, 73.5%, 74%, 74.5%, 75%, 75.5%, 76%, 76.5%, 77%, 77.5%, 78%, 78.5%, 79%, 79.5%, 80%SiO₂.

Al₂O₃ can form a glass network structure, which is conducive to the forming of glass, and is conducive to the chemical strengthening of microcrystalline glass, improving the resistance to shattering and the bending strength of microcrystalline glass products; if the content of Al₂O₃ is too much, it is easy to produce other crystals in the microcrystalline glass and microcrystalline glass products, which in turn leads to the haze of microcrystalline glass and microcrystalline glass products increase. Therefore, the content of Al₂O₃ in the present invention is below 10%, preferably 0.1 to 8%, more preferably 0.5 to 7%. In some embodiments, the content of preferably Al₂O₃ is below 5%, more preferably 0.1 to 4.5%, further preferably 0.5 to 3%. In some embodiments, about 0%, above0%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, 5.4%, 5.5%, 5.6%, 5.7%, 5.8%, 5.9%, 6%, 6.1%, 6.2%, 6.3%, 6.4%, 6.5%, 6.6%, 6.7%, 6.8%, 6.9%, 7%, 7.1%, 7.2%, 7.3%, 7.4%, 7.5%, 7.6%, 7.7%, 7.8%, 7.9%, 8%, 8.1%, 8.2%, 8.3%, 8.4%, 8.5%, 8.6%, 8.7%, 8.8%, 8.9%, 9%, 9.1%, 9.2%, 9.3%, 9.4%, 9.5%, 9.6%, 9.7%, 9.8%, 10% of Al₂O₃ may be included.

Li₂O can promote the melting of glass, reduce the melting temperature of glass, can reduce the partitioning of P₂O₅, promote the dissolution of P₂O₅, is the main component of microcrystalline glass and microcrystalline glass products to form crystals, and is also a component of chemical strengthening mainly with sodium and potassium ions for replacement, can increase the surface stress of microcrystalline glass products, enhance the height of the falling ball test of microcrystalline glass products and can increase the dielectric constants of microcrystalline glass and microcrystalline glass product. However, if the Li₂O content is below 8%, the formation of the lithium silicate crystalline phase is poor and affects the depth of the ion exchange layer in the microcrystalline glass product, affecting the drop ball test height and fragmentation of the microcrystalline glass and microcrystalline glass product. Accordingly, the lower limit of Li₂O content is 8%, preferably 9%, more preferably 10%. In some embodiments, the lower limit of the further preferably Li₂O is 12.5%. On the other hand, if too much Li₂O is present, the glass tends to phase during the crystallization process, affecting the light transmission of the microcrystalline glass and microcrystalline glass products. Therefore, the upper limit of the Li₂O content is 25%, preferably 22%, more preferably 20%. In some embodiments, it is possible to include about 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5%, 20%, 20.5%, 21%, 21.5%, 22%, 22.5%, 23%, 23.5%, 24%, 24.5%, 25%Li₂O.

It has been found through extensive experimental studies by the inventors that in some embodiments of the present invention, the crystallinity of microcrystalline glass and microcrystalline glass products can be improved and the grain size of microcrystalline glass and microcrystalline glass products can be reduced by controlling the ratio Al₂O_{3/}Li₂O between the content of Al₂O₃ and the content of Li₂O below 0.7. Thus, the preferably Al₂O_{3/}Li₂O is below 0.7, and the more preferably Al₂O_{3/}Li₂O is below 0.6. Further, in some embodiments, by controlling Al₂O_{3/}Li₂O below 0.5, the light transmission of the microcrystalline glass and microcrystalline glass products can also be optimized and the haze of the microcrystalline glass and microcrystalline glass products can be reduced. Thus, the further preferably Al₂O_{3/}Li₂O is below 0.5 and much further preferably Al₂O_{3/}Li₂O is below 0.45. In some embodiments, preferably Al₂O_{3/}Li₂O is below 0.4, more preferably Al₂O_{3/}Li₂O below 0.3, further preferably Al₂O_{3/}Li₂O below 0.2, much further preferably Al₂O_{3/}Li₂O below 0.1. In some embodiments, the value of Al₂O_{3/}Li₂O may be 0, above 0, 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48 0.47, 0.48, 0.49, 0.5, 0.55, 0.6, 0.65, 0.7.

Na₂O can lower the melting temperature of the glass and can effectively reduce the exchange rate of Li and Na during the chemical strengthening of microcrystalline glass, making the chemical strengthening process easier to control. The lower limit of preferably Na₂O content is 0.5%. On the other hand, if too much Na₂O is contained, it affects the formation of crystals in the microcrystalline glass and reduces the crystallinity of the microcrystalline glass and microcrystalline glass products, leading to a reduction in the strength of the microcrystalline glass and microcrystalline glass products. Therefore, the content of Na₂O is 0 to 6%, preferably 0 to 4%, more preferably 0.5 to 3%. In some embodiments, about 0%, above 0%, 0.05%, 0.1%, 0.5%, 1%, 1.5%, 2%, 2.5%, 3%, 3.5%, 4%, 4.5%, 5%, 5.5%, 6% of Na₂O may be included.

K₂O reduces the viscosity of the glass and promotes crystal formation during the crystallization process treatment, but if too much K₂O is present, it tends to coarsen the crystals of the microcrystalline glass and microcrystalline glass products and reduces the light transmission rate and the height of the drop ball test of the microcrystalline glass and microcrystalline glass products. Therefore, the upper limit of K₂O is 5%, preferably is 4% and more preferably is 2%. In some embodiments, K₂O of about 0%, above 0%, 0.1%, 0.5%, 1%, 1.5%, 2%, 2.5%, 3%, 3.5%, 4%, 4.5%, 5% may be included.

P₂O₅ in the present invention can promote the formation of crystals, improve the crystallinity of microcrystalline glass and microcrystalline glass products, increase the hardness and strength of microcrystalline glass and microcrystalline glass products, and reduce the haze of microcrystalline glass and microcrystalline glass products. The lower limit of P₂O₅ content in the present invention is 1%, preferably 1.5%, more preferably 2%. On the other hand, if too much P₂O₅ is contained, uneven crystal distribution forms when the glass is formed, making it difficult to control the haze and strength of the microcrystalline glass after heat treatment, and reducing the chemical stability of the glass. Therefore, the upper limit of P₂O₅ content is 8%, preferably 7% and more preferably 6%. In some embodiments, P₂O₅ of about 1%, 1.5%, 2%, 2.5%, 3%, 3.5%, 4%, 4.5%, 5%, 5.5%, 6%, 6.5%, 7%, 7.5%, 8% may be included.

In the present invention, ZrO₂ and P₂O₅ cooperate with each other to refine the grain, reduce the haze of microcrystalline glass and microcrystalline glass products, ZrO₂ can increase the network structure of the glass, which is conducive to the chemical strengthening of microcrystalline glass, increase the depth of the ion exchange layer of microcrystalline glass products and improve the height of the drop ball test of microcrystalline glass products. Therefore, the lower limit of ZrO₂ content is 5%, preferably 6% and more preferably 7%. On the other hand, if too much ZrO₂ is present, glass melting is difficult. Therefore, the upper limit of the ZrO₂ content is 15%, preferably 12%. In some embodiments, about 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15% ZrO₂ may be included.

In some embodiments, by controlling the ratio SiO₂/ZrO₂ between the content of SiO₂ and ZrO₂ in the range of 4.0 to 15.8, the haze and |B| values of the microcrystalline glass after heat treatment (e.g. heat bending) can be further optimized for superior haze and |B| values of the microcrystalline glass and microcrystalline glass products after heat treatment (e.g. heat bending). Therefore, preferably SiO₂/ZrO₂ range is 4.0 to 15.8, and more preferably SiO₂/ZrO₂ is 4.5 to 12.0. Further, in some embodiments, by making the SiO₂/ZrO₂ in the range of 5.0 to 9.5, it is also possible to increase the ion exchange layer depth of the microcrystalline glass products and improve the resistance of the microcrystalline glass products, and therefore further preferably SiO₂ /ZrO₂ is 5.0 to 9.5, and much further preferably SiO₂/ZrO₂ is 6.0 to 9.0. In some embodiments, the value of SiO₂/ZrO₂ may be 4.0, 4.5, 5.0, 5.5, 6.0, 6.5, 7.0, 7.5, 8.0, 8.5, 9.0, 9.5, 10.0, 10.5, 11.0, 11.5 12.0, 12.5, 13.0, 13.5, 14.0, 14.5, 15.0, 15.5, 15.8.

In some embodiments, the combined content of P₂O₅ and ZrO₂, P₂O₅+ZrO₂, is in the range of 6 to 21%, which reduces the haze of microcrystalline glass (including microcrystalline glass after heat bending) and microcrystalline glass products. Thus, preferably P₂O₅+ZrO₂ is 6 to 21%, and more preferably P₂O₅+ZrO₂ is 7 to 18%. Further, in some embodiments, the fracture toughness of the microcrystalline glass product can also be increased by having P₂O₅+ZrO₂ in the range of 8 to 16%. Thus, the further preferably P₂O₅+ZrO₂ is 8 to 16%, and much further preferably P₂O₅+ZrO₂ is 10 to 16%. In some embodiments, the value of P₂O₅+ZrO₂ may be 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17 17.5%, 18%, 18.5%, 18.5%, 19%, 19.5%, 20%, 20.5%, 21%.

In some embodiments, by controlling the ratio Al₂O₃/(P₂O₅+ZrO₂) between Al₂O₃ and the combined content of P₂O₅ and ZrO₂, Al₂O₃/(P₂O₅+ZrO₂) to be below 1.2, the crystalline phase content of lithium disilicate in the microcrystalline glass can be increased and the body drop height of the microcrystalline glass and the drop ball test height of the microcrystalline glass product can be increased. Therefore, preferably Al₂O₃/(P₂O₅+ZrO₂) is below 1.2, more preferably Al₂O₃/(P₂O₅+ZrO₂) is below 1.0, and further preferably Al₂O₃/(P₂O₅+ZrO₂) is from 0.05 to 0.7. Further, in some embodiments, by making Al₂O₃/(P₂O₅+ZrO₂) in the range of 0.1 to 0.6 range, the haze of the microcrystalline glass and microcrystalline glass products can also be reduced, so much further preferably Al₂O₃/(P₂O₅+ZrO₂) is 0.1 to 0.6. In some embodiments, the value of Al₂O₃/(P₂O₅+ZrO₂) can be 0, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, 1.15, 1.2.

In some embodiments, by controlling the content of SiO₂ with the combined content of P₂O₅ and ZrO₂ the ratio of SiO₂/(P₂O₅+ZrO₂) in the range of 2.5 to 12.0 can promote the formation and increase the content of the lithium silicate crystalline phase in the microcrystalline glass and inhibit the formation of other crystalline phases, which can effectively ensure the heat bendability of the microcrystalline glass by heat treatment and improve the heat bending performance of microcrystalline glass. Therefore, the range of preferably SiO_{2/}(P₂O₅+ZrO₂) is from 2.5 to 12.0, and more preferably SiO₂/(P₂O₅+ZrO₂) is from 3.0 to 10.0. Further, in some embodiments, by making the SiO₂/(P₂O₅+ZrO₂) in the range of 3.5 to 7.5, the crystallinity of the microcrystalline glass and microcrystalline glass products can also be improved, increasing the fragmentation of the microcrystalline glass products after fracture. Therefore, the range of further preferably SiO₂/(P₂O₅+ZrO₂) is from 3.5 to 7.5 and much further preferably SiO₂/(P₂O₅+ZrO₂) is from 4.0 to 6.5. In some embodiments, the value of SiO_{2/}(P₂O₅+ZrO₂) may be 2.5, 3.0, 3.5, 4.0, 4.5, 5.0, 5.5, 6.0, 6.5 7.0, 7.5, 8.0, 8.5, 9.0, 9.5, 10.0, 10.5, 11.0, 11.5, 12.0.

In some embodiments, making the ratio (ZrO₂+Li₂O)/Al₂O₃ between the combined content of Li₂O and ZrO₂ and the content of Al₂O₃ above 2.0 increases the dielectric constant of the microcrystalline glass and microcrystalline glass products and facilitates subsequent applications. Thus, the range of (ZrO₂+Li₂O)/Al₂O₃ is above 2.0, more preferably (ZrO₂+Li₂O)/Al₂O₃ is above 2.5, and further preferably (ZrO₂+Li₂O)/Al₂O₃ is from 2.5 to 30.0. Further, in some embodiments, by making the (ZrO₂+Li₂O)/Al₂O₃ in the range of 3.0 to 20.0 range, the dielectric loss of the microcrystalline glass and microcrystalline glass products can also be reduced. Thus, much further preferably(ZrO₂+Li₂O)/Al₂O₃ is in the range of 3.0 to 20.0. In some embodiments, the value of (ZrO₂+Li₂O)/Al₂O₃ may be2.0, 2.5, 3.0, 3.5, 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0, 20.5, 21.0, 21.5, 22.0, 22.5, 23.0, 23.5, 24.0, 24.5, 25.0, 25.5, 26.0, 26.5, 27.0, 27.5, 28.0, 28.5, 29.0, 29.5, 30.0, 31.0, 32.0, 33.0, 34.0, 35.0, 36.0, 37.0, 38.0, 39.0, 40.0, 41.0, 42.0, 43.0, 44.0, 45.0, 46.0, 47.0, 48.0, 49.0, 50.0, 51.0, 52.0, 53.0, 54.0, 55.0, 56.0, 57.0, 58.0, 59.0, 60.0.

In some embodiments of the present invention, making the ratio (SiO₂+Al₂O₃)/ZrO₂ between the combined content of SiO₂, Al₂O₃ and the content of ZrO₂ in the range of 4.0 to 16.0 allows the microcrystalline glass and microcrystalline glass products to have a suitable surface resistance for subsequent use. Therefore, it is preferred that (SiO₂+Al₂O₃)/ZrO₂ is from 4.0 to 16.0, more preferably (SiO₂+Al₂O₃)/ZrO₂ is from 4.5 to 12.0. Further, in some embodiments, by controlling (SiO₂+Al₂O₃)/ZrO₂ in the range of 5.0 to 10.0, the change of crystalline phase content of glass ceramics after further heat treatment (such as hot bending) can be reduced, which is conducive to controlling the size of microcrystalline glass after heat treatment (such as hot bending) and facilitating subsequent processing. Therefore, preferably (SiO₂+Al₂O₃)/ZrO₂ is from 5.0 to 10.0, and more preferably (SiO₂+Al₂O₃)/ZrO₂ is from 6.0 to 9.5. In some embodiments, the value of (SiO₂+Al₂O₃)/ZrO₂ may be 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0.

Extensive experimental studies by the inventors have revealed a complex synergistic effect of Al₂O₃, Li₂O, ZrO₂ and P₂O₅. In some embodiments of the present invention, the drop ball test height of microcrystalline glass and microcrystalline glass products can be improved by controlling Al₂O_{3/}(Li₂O+ZrO₂+P₂O₅) to be below 0.4, thus preferably Al₂O_{3/}(Li₂O+ZrO₂+P₂O₅) to be below 0.4, more preferably Al₂O_{3/}(Li₂O+ZrO₂+P₂O₅) to be below 0.3, further preferably Al₂O_{3/}(Li₂O+ZrO₂+P₂O₅) is below 0.25. In some embodiments, by controlling Al₂O_{3/}(Li₂O+ZrO₂+P₂O₅) in the range of 0.01 to 0.2, the haze and light transmission of the microcrystalline glass and microcrystalline glass products can also be optimized. Therefore, much further preferably Al₂O_{3/}(Li₂O+ZrO₂+P₂O₅) is in the range of 0.01 to 0.2, and much more further preferably Al₂O₃/(Li₂O+ZrO₂+P₂O₅) is in the range of 0.01 to 0.1. In some embodiments, the value of Al₂O₃/(Li₂O+ZrO₂+P₂O₅) may be 0, above 0, 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4.

In some embodiments of the present invention, the hardness and drop ball test height of the microcrystalline glass and microcrystalline glass products can be improved by making the ratio (Li₂O+ZrO₂)/SiO₂ between the combined content of Li₂O, ZrO₂ and the content of SiO₂ in the range of 0.19 to 0.55. Thus, preferably (Li₂O+ZrO₂)/SiO₂ is in the range of 0.19 to 0.55, more preferably (Li₂O+ZrO₂)/SiO₂ is in the range of 0.2 to 0.5. Further, in some embodiments, the |B| value of the microcrystalline glass and microcrystalline glass products can also be reduced by having (Li₂O+ZrO₂)/SiO₂ in the range of 0.25 to 0.45. Thus, more preferably (Li₂O+ZrO₂)/SiO₂ is in the range of 0.25 to 0.45, and further preferably (Li₂O+ZrO₂)/SiO₂ is in the range of 0.25 to 0.4. In some embodiments, the value of (Li₂O+ZrO₂)/SiO₂ may be 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.5, 0.51, 0.52, 0.53, 0.54, 0.55.

In some embodiments of the present invention, the bending strength of the microcrystalline glass and microcrystalline glass products can be improved by controlling the ratio (Li₂O+Al₂O₃)/ZrO₂ between the combined content of Li₂O, Al₂O₃ and the content of ZrO₂ in the range of 0.8 to 5.0. Therefore, preferably (Li₂O+Al₂O₃)/ZrO₂ is in the range of 0.8 to 5.0, and more preferably (Li₂O+Al₂O₃)/ ZrO₂ is in the range of 1.0 to 4.0. Further, by controlling (Li₂O+Al₂O₃)/ZrO₂ to be in the range of 1.2 to 3.0, the chemical strengthening properties of the microcrystalline glass can be further optimized and the depth of the ion exchange layer and surface stress of the microcrystalline glass products can be improved. Thus, further preferably (Li₂O+Al₂O₃)/ZrO₂ is from 1.2 to 3.0, and much further preferably (Li₂O+Al₂O₃)/ZrO₂ is 1.5 to 2.5. In some embodiments, the value of (Li₂O+Al₂O₃)/ZrO₂ may be 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0.

In some embodiments of the present invention, the |B| value and grain size of the microcrystalline glass and microcrystalline glass products can be reduced by controlling the ratio Li₂O/(ZrO₂+P₂O₅) between the content of Li₂O to the combined content of ZrO₂ and P₂O₅ in the range of 0.5 to 3.0. Therefore, preferably Li₂O/(ZrO₂+P₂O₅) is in the range of 0.5 to 3.0, and more preferably Li₂O/(ZrO₂+P₂O₅) is in the range of 0.6 to 2.5. Further, by making Li₂O/(ZrO₂+P₂O₅) in the range of 0.7 to 2.0, the chemical strengthening properties of the microcrystalline glass can be optimized, the ion-exchange layer depth and the fracture toughness of the microcrystalline glass product can be improved. Thus, further preferably Li₂O/(ZrO₂+P₂O₅) is in the range of 0.7 to 2.0, and much further preferably Li₂O/(ZrO₂+P₂O₅) is in the range of 0.8 to 1.5. In some embodiments, the value of Li₂O/(ZrO₂+P₂O₅) may be 0.5, 0.55, 0.6, 0.65, 0.7, 0.75, 0.8, 0.85, 0.9, 0.95, 1.0, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2.0, 2.05, 2.1, 2.15, 2.2, 2.25, 2.3, 2.35, 2.4, 2.45, 2.5, 2.55, 2.6, 2.65, 2.7, 2.75, 2.8, 2.85, 2.9, 2.95, 3.0.

ZnO reduces the difficulty of melting glass and, in excessive amounts, can promote low-temperature phase separation of glass and reduce the crystallinity of microcrystalline glass and microcrystalline glass products. In the present invention, the upper limit of ZnO content is 3%, preferably 2%, more preferably 1%, and further preferably no ZnO. In some embodiments, it may comprise about 0%, above 0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3% ZnO.

MgO reduces the melting difficulty of the glass and facilitates an increase in the drop ball test height of the microcrystalline glass and microcrystalline glass products, but MgO tends to promote low temperature crystallization of the glass and reduces the crystallinity and light transmission of the microcrystalline glass and microcrystalline glass products. Thus, the upper limit of MgO content is 3%, preferably 2%, more preferably 1%, and further preferably no MgO. In some embodiments, it may comprise about 0%, above0%, 0.01%, 0.05%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%MgO.

In some embodiments of the present invention, the hardness, bending strength and fracture toughness of microcrystalline glass and microcrystalline glass products can be improved by controlling the ratio (MgO+ZnO)/ZrO₂ between the combined content of MgO and ZnO to the content of ZrO₂ to be below 0.65. Thus, preferably (MgO+ZnO)/ZrO₂ is below 0.65, more preferably (MgO+ZnO)/ZrO₂ is below 0.4, further preferably (MgO+ZnO)/ZrO₂ is below 0.2, and much further preferably (MgO+ZnO)/ZrO₂ is below 0.1. In some embodiments, the value of (MgO+ZnO)/ZrO₂ may be 0, above 0, 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, 0.23, 0.25, 0.27, 0.3, 0.33, 0.35, 0.37, 0.4, 0.43, 0.45, 0.47, 0.5, 0.53, 0.55, 0.57, 0.6, 0.63, 0.65.

SrO is an optional component for improving the low temperature melting properties of glass and inhibiting precipitation during glass forming, but too much of it is detrimental to glass forming. Therefore, the SrO content in the present invention ranges from 0 to 5%, preferably from 0 to 2%, more preferably from 0 to 1%, and further preferably without SrO. In some embodiments, it may contain about 0%, above 0%, 0.01%, 0.05%, 0.1%, 0.5%, 1%, 1.5%, 2%, 2.5%, 3%, 3.5%, 4%, 4.5%, 5% of SrO.

BaO is an optional component that contributes to the glass-forming properties of the glass, and is detrimental to glass forming when present in excessive amounts. Therefore, the BaO content in the present invention ranges from 0 to 5%, preferably from 0 to 2%, more preferably from 0 to 1%, and further preferably without BaO. In some embodiments, it may contain about 0%, above 0%, 0.01%, 0.05%, 0.1%, 0.5%, 1%, 1.5%, 2%, 2.5%, 3%, 3.5%, 4%, 4.5%, 5% of BaO .

CaO can increase the hardness of the glass, and in excessive amounts, the glass tends to be milky when molded. Therefore the CaO content in the present invention ranges from 0 to 5%, preferably from 0 to 2%, more preferably from 0 to 1%, and further preferably without CaO. In some embodiments, it may contain about 0%, above 0%, 0.01%, 0.05%, 0.1%, 0.5%, 1%, 1.5%, 2%, 2.5%, 3%, 3.5%, 4%, 4.5%, 5% CaO.

TiO₂ is an optional component that helps to lower the melting temperature and improve the chemical stability of the glass. The inclusion of less than 5% TiO₂ in the present invention allows the crystallization process of the glass to be easily controlled, preferably with a TiO₂ content of 2% or less, more preferably below 1%. In some embodiments, further preferably no TiO₂. In some embodiments, it may contain about 0%, above 0%, 0.05%, 0.1%, 0.5%, 1%, 1.5%, 2%, 2.5%, 3%, 3.5%, 4%, 4.5%, 5% TiO₂.

B₂O₃ improves the network structure of the glass and adjusts the chemical strengthening properties of the microcrystalline glass. If its content exceeds 5%, it is not conducive to glass forming and tends to precipitate during forming, therefore the upper limit of B₂O₃ content is 5%, preferably 3%, more preferably 2%, further preferably no B₂O₃. In some embodiments, it may comprise about 0%, above 0%, 0.05%, 0.1%, 0.5%, 1%, 1.5%, 2%, 2.5%, 3%, 3.5%, 4%, 4.5%, 5% of B₂O₃.

Y₂O₃ can promote the melting of ZrO₂ and reduce the melting difficulty of glass. Excessive content will lead to difficulties in forming crystals when crystallizing glass, a decrease in the crystallinity of microcrystalline glass and microcrystalline glass products, and a decrease in the height of the falling ball test of microcrystalline glass and microcrystalline glass products. Thus, the upper limit of Y₂O₃ content is 6%, preferably 4%, and more preferably 2%. In some embodiments, it may contain about 0%, above 0%, 0.05%, 0.1%, 0.5%, 1%, 1.5%, 2%, 2.5%, 3%, 3.5%, 4%, 4.5%, 5%, 5.5%, 6% Y₂O₃.

In some embodiments, the glass, microcrystalline glass or microcrystalline glass product may also contain 0 to 2% of a fining agent to improve the defoaming ability of the glass, microcrystalline glass or microcrystalline glass product, the fining agent including but not limited to one or more of Sb₂O₃, SnO₂, SnO, CeO₂, F (fluorine), Cl (chlorine) and Br (bromine), preferably Sb₂O₃ as the fining agent. The above fining agents, when present alone or in combination, are preferably present in an upper limit of 1%, more preferably 0.5%. In some embodiments, the content of one or more of the above fining agents is about 0%, above 0%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%.

Other components not mentioned above, such as La₂O₃, Gd₂O₃, Yb₂O₃, Nb₂O₅, WO₃, Bi₂O₃, Ta₂O₅, TeO₂, GeO₂, etc., may be added as appropriate without affecting the performance of the glass, microcrystalline glass or microcrystalline glass product of the present invention, but preferably, in order to maintain the excellent performance of the glass, microcrystalline glass or microcrystalline glass product of the present invention application, the respective or combined content of La₂O₃, Gd₂O₃, Yb₂O₃, Nb₂O₅, WO₃, Bi₂O₃, Ta₂O₅, TeO₂, and GeO₂ is below 5%, more preferably below 2%, further preferably below 1%, and much further preferably not contained.

PbO and As₂O₃ are toxic substances and even small amounts of them are not environmentally friendly, so the present invention preferably does not contain PbO and As₂O₃ in some embodiments.

In some embodiments of the present invention, a matrix glass, microcrystalline glass, or microcrystalline glass product with color can be prepared by containing a colorant that can give the matrix glass, microcrystalline glass, or microcrystalline glass product a different color, the colorant containing: NiO: 0~4%; and/or Ni₂O₃: 0~4%; and/or CoO: 0~2%; and/or Co₂O₃: 0~ 2%; and/or Fe₂O₃: 0~7%; and/or MnO₂: 0~4%; and/or Er₂O₃: 0~8%; and/or Nd₂O₃: 0~8%; and/or Cu₂O: 0~4%; and/or Pr₂O₅: 0~8%; and/or CeO₂: 0~4%. The weight percentage content of the colorants and their effects are detailed as follows:
The brown or green matrix glass, microcrystalline glass or microcrystalline glass products prepared by the present invention use NiO, Ni₂O₃ or Pr₂O₅ as colorants. NiO and Ni₂O₃ are colorants for the preparation of brown or green matrix glass, microcrystalline glass or microcrystalline glass products, and the two components can be used alone or mixed. Their respective contents are generally below 4%, preferably below 3%, and if the content exceeds 4%, the colorant is not well soluble in the matrix glass, microcrystalline glass or microcrystalline glass products. The lower limit of their respective contents is above 0.1%, if below 0.1%, the color of the matrix glass, microcrystalline glass or microcrystalline glass products is not obvious. In some embodiments, it may comprise about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0% of NiO or Ni₂O₃.If used in combination, the combined amount of NiO and Ni₂O₃ is generally below 4%, with the lower limit of the combined amount being 0.1% or more. In some embodiments, it may comprise about 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3% 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0% NiO and Ni₂O₃.The Use of Pr₂O₅ as a colorant for green matrix glass, microcrystalline glass or microcrystalline glass products, alone, generally contains below 8%, preferably below 6%, with a lower limit of 0.4% or more. If below 0.4%, the color of the matrix glass, microcrystalline glass, or microcrystalline glass product is not apparent. In some embodiments, it may comprise about 0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8%, 8.0% of Pr₂O₅.

The blue matrix glass, microcrystalline glass or microcrystalline glass products prepared by the present invention use CoO or Co₂O₃ as the colorant, the two colorants components can be used alone or mixed, their respective contents are both generally below 2%, preferably below 1.8%. If the content exceeds 2%, the colorant cannot be well dissolved in the matrix glass, microcrystalline glass or microcrystalline glass products. The lower limit of its content is above 0.05% respectively. If it is below 0.05%, the color of the matrix glass, microcrystalline glass or microcrystalline glass product is not apparent. In some embodiments, about 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0% of CoO or Co₂O₃ may be included. If used in combination, the combined amount of CoO and Co₂O₃ does not exceed 2%, with the lower limit of the combined amount being 0.05% or more. In some embodiments, about 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0% of CoO and Co₂O₃ may be included.

The yellow matrix glass, microcrystalline glass or microcrystalline glass products prepared by the present invention use Cu₂O or CeO₂ as the colorant, the two colorants components are used alone or mixed, their respective lower limit of content is above 0.5%. If below 0.5%, the color of the matrix glass, microcrystalline glass or microcrystalline glass products is not obvious, the use of Cu₂O alone is below 4%, preferably below 3%. If the content exceeds 4%, it tends to precipitate the matrix glass. In some embodiments, about 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0% of Cu₂O may be included. The CeO₂ content alone is generally below 4%, preferably below 3%. If the content exceeds 4%, the matrix glass, microcrystalline glass or microcrystalline glass product is not glossy. In some embodiments, about0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0% of CeO₂ may be included. Also, a small amount of CeO₂ is added to the glass to have a defoaming effect. CeO₂ can also be used as a fining agent in glass at an amount of 2% or less, preferably 1% or less, and more preferably 0.5% or less, when used as a fining agent. If the two colorants are mixed, the combined amount is generally below 4% and the lower limit of the combined amount is above 0.5%.In some embodiments, about0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0% CeO₂ and Cu₂O may be included.

The black or smoky gray matrix glass, microcrystalline glass or microcrystalline glass products prepared by the present invention use Fe₂O₃ alone as a colorant; or a mixture of two colorants, Fe₂O₃ and CoO; or a mixture of two colorants, Fe₂O₃ and Co₂O₃; or a mixture of three colorants, Fe₂O₃, CoO and NiO; or a mixture of Fe₂O₃ , Co₂O₃ and NiO. Colorants for the preparation of black and smoky gray matrix glass, microcrystalline glass or microcrystalline glass products are mainly colored with Fe₂O₃ at a content of 7% or less, preferably 5% or less, with a lower limit of 0.2% or more. In some embodiments, about0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.5%, 5.0%, 5.5%, 6.0%, 6.5%, 7.0% Fe₂O₃.CoO and Co₂O₃ have absorption in visible light and can deepen the coloration of matrix glass, microcrystalline glass or microcrystalline glass products, generally at a level of 0.6% or less of each when mixed with Fe₂O₃, with a lower limit of 0.2% or more. In some embodiments, it may comprise about 0.2%, 0.3%, 0.4%, 0.5%, 0.6% CoO and/or Co₂O₃. NiO absorbs in visible light and can deepen the coloration of the matrix glass, microcrystalline glass or microcrystalline glass product, generally in a mixture of less than 1% and with a lower limit of 0.2% or more in the aggregate. In some embodiments, about 0.2%, 0.3%, 0.4%, 0.5%, 0.6%, 0.7%, 0.8%, 0.9%, 1.0% of NiO may be included.

The purple matrix glass, microcrystalline glass or microcrystalline glass products prepared by the present invention use MnO₂ as a colorant, using a content generally below 4%, preferably below 3%, with a lower limit of 0.1% or more, if below 0.1%, the color of the matrix glass, microcrystalline glass or microcrystalline glass products is not obvious. In some embodiments, about0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0% MnO₂ may be included.

The pink matrix glass, microcrystalline glass or microcrystalline glass products prepared by the present invention use Er₂O₃ as a colorant, using a content of generally below 8%, preferably below 6%. Due to the low coloring efficiency of the rare earth element Er₂O₃, when the used content exceeds 8%, it also cannot make the matrix glass, microcrystalline glass or microcrystalline glass products further deepen the color, but rather increase the cost. The lower limit of its content is above 0.4%, if below 0.4%, the matrix glass, microcrystalline glass or microcrystalline glass products color is not obvious. In some embodiments, about0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8%, 8.0% Er₂O₃ may be included.

The purple-red matrix glass, microcrystalline glass or microcrystalline glass products prepared by the present invention use Nd₂O₃ as the colorant, using a content generally below 8%, preferably below 6%. Because of the low coloring efficiency of rare earth element Nd₂O₃, the use of content above 8%, also cannot make the matrix glass, microcrystalline glass or microcrystalline glass products to further deepen the color, but to increase the cost. The lower limit of its content is 0.4% or more, if below 0.4%, the matrix glass, microcrystalline glass or microcrystalline glass products color is not obvious. In some embodiments, about0.4%, 0.6%, 0.8%, 1.0%, 1.2%, 1.4%, 1.6%, 1.8%, 2.0%, 2.2%, 2.4%, 2.6%, 2.8%, 3.0%, 3.2%, 3.4%, 3.6%, 3.8%, 4.0%, 4.2%, 4.4%, 4.6%, 4.8%, 5.0%, 5.2%, 5.4%, 5.6%, 5.8%, 6.0%, 6.2%, 6.4%, 6.6%, 6.8%, 7.0%, 7.2%, 7.4%, 7.6%, 7.8%, 8.0% Nd₂O₃ may be included.

The present invention prepares red matrix glass, microcrystalline glass or microcrystalline glass products, using Er₂O₃, Nd₂O₃ and MnO₂ mixed colorant. Er ions in glass have absorption at 400-500nm, Mn ions have absorption mainly at 500nm, Nd ions have strong absorption mainly at 580nm, the mixture of the three substances can prepare red matrix glass, microcrystalline glass or microcrystalline glass products, due to Er₂O₃ and Nd₂O₃ for rare earth coloring, coloring ability is relatively weak, Er₂O₃ use within 6%, Nd₂O₃ use within 4%, MnO₂ coloring strong, the use of 2% range, the lower limit of its use of mixed colorants combined amount of above 0.9%.

"Does not contain" "0%" as documented herein means that the compound, molecule or element, etc. was not intentionally added as a raw material to the matrix glass, microcrystalline glass or microcrystalline glass product of the present invention. However, as raw materials and/or equipment for the production of matrix glass, microcrystalline glass or microcrystalline glass products, there will be certain impurities or components that are not intentionally added and will be contained in small amounts or traces in the final matrix glass, microcrystalline glass or microcrystalline glass products, and such cases are also within the scope of protection of the patent of the present invention.

In some embodiments of the present invention, the crystalline phase in the microcrystalline glass and microcrystalline glass products contains lithium monosilicate, which provides high strength to the microcrystalline glass and microcrystalline glass products of the present invention, and the fracture toughness of the microcrystalline glass and microcrystalline glass products becomes high; the height of the drop ball test and four-point bending strength of the microcrystalline glass and microcrystalline glass products become high. The microcrystalline glass of the present invention has excellent chemical strengthening performance, and can also be treated by chemical strengthening process to obtain excellent mechanical strength. Through reasonable component design, the microcrystalline glass and microcrystalline glass products of the present invention can obtain suitable grain size, so that the microcrystalline glass and microcrystalline glass products of the present invention have high strength. The microcrystalline glass and microcrystalline glass products of the present invention have good crystallinity, so that the microcrystalline glass and microcrystalline glass products of the present invention have excellent mechanical properties. The crystallinity refers to the degree of crystalline integrity. The arrangement of particles inside the crystal with complete crystallization is relatively regular, the diffraction lines are strong, sharp and symmetrical, and the half-height width of diffraction peaks is close to the width measured by the instrument; crystals with poor crystallinity have defects such as dislocations, which make the diffraction line peaks wide and diffuse. The weaker the crystallinity, the weaker the diffraction ability and the wider the diffraction peaks until they disappear into the background. In some embodiments, the crystallinity of the microcrystalline glass product or microcrystalline glass is above 50%, preferably above 60%, more preferably above 70%.

The size and type of grains in the microcrystalline glass or microcrystalline glass products of the present invention affect the haze and transmittance of the microcrystalline glass or microcrystalline glass products, the smaller the grains the higher the transmittance; the smaller the haze, the higher the transmittance. In some embodiments, the haze of microcrystalline glass products or microcrystalline glass of thickness below 1 mm is below 0.2%, preferably below 0.18%, more preferably below 0.15%. In some embodiments, the microcrystalline glass product or microcrystalline glass has a grain size of 80 nm or less, preferably 50 nm or less, more preferably 30 nm or less.

In some embodiments, the crystalline phase content and refractive index in the microcrystalline glass or microcrystalline glass products of the present invention affect the | B I value of the microcrystalline glass or microcrystalline glass products, and the microcrystalline glass or microcrystalline glass products appear bluish or yellowish when observed in the visible light range, which affects the optical properties of the products, and are marked with | B | value in LAB (chromaticity value of substance color). Microcrystalline glass or microcrystalline glass products present low | B | values in the visible range, and the average light | B | values of microcrystalline glass products or microcrystalline glass 400 to 800 nm in some embodiments with thickness below 1 mm are below 0.9, preferably below 0.8, and more preferably below 0.7.

In some embodiments, the microcrystalline glass or microcrystalline glass product of the present invention exhibits high transparency in the visible range (i.e., the microcrystalline glass or microcrystalline glass product is transparent). The microcrystalline glass or microcrystalline glass product exhibits high transmittance in the visible range, and in some embodiments, the average light transmittance rate of 400∼800nm of the microcrystalline glass product or microcrystalline glass of thickness below 1 mm is preferably above 87%. In some preferred embodiments, the light transmittance rate at 550nm of microcrystalline glass product or microcrystalline glass of thickness below 1 mm is preferably above 88%.

In some embodiments, an anti-microbial composition may be added to a matrix glass, microcrystalline glass, or microcrystalline glass product. The microcrystalline glass or microcrystalline glass products described herein may be used in applications such as kitchen or restaurant worktops where exposure to harmful bacteria is likely. The matrix glass, microcrystalline glass or microcrystalline glass products contain anti-microbial components including, but not limited to Ag, AgO, Cu, CuO, Cu₂O, etc. In some embodiments, the above anti-microbial components are present in amounts of 2% or less, preferably 1% or less, individually or in combination.

The matrix glass, microcrystalline glass and microcrystalline glass products of the present invention can be produced and manufactured by the following methods:
Generate the matrix glass: Mix the raw materials well in proportion to the components, put the homogeneous mixture into a crucible made of platinum or quartz, and melt it in an electric or gas furnace in the temperature range of 1250 to 1650°C for 5 to 24 hours depending on the melting ease of the glass composition. After melting and stirring to make it homogeneous, it is lowered to the proper temperature and cast into the mold, which is made by slow cooling.

The matrix glass of the present invention can be molded by well-known methods.

The matrix glass of the present invention is crystallized by a crystallization process after molding or after the molding process to uniformly precipitate crystals within the glass. This crystallization process can be carried out by 1 stage or by 2 stages, and preferably 2 stages are used for the crystallization process. The nucleation process is performed at a 1st temperature, and then the crystal growth process is performed at a 2nd temperature higher than the nucleation process temperature. The crystallization process performed at the 1st temperature is referred to as the 1st crystallization process, and the crystallization process performed at the 2nd temperature is referred to as the 2nd crystallization process.

In order to obtain the desired physical properties of the microcrystalline glass, the preferred crystallization process is:
The above-mentioned crystallization treatment by 1 stage allows the nucleation formation process and the crystallization growth process to be carried out continuously. In other words, the temperature is increased to the specified crystallization temperature, and after reaching the crystallization temperature, the temperature is maintained for a certain period of time, and then the temperature is lowered. The crystallization treatment temperature is preferably 580 to 750°C, more preferably 600 to 700°C in order to precipitate the desired crystalline phase, and the holding time at the crystallization treatment temperature is preferably 0 to 8 hours, more preferably 1 to 6 hours.

When the above crystallization treatment is performed by 2 stages, the 1st temperature is preferably 470 to 580°C and the 2nd temperature is preferably 600 to 750°C. The holding time at the 1st temperature is preferably from 0 to 24 hours, and more preferably from 2 to 15 hours. The holding time at the 2nd temperature is preferably from 0 to 10 hours, more preferably from 0.5 to 6 hours.

The above holding time of 0 hours means that the temperature starts to cool down or warm up again less than 1 minute after reaching that temperature.

In some embodiments, the matrix glass or microcrystalline glass described herein may be manufactured into a shaped body by various processes, the shaped body including, but not limited to, a sheet, and the processes including, but not limited to, slit drawing, floatation, roll pressing, and other processes known in the art for forming sheets. Alternatively, the matrix glass or microcrystalline glass may be formed by float or roll pressing as is well known in the art. The formers described in the present invention also include lenses, prisms, etc.

The matrix glass or microcrystalline glass of the present invention can be manufactured as a glass-forming body or microcrystalline glass-forming body of a sheet by methods such as grinding or polishing processing, but the methods of manufacturing the glass-forming body or microcrystalline glass-forming body are not limited to these methods.

The matrix glass or microcrystalline glass of the present invention can be prepared to form various shapes of glass-forming bodies or microcrystalline glass-forming bodies at a certain temperature using methods such as hot bending process or press molding process, but is not limited to these methods.

In some embodiments, a glass forming body or microcrystalline glass forming body can be made using a heat bending process. The heat bending process is a process in which 2D or 2.5D glass or microcrystalline glass is placed in a mold and a 3D curved glass forming body or microcrystalline glass forming body is made in a heat bending machine in a sequence of steps including heating up and preheating, pressurizing and forming, and holding pressure and cooling.

In some embodiments, the microcrystalline glass forming body has a 2.5D or 3D configuration, i.e., the microcrystalline glass forming body has a non-planar configuration. By "non-planar configuration" as used herein, we mean that in a 2.5D or 3D shape, at least a portion of the microcrystalline glass forming body extends outward or along an angle with a plane defined by the original, layout configuration of the 2D matrix glass. The 2.5D or 3D microcrystalline glass forming body formed from the matrix glass may have one or more projections or curved portions.

In some embodiments, the method of manufacturing the microcrystalline glass forming body is a heat bending process method in combination with the characteristics of the growth and transformation of the crystalline phase in the microcrystalline glass. Specifically, the method includes pre-crystallization and hot process forming. The pre-crystallization described in the present invention is to form a pre-crystallized glass from a matrix glass (i.e., glass before crystallization) by a controlled crystallization process. The crystallinity of the pre-crystallized glass does not reach the crystallinity required for the performance index of the target microcrystalline glass forming body. The pre-crystallized glass is then formed into a microcrystalline glass forming body by a thermal processing molding process.

In some embodiments, the method of manufacturing a microcrystalline glass forming body comprises the steps of:
1)subjecting the matrix glass to a crystallization heat treatment process, including heating up, holding nucleation, heating up, holding crystallization, and cooling down to room temperature to form pre-crystallized glass.
2)Pre-crystallized glass is thermally processed and molded to obtain microcrystalline glass forming body.

The crystallization heat treatment process described in the present invention consists of nucleation of the matrix glass at a certain temperature Tₕ and time tₕ, followed by crystallization at a certain temperature T_{c} and time t_{c}. The crystallinity of the obtained pre-crystallized glass does not reach the crystallinity required for the performance index of the target microcrystalline glass forming body. Applying the XRD test data, the total content of the main crystalline phase in the crystallinity of the pre-crystallized glass was calculated by the Rietveld full-spectrum fitting refinement method as I_{c1}. The pre-crystallization of the present invention is a complete process in terms of process, including one step of the nucleation process, one, two or three and more stages of the crystallization process, etc. It is a complete process from heating and holding, and again heating and holding ......, and then to room temperature according to the process. Distinguished from the primary crystallization and secondary crystallization mentioned in some literature or patents ......, the present invention is actually only the first stage of a complete crystallization process, and the second stage of the crystallization ...... It is continuous, and there is no process of crystallization by lowering to room temperature and then raising the temperature again.

The thermal processing molding described in the present invention refers to the molding treatment of pre-crystallized glass by thermal processing process under certain conditions of temperature, time, pressure, etc. The thermal processing molding includes more than one thermal processing process, and the thermal processing process includes but is not limited to pressing molding, bending molding or drawing molding of pre-crystallized glass under certain conditions of temperature, time, pressure, etc. In the thermal processing molding process, sometimes the complex shape of the molding body cannot be completed by one thermal processing, and it may be necessary to perform more than two multiple thermal processing to achieve.

In some embodiments, the method of manufacturing the microcrystalline glass forming body is a heat bending process method. Specifically, in some embodiments, the method of manufacturing the microcrystalline glass forming body comprises the steps of:
1)Heating up and preheating: The matrix glass or pre-crystallized glass or microcrystalline glass is placed in the mold, and the mold is sequentially passed through each heating up site in the heat bender and held at each site for a certain time. Preheating zone temperature of 400∼ 800°C, pressure of 0.01∼0.05MPa, time of 40∼200s. In some embodiments, for the five preheating sites of the heat bender, the general initial temperature stabilization set at about 500°C, the subsequent sites gradually increase the temperature, the temperature gradient between the two adjacent sites from low to high temperature gradually narrowed, the last preheating station and the press type first site temperature difference in the range of 20°C can be.
2)Pressurized molding: mold after preheating transfer to the molding site, the heat bender to apply a certain pressure on the mold, the pressure range of 0.1∼0.8Mpa, pressure size according to the glass thickness, curvature and other factors to determine the molding site temperature range of 650∼850°C, molding time range of 40∼200s.
3)Holding pressure cooling: transfer the mold to the cooling station to cool down station by station. The control cooling temperature range is 750∼500°C, the pressure is 0.01∼0.05Mpa, and the time is 40∼200s.

Microcrystalline glass forming body using heat bending process not only needs to control the appearance quality such as ordinary high alumina glass, but also needs to control the influence of crystal growth and development on the performance of microcrystalline glass during the heat bending process, such as 3D curved microcrystalline glass used for display devices or electronic equipment housing, which needs to pay close attention to the light transmittance, haze, | B | value and its uniformity after heat bending.

In some embodiments, the primary crystalline phase of the pre-crystallized glass contains lithium monosilicate, and/or lithium disilicate, and/or lithium phosphate, and/or quartz solid solution and/or petalite with a crystalline phase content ranging from 20 to 60%, wherein the petalite content is 0 to 18%. The main crystalline phase of the microcrystalline glass forming body formed by the hot bending process contains lithium disilicate, or lithium disilicate and petalite, with a crystalline phase content ranging from 40 to 70%, where the petalite content is 0 to 18%.

In some embodiments, the primary crystalline phase of the pre-crystallized glass contains lithium monosilicate, and/or lithium disilicate, and/or lithium phosphate, and/or quartz solid solution, and/or petalite with a crystalline phase content ranging from 20 to 60%, where the petalite content is 0 to 18%. The main crystalline phase of the microcrystalline glass forming body formed by the hot bending process contains lithium monosilicate and/or lithium disilicate with a crystalline phase content ranging from 40 to 70%.

The amount of change of crystalline phase before and after heat bending determines the uniformity of microcrystalline glass forming body in terms of size, mass production possibility and cost control, etc. The matrix glass and microcrystalline glass of the present invention have excellent thermal processing properties, and the amount of change of crystalline phase content is below 20%, preferably below 15%, and further preferably below 10% after heat bending and molding, which can ensure the uniformity of haze and | B | values, etc. of microcrystalline glass forming body obtained after heat bending.

The matrix glass, microcrystalline glass and microcrystalline glass products described herein may have any thickness that is reasonably useful.

The microcrystalline glass of the present invention can improve mechanical properties through precipitation crystallization, and in addition to obtaining superior mechanical properties by forming compressive stress layers to be made into microcrystalline glass products.

In some embodiments, the matrix glass or microcrystalline glass can be processed into sheets, and/or shaped (e.g., perforated, heat bent, etc.), polished and/or swept after shaped, and then chemically strengthened by a chemical strengthening process.

The chemical strengthening described in this invention is the ion exchange method. In the ion exchange process, smaller metal ions in the matrix glass or microcrystalline glass are replaced or "exchanged" by larger metal ions with the same valence state close to the matrix glass or microcrystalline glass. The replacement of smaller ions with larger ions builds compressive stress in the matrix glass or microcrystalline glass, forming a compressive stress layer.

In some embodiments, the metal ions are monovalent alkali metal ions (e.g., Na⁺, K⁺, Rb⁺, Cs⁺, etc.), and the ion exchange is performed by submerging the matrix glass or microcrystalline glass in a salt bath containing at least one molten salt of a larger metal ion that is used to displace the smaller metal ion in the matrix glass. Alternatively, other monovalent metal ions such as Ag⁺, Tl⁺, Cu⁺, etc. can be used to exchange monovalent ions. One or more ion exchange processes used to chemically strengthen the matrix glass or microcrystalline glass may include, but are not limited to, submerging it in a single salt bath or submerging it in a plurality of salt baths having the same or different compositions, with washing and/or annealing steps between submersions.

In some embodiments, the matrix glass or microcrystalline glass may be ion-exchanged by submersion in a salt bath of molten Na salt (e.g., NaNO₃) at a temperature of about 350°C to 470°C for about 1 to 36 hours, preferably in the temperature range of 380°C to 460°C and preferably in the time range of 2 to 24 hours. In this embodiment, the Na ions replace some of the Li ions in the matrix glass or microcrystalline glass to form a surface compressed layer and exhibit high mechanical properties. In some embodiments, the matrix glass or microcrystalline glass can be ion exchanged by submerging in a salt bath of molten K salt (e.g., KNO3) at a temperature of about 360°C to 450°C for 1 to 36 hours, preferably in the time range of 2 to 24 hours. In some embodiments, the matrix glass or microcrystalline glass may be subjected to ion exchange by submersion in a mixed salt bath of molten K and Na salts at a temperature of about 360°C to 450°C for 1 to 36 hours, preferably in the time range of 2 to 24 hours.

Each performance index of microcrystalline glass and/or microcrystalline glass products and/or matrix glass of the present invention is tested by the following methods:

### [Haze]

Using Minolta CM3600A, a haze tester, samples of 1mm or less were prepared and tested according to GB2410-80.

### [Grain size]

Determination was performed using SEM scanning electron microscopy. The microcrystalline glass was surface treated in HF acid and then gold sprayed on the surface of the microcrystalline glass, and the size of the grains was determined by surface scanning under SEM scanning electron microscopy.

### [Light transmittance rate]

The light transmission rates described in this paper are all external transmission rates, sometimes referred to as transmission rates.

The samples were processed to below 1 mm and polished parallel to each other, and the average light transmittance from 400 to 800 nm was measured using a Hitachi U-41000 shaped spectrophotometer.

The samples were processed to below 1 mm and polished parallel to each other, and the light transmittance at 550 nm was measured using a Hitachi U-41000 shaped spectrophotometer.

### [Crystallinity]

The XRD diffraction peaks were compared with database profiles, and the crystallinity was obtained by calculating the proportion of the crystalline phase diffraction intensity in the overall profile intensity and by internal calibration using pure quartz crystals.

### [Ion exchange layer depth]

The ion-exchange layer depth was measured using a glass surface stress meter SLP-2000.

The refractive index of the sample was 1.56 and the optical elasticity constant was 26 [(nm/cm)/Mpa] as the measurement conditions.

### [Falling ball test height]

A sample of 145mmx67mmx0.7mm microcrystalline glass product is placed on a glass-bearing fixture, and a 132g steel ball is dropped from a specified height, and the sample is subjected to the maximum drop test height of impact without fracture. Specifically, the test is implemented from the ball drop test height of 800mm, without fracture, through 850mm, 900mm, 950mm, 1000mm and above in order to change the height. For the example with "ball drop test height", the test object is a microcrystalline glass product. In this case, the test data of 1000mm is recorded, which means that even if a steel ball is dropped from a height of 1000mm, the microcrystalline glass product does not break and withstands the impact. The height of the ball drop test in this invention is sometimes referred to as the height of the ball drop.

### [Drop height of the body]

The 145mmx67mmx0.7mm microcrystalline glass sample is placed on the glass-bearing fixture, so that a 32g steel ball is dropped from a specified height, and the maximum drop test height of the sample that can withstand the impact without fracture is the drop height of the body. Specifically, the test is implemented from the ball drop test height of 500mm, without fracture, through 550mm, 600mm, 650mm, 700mm and above to change the height in turn. In the case of the embodiment with the "body drop height", the drop height of microcrystalline glass is used as the test object, which is the drop test height of microcrystalline glass. In the case of the test data recorded as 1000mm, it means that even if the steel ball is dropped from a height of 1000mm, the microcrystalline glass does not break and withstands the impact.

### [Fracture toughness]

Using the method of direct measurement of indentation extended crack size, the specimen size was 2mmx4mmx20mm, chamfered, smoothed and polished, and after the specimen preparation, a force of 49N was applied to the specimen with a Vickers hardness indenter and maintained for 30s, and the fracture strength was determined by three-point bending method after punching out the indentation.

### [Four-point bending strength]

A microcomputer-controlled electronic universal testing machine, CMT6502, with sample specifications of 1mm thickness or less, was used to perform the test in accordance with ASTM C 158-2002. The four-point bending strength is sometimes referred to as bending strength in this invention.

### [Vickers hardness]

The value expressed by dividing the load ( N ) when pressing a pyramid-shaped depression into the test surface with a diamond quadrilateral cone indenter with an angle of 136° on the relative surface by the surface area ( mm² ) calculated through the length of the depression. Make a test load of 100 (N) and a holding time of 15(sec) to carry out. The Vickers hardness is sometimes referred to as hardness in the present invention.

### [ | B | value]

B-value testing was performed using Minolta CM-700d. The sample size is below 1mm thickness, use the supporting calibration long cylinder and short cylinder for instrument zero calibration and whiteboard calibration respectively, after calibration, use the long cylinder and then carry out the test against the empty space to determine the instrument stable calibration reliability (B≤0.05), after the instrument calibration is qualified, place the product on the long cylinder at zero position for testing_{∘}

The value of | B | is the absolute value of the value of B.

### [Coefficient of thermal expansion]

Thermal expansion coefficient (α_{20°C-120°C}) tested according to GB/T7962.16-2010 test method.

### [Refractive index]

Refractive index (n_{d}) tested according to GB/T7962.1-2010 method.

### [Dielectric constant]

Dielectric constant (εᵣ) in accordance with GB 9622.9-1988 method test, test frequency of 1∼7GHZ.

### [Dielectric loss]

Dielectric loss (tanδ) in accordance with GB 9622.9-1988 method test, test frequency of 1∼7GHZ.

### [Surface resistance]

The surface resistance is tested according to CS-157-2020 method, and the test temperature is 20∼40°C.

The microcrystalline glass products of the present invention have the following properties:
1) In some embodiments, the four-point bending strength of the microcrystalline glass product is above 600 MPa, preferably above 650 MPa, and more preferably above 700 MPa.
2)In some embodiments, the ion exchange layer of the microcrystalline glass product has a depth of 20µm or more, preferably 30µm or more, more preferably 40µm or more.
3)In some embodiments, the falling ball test height of the microcrystalline glass product is above 1400mm, preferably above 1500mm, more preferably above 1600mm.
4)ln some embodiments, the microcrystalline glass product has a fracture toughness of 1 MPa • m^{1/2} or more, preferably 1.3 MPa • m^{1/2} or more, more preferably 1.5 MPa • m^{1/2} or more.
5)In some embodiments, the microcrystalline glass product has a Vickers hardness (Hv) of 730kgf/mm² or more, preferably 750kgf/mm² or more, and more preferably 780kgf/mm² or more.
6)In some embodiments, the crystallinity of the microcrystalline glass product is above 50%, preferably above 60%, more preferably above 70%.
7)In some embodiments, the grain size of the microcrystalline glass product is below 80 nm, preferably below 50 nm, more preferably below 30 nm.
8)In some embodiments, the haze of the microcrystalline glass product with a thickness of 1mm or less is below 0.2%, preferably below 0.18%, more preferably below 0.15%. The thickness is preferably 0.2 to 1 mm, more preferably 0.3 to 0.9 mm, further preferably 0.5 to 0.8 mm, much further preferably 0.55 mm or 0.6 mm or 0.68 mm or 0.7 mm or 0.75 mm.
9) In some embodiments, the microcrystalline glass products with a thickness of 1mm or less have an average light transmission rate of more than 87%, preferably more than 89%, more preferably more than 90%, at 400 to 800 nm. The thickness is preferably 0.2 to 1mm, more preferably 0.3 to 0.9mm, further preferably 0.5 to 0.8mm, and much further preferably 0.55mm or 0.6mm or 0.68mm or 0.7mm or 0.75mm.
10)ln some embodiments, the microcrystalline glass product with a thickness of 1mm or less has a light transmission rate of more than 88%, preferably more than 90%, more preferably more than 91% at 550nm. The thickness is preferably 0.2 to 1mm, more preferably 0.3 to 0.9mm, further preferably 0.5 to 0.8mm, and much further preferably 0.55mm or 0.6mm or 0.68mm or 0.7mm or 0.75mm.
11)In some embodiments, the microcrystalline glass product with a thickness of 1mm or less has an average light | B | value of 400 to 800nm of 0.9 or less, preferably 0.8 or less, more preferably 0.7 or less. The thickness is preferably 0.2 to 1 mm, more preferably 0.3 to 0.9 mm, further preferably 0.5 to 0.8 mm, and much further preferably 0.55 mm or 0.6 mm or 0.68 mm or 0.7 mm or 0.75 mm.
12)ln some embodiments, the dielectric constant (εᵣ) of the microcrystalline glass product is above 5.4, preferably above 5.8, more preferably above 6.0.
13)ln some embodiments, the dielectric loss (tanδ) of the microcrystalline glass product is below 0.05, preferably below 0.04, more preferably below 0.02, and further preferably below 0.01.

The microcrystalline glass of the present invention has the following properties:
1)In some embodiments, the crystallinity of the microcrystalline glass is above 50%, preferably above 60%, more preferably above 70%.
2)In some embodiments, the microcrystalline glass has a grain size of 80 nm or less, preferably 50 nm or less, and more preferably 30 nm or less.
3)In some embodiments, the haze of the microcrystalline glass with a thickness of 1mm or less is 0.2% or less, preferably 0.18% or less, more preferably 0.15% or less. The thickness is preferably 0.2 to 1 mm, more preferably 0.3 to 0.9 mm, further preferably 0.5 to 0.8 mm, much further preferably 0.55 mm or 0.6 mm or 0.68 mm or 0.7 mm or 0.75 mm.
4)ln some embodiments, the microcrystalline glass with a thickness of 1mm or less has an average light transmission rate of more than 87%, preferably more than 89%, more preferably more than 90%, at 400 to 800 nm. The thickness is preferably 0.2 to 1mm, more preferably 0.3 to 0.9mm, further preferably 0.5 to 0.8mm, and much further preferably 0.55mm or 0.6mm or 0.68mm or 0.7mm or 0.75mm.
5)In some embodiments, the microcrystalline glass with a thickness of 1mm or less has a light transmission rate of more than 88%, preferably more than 90%, more preferably more than 91% at 550nm. The thickness is preferably 0.2 to 1mm, more preferably 0.3 to 0.9mm, further preferably 0.5 to 0.8mm, and much further preferably 0.55mm or 0.6mm or 0.68mm or 0.7mm or 0.75mm.
6) In some embodiments, the body drop height of the microcrystalline glass is above 1700mm, preferably above 1900mm, and more preferably above 2000mm.
7)In some embodiments, the microcrystalline glass with a thickness of 1mm or less has an average light | B | value of 400 to 800nm of 0.9 or less, preferably 0.8 or less, more preferably 0.7 or less. The thickness is preferably 0.2 to 1 mm, more preferably 0.3 to 0.9 mm, further preferably 0.5 to 0.8 mm, and much further preferably 0.55 mm or 0.6 mm or 0.68 mm or 0.7 mm or 0.75 mm.
8)In some embodiments, the microcrystalline glass has a Vickers hardness (Hᵥ) of 630kgf/mm² or more, preferably 650kgf/mm² or more, and more preferably 680kgf/mm² or more.
9)In some embodiments, the coefficient of thermal expansion (α_{20°C-120°C}) of the microcrystalline glass is 70 × 10⁻⁷/K to 90 × 10⁻⁷/K.
10)ln some embodiments, the refractive index (n_{d}) of the microcrystalline glass is 1.5520 to 1.5700.
11)In some embodiments, the dielectric constant (εᵣ) of the microcrystalline glass is above 5.4, preferably above 5.8, more preferably above 6.0.
12)In some embodiments, the dielectric loss (tanδ) of the microcrystalline glass is 0.05 or less, preferably 0.04 or less, more preferably 0.03 or less, further preferably 0.01 or less.
13)ln some embodiments, the surface resistance of the microcrystalline glass is 1 × 10⁹ Ω •cm or more, preferably 1 × 10¹⁰Ω •cm or more, and more preferably 1 × 10¹¹ Ω •cm or more.

The matrix glass of the present invention has the following properties:
1)In some embodiments, the coefficient of thermal expansion (α_{20°C-120°C}) of the matrix glass is 65 × 10⁻⁷/K to 80 × 10⁻⁷/K.
2)In some embodiments, the refractive index (n_{d}) of the matrix glass is 1.5400 to 1.5600.

The microcrystalline glass, microcrystalline glass products, matrix glass, glass forming body, microcrystalline glass forming body of the present invention can be widely made into glass cover or glass components due to the above-mentioned excellent properties; meanwhile, the microcrystalline glass, microcrystalline glass products, matrix glass, glass forming body, microcrystalline glass forming body of the present invention can be applied in electronic devices or display devices, such as cell phones, watches, computers, touch screens, etc. , for manufacturing protective glass for cell phones, smart phones, tablet PCs, laptops, PDAs, televisions, personal computers, MTA machines or industrial displays, or for manufacturing touch screens, protective windows, car windows, train windows, aviation machinery windows, protective glass for touch screens, or for manufacturing hard disk substrates or solar cell substrates, or for manufacturing white goods, such as for manufacturing refrigerator parts or kitchenware.

### Embodiment

In order to further clearly illustrate and describe the technical embodiments of the present invention, the following non-limiting embodiments are provided. Many efforts have been made to ensure the accuracy of the values (e.g., quantity, temperature, etc.) for embodiments of the present invention, but it must be taken into account that some errors and biases exist. The composition itself is given in weight % based on the oxide and has been normalized to 100%.

### < Matrix Glass embodiment >

In this embodiment, the matrix glass having the compositions shown in Tables 1 to 6 was obtained by the manufacturing method of the matrix glass described above. In addition, the characteristics of each matrix glass were measured by the test method described in the present invention, and the measurement results are expressed in Tables 1 to 6.

**Table 1**

| Components(wt%) | 1# | 2# | 3# | 4# | 5# | 6# | 7# |
|---|---|---|---|---|---|---|---|
| SiO₂ | 70 | 71 | 72 | 73 | 74 | 75 | 76 |
| Al₂O₃ | 1 | 2 | 2 | 0.5 | 0.5 | 0.5 | 0.5 |
| Li₂O | 14 | 13 | 13 | 16 | 15 | 13 | 12.5 |
| Na₂O | 1.5 | 0.5 | 1 | 0.5 | 0.5 | 0.5 | 0.5 |
| P₂O₅ | 4 | 6 | 4.5 | 3 | 3 | 3 | 3 |
| ZrO₂ | 9 | 7 | 7 | 7 | 7 | 8 | 7 |
| K₂O | 0 | 0.5 | 0 | 0 | 0 | 0 | 0 |
| ZnO | 0 | 0 | 0 | 0 | 0 | 0 | 0 |
| MgO | 0 | 0 | 0.5 | 0 | 0 | 0 | 0 |
| CaO | 0 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 0 | 0 | 0 | 0 | 0 |
| TiO₂ | 0 | 0 | 0 | 0 | 0 | 0 | 0 |
| Y₂O₃ | 0 | 0 | 0 | 0 | 0 | 0 | 0 |
| Sb₂O₃ | 0.5 | 0 | 0 | 0 | 0 | 0 | 0.5 |
| Total | 100 | 100 | 100 | 100 | 100 | 100 | 100 |
| Al₂O₃/ (Li₂O+ZrO₂+P₂O₅) | 0.04 | 0.08 | 0.08 | 0.02 | 0.02 | 0.02 | 0.02 |
| (Li₂O+ZrO₂) /SiO₂ | 0.33 | 0.28 | 0.28 | 0.32 | 0.3 | 0.28 | 0.26 |
| (MgO+ZnO) /ZrO₂ | 0 | 0 | 0.07 | 0 | 0 | 0 | 0 |
| (Li₂O+Al₂O₃) /ZrO₂ | 1.67 | 2.14 | 2.14 | 2.36 | 2.21 | 1.69 | 1.86 |
| Al₂O₃/Li₂O | 0.07 | 0.15 | 0.15 | 0.03 | 0.03 | 0.04 | 0.04 |
| Li₂O/ (ZrO₂+P₂O₅) | 1.08 | 1 | 1.13 | 1.6 | 1.5 | 1.18 | 1.25 |
| P₂O₅+ZrO₂ | 13 | 13 | 11.5 | 10 | 10 | 11 | 10 |
| SiO₂/ZrO₂ | 7.78 | 10.14 | 10.29 | 10.43 | 10.57 | 9.38 | 10.86 |
| Al₂O₃/ ( P₂O₅+ZrO₂) | 0.08 | 0.15 | 0.17 | 0.05 | 0.05 | 0.05 | 0.05 |
| SiO₂/ (P₂O₅+ZrO₂) | 5.38 | 5.46 | 6.26 | 7.3 | 7.4 | 6.82 | 7.6 |
| (ZrO₂+Li₂O) /Al₂O₃ | 23.0 | 10.0 | 10.0 | 46.0 | 44.0 | 42.0 | 39.0 |
| (SiO₂+Al₂O₃) /ZrO₂ | 7.89 | 10.43 | 10.57 | 10.50 | 10.64 | 9.44 | 10.93 |
| Refractive index | 1.5499 | 1.5415 | 1.5406 | 1.5459 | 1.5433 | 1.5419 | 1.5489 |
| Coefficient of thermal expansion(×10⁻⁷/K) | 65 | 65 | 65 | 68 | 65 | 68 | 68 |

**Table 2**

| Components(wt%) | 8# | 9# | 10# | 11# | 12# | 13# | 14# |
|---|---|---|---|---|---|---|---|
| SiO₂ | 70.5 | 71.5 | 72.5 | 73.5 | 74.5 | 75.5 | 68 |
| Al₂O₃ | 0.5 | 0.5 | 0.5 | 1.5 | 0.5 | 0.5 | 1.5 |
| Li₂O | 18.5 | 12.5 | 12.5 | 13 | 13 | 13 | 20 |
| Na₂O | 0.5 | 0.5 | 0.5 | 0.5 | 1 | 0.5 | 0.5 |
| P₂O₅ | 3 | 3 | 3 | 4 | 4 | 3 | 4 |
| ZrO₂ | 7 | 12 | 10 | 7 | 7 | 7 | 6 |
| K₂O | 0 | 0 | 0 | 0 | 0 | 0 | 0 |
| ZnO | 0 | 0 | 0 | 0 | 0 | 0 | 0 |
| MgO | 0 | 0 | 0 | 0.5 | 0 | 0 | 0 |
| CaO | 0 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 0 | 0 | 0 | 0 | 0 |
| TiO₂ | 0 | 0 | 0 | 0 | 0 | 0 | 0 |
| Y₂O₃ | 0 | 0 | 0.5 | 0 | 0 | 0 | 0 |
| Sb₂O₃ | 0 | 0 | 0.5 | 0 | 0 | 0.5 | 0 |
| Total | 100 | 100 | 100 | 100 | 100 | 100 | 100 |
| Al₂O₃/ (Li₂O+ZrO₂+P₂O₅) | 0.02 | 0.02 | 0.02 | 0.06 | 0.02 | 0.02 | 0.05 |
| (Li₂O+ZrO₂) /SiO₂ | 0.36 | 0.34 | 0.31 | 0.27 | 0.27 | 0.26 | 0.38 |
| (MgO+ZnO) /ZrO₂ | 0 | 0 | 0 | 0.07 | 0 | 0 | 0 |
| (Li₂O+Al₂O₃) /ZrO₂ | 2.71 | 1.08 | 1.3 | 2.07 | 1.93 | 1.93 | 3.58 |
| Al₂O₃/Li₂O | 0.03 | 0.04 | 0.04 | 0.12 | 0.04 | 0.04 | 0.08 |
| Li₂O/ (ZrO₂+P₂O₅) | 1.85 | 0.83 | 0.96 | 1.18 | 1.18 | 1.3 | 2 |
| P₂O₅+ZrO₂ | 10 | 15 | 13 | 11 | 11 | 10 | 10 |
| SiO₂/ZrO₂ | 10.07 | 5.96 | 7.25 | 10.5 | 10.64 | 10.79 | 11.33 |
| Al₂O₃/ (P₂O₅+ZrO₂) | 0.05 | 0.03 | 0.04 | 0.14 | 0.05 | 0.05 | 0.15 |
| SiO₂/ (P₂O₅+ZrO₂) | 7.05 | 4.77 | 5.58 | 6.68 | 6.77 | 7.55 | 6.8 |
| (ZrO₂+Li₂O) /Al₂O₃ | 51.0 | 49.0 | 45.0 | 13.33 | 40.0 | 40.0 | 17.33 |
| (SiO₂+Al₂O₃) /ZrO₂ | 10.14 | 6.00 | 7.30 | 10.71 | 10.71 | 10.86 | 11.58 |
| Refractive index | 1.5442 | 1.5477 | 1.5401 | 1.5422 | 1.551 | 1.5512 | 1.5511 |
| Coefficient of thermal expansion (×10⁻⁷/K) | 65 | 68 | 67 | 67 | 67 | 70 | 74 |

**Table 3**

| Components (wt%) | 15# | 16# | 17# | 18# | 19# | 20# | 21# |
|---|---|---|---|---|---|---|---|
| SiO₂ | 68.5 | 69 | 69.5 | 76.5 | 77 | 77.5 | 78 |
| Al₂O₃ | 1.5 | 3 | 4.5 | 0.5 | 0.5 | 1.5 | 0.5 |
| Li₂O | 18 | 16 | 14 | 12.5 | 12.5 | 12.5 | 12.5 |
| Na₂O | 0 | 0 | 0 | 0 | 0 | 0 | 0.5 |
| P₂O₅ | 6 | 6 | 6 | 2.5 | 2.5 | 2.5 | 2.5 |
| ZrO₂ | 6 | 6 | 6 | 8 | 7.5 | 6 | 6 |
| K₂O | 0 | 0 | 0 | 0 | 0 | 0 | 0 |
| ZnO | 0 | 0 | 0 | 0 | 0 | 0 | 0 |
| MgO | 0 | 0 | 0 | 0 | 0 | 0 | 0 |
| CaO | 0 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 0 | 0 | 0 | 0 | 0 |
| TiO₂ | 0 | 0 | 0 | 0 | 0 | 0 | 0 |
| Y₂O₃ | 0 | 0 | 0 | 0 | 0 | 0 | 0 |
| Sb₂O₃ | 0 | 0 | 0 | 0 | 0 | 0 | 0 |
| Total | 100 | 100 | 100 | 100 | 100 | 100 | 100 |
| Al₂O₃/ (Li₂O+ZrO₂+P₂O₅) | 0.05 | 0.11 | 0.17 | 0.02 | 0.02 | 0.07 | 0.02 |
| (Li₂O+ZrO₂) /SiO₂ | 0.35 | 0.32 | 0.29 | 0.27 | 0.26 | 0.24 | 0.24 |
| (MgO+ZnO) /ZrO₂ | 0 | 0 | 0 | 0 | 0 | 0 | 0 |
| Li₂O+Al₂O₃) /ZrO₂ | 3.25 | 3.17 | 3.08 | 1.63 | 1.73 | 2.33 | 2.17 |
| Al₂O₃/Li₂O | 0.08 | 0.19 | 0.32 | 0.04 | 0.04 | 0.12 | 0.04 |
| Li₂O/ (ZrO₂+P₂O₅) | 1.5 | 1.33 | 1.17 | 1.19 | 1.25 | 1.47 | 1.47 |
| P₂O₅+ZrO₂ | 12 | 12 | 12 | 10.5 | 10 | 8.5 | 8.5 |
| SiO₂/ZrO₂ | 11.42 | 11.5 | 11.58 | 9.56 | 10.27 | 12.92 | 13.0 |
| Al₂O₃/ (P₂O₅+ZrO₂) | 0.13 | 0.25 | 0.38 | 0.05 | 0.05 | 0.18 | 0.06 |
| SiO₂/ (P₂O₅+ZrO₂) | 5.71 | 5.75 | 5.79 | 7.29 | 7.70 | 9.12 | 9.18 |
| (ZrO₂+Li₂O) /Al₂O₃ | 16.0 | 7.33 | 4.44 | 41.0 | 40.0 | 12.33 | 37.0 |
| (SiO₂+Al₂O₃) /ZrO₂ | 11.67 | 12.0 | 12.33 | 9.63 | 10.33 | 13.17 | 13.08 |
| Refractive index | 1.551 | 1.5508 | 1.5502 | 1.5426 | 1.545 | 1.5425 | 1.5478 |
| Coefficient of thermal expansion (×10⁻⁷/K) | 73 | 70 | 71 | 65 | 66 | 68 | 69 |

**Table 4**

| Components (wt%) | 22# | 23# | 24# | 25# | 26# | 27# | 28# |
|---|---|---|---|---|---|---|---|
| SiO₂ | 65 | 65.5 | 66 | 66.5 | 67 | 67.5 | 78.5 |
| Al₂O₃ | 0 | 0.5 | 0 | 0 | 4.5 | 1 | 0 |
| Li₂O | 25 | 15 | 15 | 15 | 15 | 15 | 10 |
| Na₂O | 0 | 1.5 | 0 | 6 | 0.5 | 0.5 | 0 |
| P₂O₅ | 3 | 2 | 8 | 2 | 4 | 4 | 2 |
| ZrO₂ | 7 | 15 | 6 | 5.5 | 7 | 7 | 5 |
| K₂O | 0 | 0.5 | 0 | 0 | 0 | 0 | 0 |
| ZnO | 0 | 0 | 0 | 0 | 0 | 0 | 0 |
| MgO | 0 | 0 | 0 | 0 | 0 | 0 | 0 |
| CaO | 0 | 0 | 0 | 0 | 0 | 0 | 0 |
| SrO | 0 | 0 | 5 | 0 | 0 | 0 | 0 |
| BaO | 0 | 0 | 0 | 5 | 0 | 0 | 0 |
| B₂O₃ | 0 | 0 | 0 | 0 | 2 | 0 | 0 |
| TiO₂ | 0 | 0 | 0 | 0 | 0 | 5 | 0 |
| Y₂O₃ | 0 | 0 | 0 | 0 | 0 | 0 | 4.5 |
| Sb₂O₃ | 0 | 0 | 0 | 0 | 0 | 0 | 0 |
| Total | 100 | 100 | 100 | 100 | 100 | 100 | 100 |
| Al₂O₃/ (Li₂O+ZrO₂+P₂O₅) | 0 | 0.02 | 0 | 0 | 0.17 | 0.04 | 0 |
| ( Li₂O+ZrO₂) /SiO₂ | 0.49 | 0.46 | 0.32 | 0.31 | 0.33 | 0.33 | 0.19 |
| (MgO+ZnO) /ZrO₂ | 0 | 0 | 0 | 0 | 0 | 0 | 0 |
| (Li₂O+Al₂O₃) /ZrO₂ | 3.57 | 1.03 | 2.5 | 2.73 | 2.79 | 2.29 | 2 |
| Al₂O₃/Li₂O | 0 | 0.03 | 0 | 0 | 0.3 | 0.07 | 0 |
| Li₂O/ (ZrO₂+P₂O₅) | 2.5 | 0.88 | 1.07 | 2 | 1.36 | 1.36 | 1.43 |
| P₂O₅+ZrO₂ | 10 | 17 | 14 | 7.5 | 11 | 11 | 7 |
| SiO₂/ZrO₂ | 9.29 | 4.37 | 11.0 | 12.09 | 9.57 | 9.64 | 15.7 |
| Al₂O₃/ (P₂O₅+ZrO₂) | 0 | 0.03 | 0 | 0 | 0.41 | 0.09 | 0 |
| SiO₂/ (P₂O₅+ZrO₂) | 6.50 | 3.85 | 4.71 | 8.87 | 6.09 | 6.14 | 11.21 |
| (ZrO₂+Li₂O) /Al₂O₃ | - | 60.0 | - | - | 4.89 | 22.0 | - |
| (SiO₂+Al₂O₃) /ZrO₂ | 9.29 | 4.4 | 11.0 | 12.09 | 10.21 | 9.79 | 15.7 |
| Refractive index | 1.5432 | 1.5467 | 1.5411 | 1.5432 | 1.5488 | 1.5455 | 1.5466 |
| Coefficient of thermal expansion (×10⁻⁷/K) | 74 | 73 | 72 | 72 | 71 | 71 | 65 |

**Table 5**

| Components (wt%) | 29# | 30# | 31# | 32# | 33# | 34# | 35# |
|---|---|---|---|---|---|---|---|
| SiO₂ | 79 | 78.5 | 78 | 60 | 60.5 | 61 | 61.5 |
| Al₂O₃ | 0 | 0 | 2 | 7.5 | 4.5 | 6 | 6.5 |
| Li₂O | 10 | 10 | 10 | 14 | 13 | 13 | 13 |
| Na₂O | 0 | 0 | 0 | 3 | 2.5 | 2 | 2 |
| P₂O₅ | 2 | 2 | 2 | 3 | 2.5 | 3.5 | 3 |
| ZrO₂ | 7 | 7 | 5 | 7 | 10 | 11 | 12 |
| K₂O | 0 | 0 | 0 | 0 | 0.5 | 1 | 0 |
| ZnO | 2 | 0 | 2 | 0 | 0 | 0 | 0.5 |
| MgO | 0 | 2 | 1 | 0 | 0.5 | 0 | 0.5 |
| CaO | 0 | 0 | 0 | 0 | 0 | 0 | 0 |
| SrO | 0 | 0 | 0 | 0 | 0 | 1 | 0 |
| BaO | 0 | 0 | 0 | 0 | 0 | 0 | 0.5 |
| B₂O₃ | 0 | 0 | 0 | 0 | 0.5 | 0 | 0 |
| TiO₂ | 0 | 0 | 0 | 0 | 0 | 1 | 0 |
| Y₂O₃ | 0 | 0 | 0 | 5 | 5 | 0 | 0 |
| Sb₂O₃ | 0 | 0.5 | 0 | 0.5 | 0.5 | 0.5 | 0.5 |
| Total | 100 | 100 | 100 | 100 | 100 | 100 | 100 |
| Al₂O₃/ (Li₂O+ZrO₂+P₂O₅) | 0 | 0 | 0.12 | 0.31 | 0.18 | 0.22 | 0.23 |
| (Li₂O+ZrO₂) /SiO₂ | 0.22 | 0.22 | 0.19 | 0.35 | 0.38 | 0.39 | 0.41 |
| (MgO+ZnO) /ZrO₂ | 0.29 | 0.29 | 0.6 | 0 | 0.05 | 0 | 0.08 |
| (Li₂O+Al₂O₃) /ZrO₂ | 1.43 | 1.43 | 2.4 | 3.07 | 1.75 | 1.73 | 1.63 |
| Al₂O₃/Li₂O | 0 | 0 | 0.2 | 0.54 | 0.35 | 0.46 | 0.5 |
| Li₂O/ (ZrO₂+P₂O₅) | 1.11 | 1.11 | 1.43 | 1.4 | 1.04 | 0.9 | 0.87 |
| P₂O₅+ZrO₂ | 9 | 9 | 7 | 10 | 12.5 | 14.5 | 15 |
| SiO₂/ZrO₂ | 11.29 | 11.21 | 15.60 | 8.57 | 6.05 | 5.55 | 5.13 |
| Al₂O₃/ (P₂O₅+ZrO₂) | 0 | 0 | 0.29 | 0.75 | 0.36 | 0.41 | 0.43 |
| SiO₂/ (P₂O₅+ZrO₂) | 8.78 | 8.72 | 11.14 | 6.00 | 4.84 | 4.21 | 4.1 |
| (ZrO₂+Li₂O) /Al₂O₃ | - | - | 7.50 | 2.8 | 5.11 | 4.0 | 3.85 |
| (SiO₂+Al₂O₃) /ZrO₂ | 11.29 | 11.21 | 16.0 | 9.64 | 6.5 | 6.09 | 5.67 |
| Refractive index | 1.5489 | 1.544 | 1.5441 | 1.5549 | 1.5535 | 1.5535 | 1.5545 |
| Coefficient of thermal expansion (×10⁻⁷/K) | 67 | 65 | 66 | 75 | 74 | 78 | 76 |

c

**Table 6**

| Components (wt%) | 36# | 37# | 38# | 39# | 40# | 41# | 42# |
|---|---|---|---|---|---|---|---|
| SiO₂ | 62 | 62.5 | 63 | 63.5 | 64 | 64.5 | 65.5 |
| Al₂O₃ | 9.3 | 6.5 | 6 | 5.5 | 6.5 | 4.5 | 5.5 |
| Li₂O | 13.7 | 12 | 13 | 13 | 12 | 14 | 13.5 |
| Na₂O | 1 | 2 | 2 | 1 | 2 | 2.5 | 1.5 |
| P₂O₅ | 2.5 | 3 | 2.5 | 3.5 | 4 | 4 | 3.5 |
| ZrO₂ | 10 | 13 | 11 | 12 | 9 | 10 | 9.5 |
| K₂O | 0 | 0 | 0 | 0 | 1 | 0 | 0.5 |
| ZnO | 0 | 0 | 1 | 0 | 0 | 0 | 0 |
| MgO | 0 | 0.5 | 0 | 0 | 0 | 0 | 0 |
| CaO | 1 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 1 | 0 | 0.5 | 0 | 0 |
| TiO₂ | 0 | 0 | 0 | 0 | 0 | 0 | 0 |
| Y₂O₃ | 0 | 0 | 0 | 1 | 0.5 | 0 | 0 |
| Sb₂O₃ | 0.5 | 0.5 | 0.5 | 0.5 | 0.5 | 0.5 | 0.5 |
| Total | 100 | 100 | 100 | 100 | 100 | 100 | 100 |
| Al₂O₃/ (Li₂O+ZrO₂+P₂O₅) | 0.35 | 0.23 | 0.23 | 0.19 | 0.26 | 0.16 | 0.21 |
| (Li₂O+ZrO₂) /SiO₂ | 0.38 | 0.40 | 0.38 | 0.39 | 0.33 | 0.37 | 0.35 |
| (MgO+ZnO) /ZrO₂ | 0 | 0.04 | 0.09 | 0 | 0 | 0 | 0 |
| (Li₂O+Al₂O₃) /ZrO₂ | 2.3 | 1.42 | 1.73 | 1.54 | 2.06 | 1.85 | 2.0 |
| Al₂O₃/Li₂O | 0.68 | 0.54 | 0.46 | 0.42 | 0.54 | 0.32 | 0.41 |
| Li₂O/ (ZrO₂+P₂O₅) | 1.1 | 0.75 | 0.96 | 0.84 | 0.92 | 1.0 | 1.04 |
| P₂O₅+ZrO₂ | 12.5 | 16 | 13.5 | 15.5 | 13 | 14 | 13 |
| SiO₂/ZrO₂ | 6.2 | 4.81 | 5.73 | 5.29 | 7.11 | 6.45 | 6.89 |
| Al₂O₃/ (P₂O₅+ZrO₂) | 0.74 | 0.41 | 0.44 | 0.35 | 0.5 | 0.32 | 0.42 |
| SiO₂/ (P₂O₅+ZrO₂) | 4.96 | 3.91 | 4.67 | 4.1 | 4.92 | 4.61 | 5.04 |
| (ZrO₂+Li₂O) /Al₂O₃ | 2.55 | 3.85 | 4.00 | 4.55 | 3.23 | 5.33 | 4.18 |
| (SiO₂+Al₂O₃) /ZrO₂ | 7.13 | 5.31 | 6.27 | 5.75 | 7.83 | 6.9 | 7.47 |
| Refractive index | 1.5547 | 1.555 | 1.5545 | 1.554 | 1.5541 | 1.553 | 1.5538 |
| Coefficient of thermal expansion (×10⁻⁷/K) | 77 | 70 | 78 | 74 | 72 | 78 | 79 |

### < Microcrystalline glass embodiment >

In this embodiment, the microcrystalline glass having the compositions shown in Tables 7 to 12 was obtained by the manufacturing method of microcrystalline glass described above. In addition, the characteristics of each microcrystalline glass were measured by the test method described in the present invention, and the measurement results are expressed in Tables 7 to 12 for the room temperature described in the following embodiments, i.e., 25°C.

**Table 7**

| Components (wt%) | 1# | 2# | 3# | 4# | 5# | 6# | 7# |
|---|---|---|---|---|---|---|---|
| SiO₂ | 70 | 71 | 72 | 73 | 74 | 75 | 76 |
| Al₂O₃ | 1 | 2 | 2 | 0.5 | 0.5 | 0.5 | 0.5 |
| Li₂O | 14 | 13 | 13 | 16 | 15 | 13 | 12.5 |
| Na₂O | 1.5 | 0.5 | 1 | 0.5 | 0.5 | 0.5 | 0.5 |
| P₂O₅ | 4 | 6 | 4.5 | 3 | 3 | 3 | 3 |
| ZrO₂ | 9 | 7 | 7 | 7 | 7 | 8 | 7 |
| K₂O | 0 | 0.5 | 0 | 0 | 0 | 0 | 0 |
| ZnO | 0 | 0 | 0 | 0 | 0 | 0 | 0 |
| MgO | 0 | 0 | 0.5 | 0 | 0 | 0 | 0 |
| CaO | 0 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 0 | 0 | 0 | 0 | 0 |
| TiO₂ | 0 | 0 | 0 | 0 | 0 | 0 | 0 |
| Y₂O₃ | 0 | 0 | 0 | 0 | 0 | 0 | 0 |
| Sb₂O₃ | 0.5 | 0 | 0 | 0 | 0 | 0 | 0.5 |
| Total | 100 | 100 | 100 | 100 | 100 | 100 | 100 |
| Al₂O₃/ (Li₂O+ZrO₂+P₂O₅) | 0.04 | 0.08 | 0.08 | 0.02 | 0.02 | 0.02 | 0.02 |
| (Li₂O+ZrO₂) /SiO₂ | 0.33 | 0.28 | 0.28 | 0.32 | 0.3 | 0.28 | 0.26 |
| (MgO+ZnO) /ZrO₂ | 0 | 0 | 0.07 | 0 | 0 | 0 | 0 |
| (Li₂O+Al₂O₃) /ZrO₂ | 1.67 | 2.14 | 2.14 | 2.36 | 2.21 | 1.69 | 1.86 |
| Al₂O_{3/}Li₂O | 0.07 | 0.15 | 0.15 | 0.03 | 0.03 | 0.04 | 0.04 |
| Li₂O/ (ZrO₂+P₂O₅) | 1.08 | 1 | 1.13 | 1.6 | 1.5 | 1.18 | 1.25 |
| P₂O₅+ZrO₂ | 13 | 13 | 11.5 | 10 | 10 | 11 | 10 |
| SiO₂/ZrO₂ | 7.78 | 10.14 | 10.29 | 10.43 | 10.57 | 9.38 | 10.86 |
| Al₂O₃/ (P₂O₅+ZrO₂) | 0.08 | 0.15 | 0.17 | 0.05 | 0.05 | 0.05 | 0.05 |
| SiO₂/ (P₂O₅+ZrO₂) | 5.38 | 5.46 | 6.26 | 7.3 | 7.4 | 6.82 | 7.6 |
| (ZrO₂+Li₂O) /Al₂O₃ | 23.0 | 10.0 | 10.0 | 46.0 | 44.0 | 42.0 | 39.0 |
| (SiO₂+Al₂O₃ ) /ZrO₂ | 7.89 | 10.43 | 10.57 | 10.50 | 10.64 | 9.44 | 10.93 |
| Crystal phase | LM, LD | LM, LD, LP | LM, LD | LM, LD | LM, LD | LM, LD | LM, LD |
| Refractive index | 1.5589 | 1.5534 | 1.5641 | 1.5525 | 1.5558 | 1.5588 | 1.5555 |
| Coefficient of thermal expansion (×10⁻⁷/K) | 80 | 83 | 85 | 82 | 85 | 82 | 88 |
| Body drop height (mm) | 2000 | 2000 | 2000 | 2000 | 2000 | 2000 | 2500 |
| Crystallinity (%) | 75 | 78 | 73 | 80 | 73 | 75 | 78 |
| Grain size (nm) | 25 | 25 | 28 | 25 | 25 | 25 | 25 |
| Vickers hardness (kgf/mm²) | 693 | 697 | 690 | 685 | 695 | 688 | 699 |
| Haze (%) | 0.11 | 0.13 | 0.14 | 0.1 | 0.11 | 0.13 | 0.12 |
| B value | 0.55 | 0.65 | 0.63 | 0.58 | 0.67 | 0.65 | 0.6 |
| Average light transmission rate of 400-800nm (%) | 91 | 91 | 91 | 91 | 91 | 91 | 91 |
| Light transmission rate at 550nm (%) | 92 | 92 | 92 | 92 | 92 | 92 | 92 |
| Dielectric constant (test frequency 6.701GHz) | 6.7 | 6.6 | 6.6 | 6.8 | 6.5 | 6.1 | 6.1 |
| Dielectric loss (test frequency 6.701GHz) | 0.0065 | 0.0047 | 0.005 | 0.007 | 0.0068 | 0.0064 | 0.0065 |
| Surface resistance at room temperature | 4×10¹² | 7×10¹² | 5×10¹² | 0.7×10¹² | 0.9×10¹² | 8×10¹² | 13×10¹² |
| (Ω•cm) | | | | | | | |

Abbreviations: "LM" for lithium monosilicate, "LS" for lithium disilicate and "LP" for lithium phosphate.

**Table 8**

| Components (wt%) | 8# | 9# | 10# | 11# | 12# | 13# | 14# |
|---|---|---|---|---|---|---|---|
| SiO₂ | 70.5 | 71.5 | 72.5 | 73.5 | 74.5 | 75.5 | 68 |
| Al₂O₃ | 0.5 | 0.5 | 0.5 | 1.5 | 0.5 | 0.5 | 1.5 |
| Li₂O | 18.5 | 12.5 | 12.5 | 13 | 13 | 13 | 20 |
| Na₂O | 0.5 | 0.5 | 0.5 | 0.5 | 1 | 0.5 | 0.5 |
| P₂O₅ | 3 | 3 | 3 | 4 | 4 | 3 | 4 |
| ZrO₂ | 7 | 12 | 10 | 7 | 7 | 7 | 6 |
| K₂O | 0 | 0 | 0 | 0 | 0 | 0 | 0 |
| ZnO | 0 | 0 | 0 | 0 | 0 | 0 | 0 |
| MgO | 0 | 0 | 0 | 0.5 | 0 | 0 | 0 |
| CaO | 0 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 0 | 0 | 0 | 0 | 0 |
| TiO₂ | 0 | 0 | 0 | 0 | 0 | 0 | 0 |
| Y₂O₃ | 0 | 0 | 0.5 | 0 | 0 | 0 | 0 |
| Sb₂O₃ | 0 | 0 | 0.5 | 0 | 0 | 0.5 | 0 |
| Total | 100 | 100 | 100 | 100 | 100 | 100 | 100 |
| Al₂O₃/ (Li₂O+ZrO₂+P₂ O₅) | 0.02 | 0.02 | 0.02 | 0.06 | 0.02 | 0.02 | 0.05 |
| (Li₂O+ZrO₂) /SiO₂ | 0.36 | 0.34 | 0.31 | 0.27 | 0.27 | 0.26 | 0.38 |
| (MgO+ZnO) /ZrO₂ | 0 | 0 | 0 | 0.07 | 0 | 0 | 0 |
| (Li₂O+Al₂O₃) | 2.71 | 1.08 | 1.3 | 2.07 | 1.93 | 1.93 | 3.58 |
| /ZrO₂ | | | | | | | |
| Al₂O_{3/}Li₂O | 0.03 | 0.04 | 0.04 | 0.12 | 0.04 | 0.04 | 0.08 |
| Li₂O/ (ZrO₂+P₂O₅) | 1.85 | 0.83 | 0.96 | 1.18 | 1.18 | 1.3 | 2 |
| P₂O₅+ZrO₂ | 10 | 15 | 13 | 11 | 11 | 10 | 10 |
| SiO₂/ZrO₂ | 10.07 | 5.96 | 7.25 | 10.5 | 10.64 | 10.79 | 11.33 |
| Al₂O₃/ (P₂O₅+ZrO₂) | 0.05 | 0.03 | 0.04 | 0.14 | 0.05 | 0.05 | 0.15 |
| SiO₂/ (P₂O₅+ZrO₂) | 7.05 | 4.77 | 5.58 | 6.68 | 6.77 | 7.55 | 6.8 |
| (ZrO₂+Li₂O) /Al₂O₃ | 51.0 | 49.0 | 45.0 | 13.33 | 40.0 | 40.0 | 17.33 |
| (SiO₂+Al₂O₃) /ZrO₂ | 10.14 | 6.00 | 7.30 | 10.71 | 10.71 | 10.86 | 11.58 |
| Crystal phase | LM, LD | LM, LD | LM, LD | LM, LD | LM, LD | LM, LD | LM, LD |
| Refractive index | 1.5566 | 1.5578 | 1.5535 | 1.5525 | 1.5549 | 1.5578 | 1.5538 |
| Coefficient of thermal expansion (×10⁻⁷/K) | 82 | 88 | 82 | 86 | 89 | 85 | 89 |
| Body drop height (mm) | 2000 | 2000 | 2000 | 2000 | 2500 | 2200 | 2000 |
| Crystallinity (%) | 76 | 73 | 75 | 74 | 77 | 72 | 71 |
| Grain size (nm) | 28 | 25 | 25 | 25 | 27 | 25 | 25 |
| Vickers hardness (kgf/mm²) | 703 | 702 | 703 | 700 | 695 | 693 | 685 |
| Haze (%) | 0.11 | 0.12 | 0.12 | 0.12 | 0.11 | 0.13 | 0.11 |
| \| B \| value | 0.62 | 0.68 | 0.63 | 0.58 | 0.54 | 0.57 | 0.68 |
| Average light | 91 | 91 | 91 | 91 | 91 | 91 | 91 |
| transmission rate of 400-800nm (%) | | | | | | | |
| Light transmission rate at 550nm (%) | 92 | 92 | 92 | 92 | 92 | 92 | 92 |
| Dielectric constant (test frequency 6.701GHz) | 7 | 6 | 6 | 6.5 | 6.1 | 6.1 | 7.3 |
| Dielectric loss (test frequency 6.701GHz) | 0.0073 | 0.0064 | 0.0066 | 0.0047 | 0.0063 | 0.0068 | 0.0063 |
| Surface resistance at room temperature (Ω•cm) | 0.9×10¹² | 11×10¹² | 12×10¹² | 9×10¹² | 7×l0¹² | 8×10¹² | 0.6×10¹² |

Abbreviations: "LM" for lithium monosilicate and "LS" for lithium disilicate.

**Table 9**

| Components (wt%) | 15# | 16# | 17# | 18# | 19# | 20# | 21# |
|---|---|---|---|---|---|---|---|
| SiO₂ | 68.5 | 69 | 69.5 | 76.5 | 77 | 77.5 | 78 |
| Al₂O₃ | 1.5 | 3 | 4.5 | 0.5 | 0.5 | 1.5 | 0.5 |
| Li₂O | 18 | 16 | 14 | 12.5 | 12.5 | 12.5 | 12.5 |
| Na₂O | 0 | 0 | 0 | 0 | 0 | 0 | 0.5 |
| P₂O₅ | 6 | 6 | 6 | 2.5 | 2.5 | 2.5 | 2.5 |
| ZrO₂ | 6 | 6 | 6 | 8 | 7.5 | 6 | 6 |
| K₂O | 0 | 0 | 0 | 0 | 0 | 0 | 0 |
| ZnO | 0 | 0 | 0 | 0 | 0 | 0 | 0 |
| MgO | 0 | 0 | 0 | 0 | 0 | 0 | 0 |
| CaO | 0 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 0 | 0 | 0 | 0 | 0 |
| TiO₂ | 0 | 0 | 0 | 0 | 0 | 0 | 0 |
| Y₂O₃ | 0 | 0 | 0 | 0 | 0 | 0 | 0 |
| Sb₂O₃ | 0 | 0 | 0 | 0 | 0 | 0 | 0 |
| Total | 100 | 100 | 100 | 100 | 100 | 100 | 100 |
| Al₂O₃/ (Li₂O+ZrO₂+P₂O₅) | 0.05 | 0.11 | 0.17 | 0.02 | 0.02 | 0.07 | 0.02 |
| Li₂O+ZrO₂) /SiO₂ | 0.35 | 0.32 | 0.29 | 0.27 | 0.26 | 0.24 | 0.24 |
| (MgO+ZnO) /ZrO₂ | 0 | 0 | 0 | 0 | 0 | 0 | 0 |
| (Li₂O+Al₂O₃) /ZrO₂ | 3.25 | 3.17 | 3.08 | 1.63 | 1.73 | 2.33 | 2.17 |
| Al₂O₃/Li₂O | 0.08 | 0.19 | 0.32 | 0.04 | 0.04 | 0.12 | 0.04 |
| Li₂O/ (ZrO₂+P₂O₅) | 1.5 | 1.33 | 1.17 | 1.19 | 1.25 | 1.47 | 1.47 |
| P₂O₅+ZrO₂ | 12 | 12 | 12 | 10.5 | 10 | 8.5 | 8.5 |
| SiO₂/ZrO₂ | 11.42 | 11.5 | 11.58 | 9.56 | 10.27 | 12.92 | 13.0 |
| Al₂O₃/ (P₂O₅+ZrO₂) | 0.13 | 0.25 | 0.38 | 0.05 | 0.05 | 0.18 | 0.06 |
| SiO₂/ (P₂O₅+ZrO₂) | 5.71 | 5.75 | 5.79 | 7.29 | 7.70 | 9.12 | 9.18 |
| (ZrO₂+Li₂O) /Al₂O₃ | 16.0 | 7.33 | 4.44 | 41.0 | 40.0 | 12.33 | 37.0 |
| (SiO₂+Al₂O₃) /ZrO₂ | 11.67 | 12.0 | 12.33 | 9.63 | 10.33 | 13.17 | 13.08 |
| Crystal phase | LM, LD, LP | LM, LD, LP | LM, LD, LP | LM, LD | LM, LD | LM, LD | LM, LD |
| Refractive index | 1.5522 | 1.5526 | 1.555 | 1.5525 | 1.561 | 1.5612 | 1.5605 |
| Coefficient of thermal expansion (×10⁻⁷/K) | 90 | 80 | 83 | 75 | 76 | 78 | 75 |
| Body drop height | 2000 | 2000 | 2000 | 2100 | 2200 | 2100 | 2300 |
| (mm) | | | | | | | |
| Crystallinity (%) | 73 | 75 | 63 | 71 | 75 | 73 | 78 |
| Grain size (nm) | 29 | 29 | 35 | 29 | 29 | 25 | 26 |
| Vickers hardness (kgf/mm²) | 695 | 700 | 685 | 685 | 685 | 695 | 685 |
| Haze (%) | 0.12 | 0.12 | 0.16 | 0.11 | 0.12 | 0.12 | 0.12 |
| \| B \| value | 0.63 | 0.68 | 0.65 | 0.57 | 0.63 | 0.72 | 0.75 |
| Average light transmission rate of 400-800nm (%) | 91 | 91 | 88 | 91 | 91 | 91 | 91 |
| Light transmission rate at 550nm (%) | 92 | 92 | 92 | 92 | 92 | 92 | 92 |
| Dielectric constant (test frequency 6.701GHz) | 7 | 6.8 | 6.4 | 6 | 6 | 6.5 | 6 |
| Dielectric loss (test frequency 6.701GHz) | 0.0062 | 0.006 | 0.007 | 0.0063 | 0.0065 | 0.0047 | 0.0067 |
| Surface resistance at room temperature (Ω•cm) | 0.7×10¹² | 3×10¹² | 7×10¹² | 10×10¹² | 11×10¹² | 12×10¹² | 9×10¹² |

Abbreviations: "LM" for lithium monosilicate, "LS" for lithium disilicate and "LP" for lithium phosphate.

**Table 10**

| Components (wt%) | 22# | 23# | 24# | 25# | 26# | 27# | 28# |
|---|---|---|---|---|---|---|---|
| SiO₂ | 65 | 65.5 | 66 | 66.5 | 67 | 67.5 | 78.5 |
| Al₂O₃ | 0 | 0.5 | 0 | 0 | 4.5 | 1 | 0 |
| Li₂O | 25 | 15 | 15 | 15 | 15 | 15 | 10 |
| Na₂O | 0 | 1.5 | 0 | 6 | 0.5 | 0.5 | 0 |
| P₂O₅ | 3 | 2 | 8 | 2 | 4 | 4 | 2 |
| ZrO₂ | 7 | 15 | 6 | 5.5 | 7 | 7 | 5 |
| K₂O | 0 | 0.5 | 0 | 0 | 0 | 0 | 0 |
| ZnO | 0 | 0 | 0 | 0 | 0 | 0 | 0 |
| MgO | 0 | 0 | 0 | 0 | 0 | 0 | 0 |
| CaO | 0 | 0 | 0 | 0 | 0 | 0 | 0 |
| SrO | 0 | 0 | 5 | 0 | 0 | 0 | 0 |
| BaO | 0 | 0 | 0 | 5 | 0 | 0 | 0 |
| B₂O₃ | 0 | 0 | 0 | 0 | 2 | 0 | 0 |
| TiO₂ | 0 | 0 | 0 | 0 | 0 | 5 | 0 |
| Y₂O₃ | 0 | 0 | 0 | 0 | 0 | 0 | 4.5 |
| Sb₂O₃ | 0 | 0 | 0 | 0 | 0 | 0 | 0 |
| Total | 100 | 100 | 100 | 100 | 100 | 100 | 100 |
| Al₂O₃/ (Li₂O+ZrO₂+P₂O₅) | 0 | 0.02 | 0 | 0 | 0.17 | 0.04 | 0 |
| (Li₂O+ZrO₂) /SiO₂ | 0.49 | 0.46 | 0.32 | 0.31 | 0.33 | 0.33 | 0.19 |
| (MgO+ZnO) /ZrO₂ | 0 | 0 | 0 | 0 | 0 | 0 | 0 |
| (Li₂O+Al₂O₃) /ZrO₂ | 3.57 | 1.03 | 2.5 | 2.73 | 2.79 | 2.29 | 2 |
| Al₂O_{3/}Li₂O | 0 | 0.03 | 0 | 0 | 0.3 | 0.07 | 0 |
| Li₂O/ (ZrO₂+P₂O₅) | 2.5 | 0.88 | 1.07 | 2 | 1.36 | 1.36 | 1.43 |
| P₂O₅+ZrO₂ | 10 | 17 | 14 | 7.5 | 11 | 11 | 7 |
| SiO₂/ZrO₂ | 9.29 | 4.37 | 11.0 | 12.09 | 9.57 | 9.64 | 15.7 |
| Al₂O₃/ (P₂O₅+ZrO₂) | 0 | 0.03 | 0 | 0 | 0.41 | 0.09 | 0 |
| SiO₂/ (P₂O₅+ZrO₂) | 6.50 | 3.85 | 4.71 | 8.87 | 6.09 | 6.14 | 11.21 |
| (ZrO₂+Li₂O) /Al₂O₃ | - | 60.0 | - | - | 4.89 | 22.0 | - |
| (SiO₂+Al₂O₃) /ZrO₂ | 9.29 | 4.4 | 11.0 | 12.09 | 10.21 | 9.79 | 15.7 |
| Crystal phase | LM, LD | LM, LD | LM, LD, LP | LM, LD | LM, LD | LM, LD | LM, LD |
| Refractive index | 1.5525 | 1.5606 | 1.5559 | 1.5633 | 1.5549 | 1.5589 | 1.5642 |
| Coefficient of thermal expansion (×10⁻⁷/K) | 75 | 76 | 77 | 77 | 83 | 85 | 86 |
| Body drop height (mm) | 1900 | 1700 | 1900 | 1900 | 1900 | 2000 | 1800 |
| Crystallinity (%) | 71 | 75 | 73 | 72 | 78 | 76 | 74 |
| Grain size (nm) | 25 | 25 | 28 | 25 | 29 | 25 | 27 |
| Vickers hardness (kgf/mm²) | 685 | 680 | 680 | 680 | 680 | 680 | 685 |
| Haze (%) | 0.14 | 0.14 | 0.14 | 0.14 | 0.18 | 0.14 | 0.14 |
| \| B \| value | 0.78 | 0.79 | 0.56 | 0.65 | 0.68 | 0.67 | 0.84 |
| Average light transmission rate of 400-800nm (%) | 89 | 90 | 89 | 89 | 88 | 91 | 89 |
| Light transmission rate at 550nm (%) | 92 | 92 | 92 | 92 | 92 | 92 | 92 |
| Dielectric constant (test frequency 6.701GHz) | 7.5 | 6.6 | 6.6 | 6.6 | 7.1 | 7 | 5.8 |
| Dielectric loss (test frequency 6.701GHz) | 0.0095 | 0.0082 | 0.0087 | 0.0088 | 0.0051 | 0.0052 | 0.0072 |
| Surface resistance at room temperature (Ω•cm) | 0.5×10¹² | 3×10¹² | 3×10¹² | 4×10¹² | 3×10¹² | 4×10¹² | 13×10¹² |

Abbreviations: "LM" for lithium monosilicate, "LS" for lithium disilicate and "LP" for lithium phosphate.

**Table 11**

| Components (wt%) | 29# | 30# | 31# | 32# | 33# | 34# | 35# |
|---|---|---|---|---|---|---|---|
| SiO₂ | 79 | 78.5 | 78 | 60 | 60.5 | 61 | 61.5 |
| Al₂O₃ | 0 | 0 | 2 | 7.5 | 4.5 | 6 | 6.5 |
| Li₂O | 10 | 10 | 10 | 14 | 13 | 13 | 13 |
| Na₂O | 0 | 0 | 0 | 3 | 2.5 | 2 | 2 |
| P₂O₅ | 2 | 2 | 2 | 3 | 2.5 | 3.5 | 3 |
| ZrO₂ | 7 | 7 | 5 | 7 | 10 | 11 | 12 |
| K₂O | 0 | 0 | 0 | 0 | 0.5 | 1 | 0 |
| ZnO | 2 | 0 | 2 | 0 | 0 | 0 | 0.5 |
| MgO | 0 | 2 | 1 | 0 | 0.5 | 0 | 0.5 |
| CaO | 0 | 0 | 0 | 0 | 0 | 0 | 0 |
| SrO | 0 | 0 | 0 | 0 | 0 | 1 | 0 |
| BaO | 0 | 0 | 0 | 0 | 0 | 0 | 0.5 |
| B₂O₃ | 0 | 0 | 0 | 0 | 0.5 | 0 | 0 |
| TiO₂ | 0 | 0 | 0 | 0 | 0 | 1 | 0 |
| Y₂O₃ | 0 | 0 | 0 | 5 | 5 | 0 | 0 |
| Sb₂O₃ | 0 | 0.5 | 0 | 0.5 | 0.5 | 0.5 | 0.5 |
| Total | 100 | 100 | 100 | 100 | 100 | 100 | 100 |
| Al₂O₃/ (Li₂O+ZrO₂+P₂O₅) | 0 | 0 | 0.12 | 0.31 | 0.18 | 0.22 | 0.23 |
| (Li₂O+ZrO₂) /SiO₂ | 0.22 | 0.22 | 0.19 | 0.35 | 0.38 | 0.39 | 0.41 |
| (MgO+ZnO) /ZrO₂ | 0.29 | 0.29 | 0.6 | 0 | 0.05 | 0 | 0.08 |
| (Li₂O+Al₂O₃) /ZrO₂ | 1.43 | 1.43 | 2.4 | 3.07 | 1.75 | 1.73 | 1.63 |
| Al₂O₃/Li₂O | 0 | 0 | 0.2 | 0.54 | 0.35 | 0.46 | 0.5 |
| Li₂O/ (ZrO₂+P₂O₅) | 1.11 | 1.11 | 1.43 | 1.4 | 1.04 | 0.9 | 0.87 |
| P₂O₅+ZrO₂ | 9 | 9 | 7 | 10 | 12.5 | 14.5 | 15 |
| SiO₂/ZrO₂ | 11.29 | 11.21 | 15.60 | 8.57 | 6.05 | 5.55 | 5.13 |
| Al₂O₃/ (P₂O₅+ZrO₂) | 0 | 0 | 0.29 | 0.75 | 0.36 | 0.41 | 0.43 |
| SiO₂/ (P₂O₅+ZrO₂) | 8.78 | 8.72 | 11.14 | 6.00 | 4.84 | 4.21 | 4.1 |
| (ZrO₂+Li₂O) /Al₂O₃ | - | - | 7.50 | 2.8 | 5.11 | 4.0 | 3.85 |
| (SiO₂+Al₂O₃) /ZrO₂ | 11.29 | 11.21 | 16.0 | 9.64 | 6.5 | 6.09 | 5.67 |
| Crystal phase | LM, LD | LM, LD | LM, LD | LM, LD | LD | LM, LD | LM, LD |
| Refractive index | 1.5579 | 1.5532 | 1.5567 | 1.5576 | 1.5571 | 1.5592 | 1.5618 |
| Coefficient of thermal expansion (×10⁻⁷/K) | 88 | 82 | 86 | 79 | 78 | 75 | 75 |
| Body drop height (mm) | 1900 | 1800 | 1900 | 2000 | 2000 | 2000 | 2000 |
| Crystallinity (%) | 77 | 72 | 71 | 80 | 85 | 83 | 79 |
| Grain size (nm) | 27 | 29 | 26 | 25 | 25 | 25 | 27 |
| Vickers hardness (kgf/mm²) | 644 | 649 | 648 | 704 | 722 | 725 | 705 |
| Haze (%) | 0.14 | 0.14 | 0.14 | 0.1 | 0.12 | 0.9 | 0.13 |
| \| B \| value | 0.76 | 0.73 | 0.75 | 0.7 | 0.34 | 0.6 | 0.66 |
| Average light transmission rate of 400-800nm (%) | 89 | 89 | 89 | 89 | 91 | 91 | 91 |
| Light transmission rate at 550nm (%) | 92 | 92 | 92 | 92 | 92 | 92 | 92 |
| Dielectric constant (test frequency 6.701GHz) | 5.8 | 5.8 | 6.3 | 6.7 | 6.8 | 6.7 | 6.5 |
| Dielectric loss (test frequency 6.701GHz) | 0.0076 | 0.0071 | 0.0044 | 0.0055 | 0.0047 | 0.0048 | 0.005 |
| Surface resistance | 14×10¹² | 12×10¹² | 11×10¹² | 8×10¹² | 5×10¹² | 3×10¹² | 4×10¹² |
| at room temperature (Ω•cm) | | | | | | | |

Abbreviations: "LM" for lithium monosilicate and "LS" for lithium disilicate.

**Table 12**

| Components (wt%) | 36# | 37# | 38# | 39# | 40# | 41# | 42# |
|---|---|---|---|---|---|---|---|
| SiO₂ | 62 | 62.5 | 63 | 63.5 | 64 | 64.5 | 65.5 |
| Al₂O₃ | 9.3 | 6.5 | 6 | 5.5 | 6.5 | 4.5 | 5.5 |
| Li₂O | 13.7 | 12 | 13 | 13 | 12 | 14 | 13.5 |
| Na₂O | 1 | 2 | 2 | 1 | 2 | 2.5 | 1.5 |
| P₂O₅ | 2.5 | 3 | 2.5 | 3.5 | 4 | 4 | 3.5 |
| ZrO₂ | 10 | 13 | 11 | 12 | 9 | 10 | 9.5 |
| K₂O | 0 | 0 | 0 | 0 | 1 | 0 | 0.5 |
| ZnO | 0 | 0 | 1 | 0 | 0 | 0 | 0 |
| MgO | 0 | 0.5 | 0 | 0 | 0 | 0 | 0 |
| CaO | 1 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 1 | 0 | 0.5 | 0 | 0 |
| TiO₂ | 0 | 0 | 0 | 0 | 0 | 0 | 0 |
| Y₂O₃ | 0 | 0 | 0 | 1 | 0.5 | 0 | 0 |
| Sb₂O₃ | 0.5 | 0.5 | 0.5 | 0.5 | 0.5 | 0.5 | 0.5 |
| Total | 100 | 100 | 100 | 100 | 100 | 100 | 100 |
| Al₂O₃/ (Li₂O+ZrO₂+P₂O₅) | 0.35 | 0.23 | 0.23 | 0.19 | 0.26 | 0.16 | 0.21 |
| (Li₂O+ZrO₂) /SiO₂ | 0.38 | 0.40 | 0.38 | 0.39 | 0.33 | 0.37 | 0.35 |
| (MgO+ZnO) /ZrO₂ | 0 | 0.04 | 0.09 | 0 | 0 | 0 | 0 |
| (Li₂O+Al₂O₃) /ZrO₂ | 2.3 | 1.42 | 1.73 | 1.54 | 2.06 | 1.85 | 2.0 |
| Al₂O₃/Li₂O | 0.68 | 0.54 | 0.46 | 0.42 | 0.54 | 0.32 | 0.41 |
| Li₂O/ (ZrO₂+P₂O₅) | 1.1 | 0.75 | 0.96 | 0.84 | 0.92 | 1.0 | 1.04 |
| P₂O₅+ZrO₂ | 12.5 | 16 | 13.5 | 15.5 | 13 | 14 | 13 |
| SiO₂/ZrO₂ | 6.2 | 4.81 | 5.73 | 5.29 | 7.11 | 6.45 | 6.89 |
| Al₂O₃/ (P₂O₅+ZrO₂) | 0.74 | 0.41 | 0.44 | 0.35 | 0.5 | 0.32 | 0.42 |
| SiO₂/ (P₂O₅+ZrO₂) | 4.96 | 3.91 | 4.67 | 4.1 | 4.92 | 4.61 | 5.04 |
| (ZrO₂+Li₂O) /Al₂O₃ | 2.55 | 3.85 | 4.00 | 4.55 | 3.23 | 5.33 | 4.18 |
| (SiO₂+Al₂O₃) /ZrO₂ | 7.13 | 5.31 | 6.27 | 5.75 | 7.83 | 6.9 | 7.47 |
| Crystal phase | LM, LD | LD | LM, LD | LD | LD | LD | LD |
| Refractive index | 1.5619 | 1.5566 | 1.5569 | 1.5594 | 1.5602 | 1.5603 | 1.5618 |
| Coefficient of thermal expansion (×10⁻⁷/K) | 71 | 72 | 73 | 75 | 78 | 82 | 72 |
| Body drop height (mm) | 2000 | 2000 | 2000 | 2000 | 2000 | 2000 | 2000 |
| Crystallinity (%) | 76 | 85 | 84 | 82 | 78 | 81 | 80 |
| Grain size (nm) | 25 | 25 | 25 | 29 | 25 | 25 | 25 |
| Vickers hardness (kgf/mm²) | 741 | 756 | 725 | 747 | 733 | 745 | 740 |
| Haze (%) | 0.12 | 0.1 | 0.9 | 0.12 | 0.1 | 0.9 | 0.9 |
| \| B \| value | 0.65 | 0.57 | 0.63 | 0.63 | 0.65 | 0.42 | 0.54 |
| Average light transmission rate of 400∼800nm (%) | 89 | 90 | 91 | 91 | 91 | 91 | 91 |
| Light transmission rate at 550nm (%) | 92 | 92 | 92 | 92 | 92 | 92 | 92 |
| Dielectric constant (test frequency 6.701GHz) | 6.4 | 6.7 | 6.8 | 6.8 | 6.6 | 6.9 | 6.8 |
| Dielectric loss (test frequency 6.701GHz) | 0.0051 | 0.0048 | 0.0049 | 0.0052 | 0.0045 | 0.0054 | 0.0053 |
| Surface resistance at room temperature | 8×10¹² | 6×10¹² | 7×10¹² | 8×10¹² | 5×10¹² | 7×10¹² | 9×10¹² |
| (Ω•cm) | | | | | | | |

Abbreviations: "LM" for lithium monosilicate and "LS" for lithium disilicate.

### < Microcrystalline glass products embodiment >

In this embodiment, the microcrystalline glass products having the compositions shown in Tables 13 to 18 were obtained using the manufacturing method of the microcrystalline glass products described above. In addition, the characteristics of each microcrystalline glass product were measured by the test method described in the present invention, and the measurement results are expressed in Tables 13 to 18.

**Table 13**

| Components (wt%) | 1# | 2# | 3# | 4# | 5# | 6# | 7# |
|---|---|---|---|---|---|---|---|
| SiO₂ | 70 | 71 | 72 | 73 | 74 | 75 | 76 |
| Al₂O₃ | 1 | 2 | 2 | 0.5 | 0.5 | 0.5 | 0.5 |
| Li₂O | 14 | 13 | 13 | 16 | 15 | 13 | 12.5 |
| Na₂O | 1.5 | 0.5 | 1 | 0.5 | 0.5 | 0.5 | 0.5 |
| P₂O₅ | 4 | 6 | 4.5 | 3 | 3 | 3 | 3 |
| ZrO₂ | 9 | 7 | 7 | 7 | 7 | 8 | 7 |
| K₂O | 0 | 0.5 | 0 | 0 | 0 | 0 | 0 |
| ZnO | 0 | 0 | 0 | 0 | 0 | 0 | 0 |
| MgO | 0 | 0 | 0.5 | 0 | 0 | 0 | 0 |
| CaO | 0 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 0 | 0 | 0 | 0 | 0 |
| TiO₂ | 0 | 0 | 0 | 0 | 0 | 0 | 0 |
| Y₂O₃ | 0 | 0 | 0 | 0 | 0 | 0 | 0 |
| Sb₂O₃ | 0.5 | 0 | 0 | 0 | 0 | 0 | 0.5 |
| Total | 100 | 100 | 100 | 100 | 100 | 100 | 100 |
| Al₂O₃/ (Li₂O+ZrO₂+P₂O₅) | 0.04 | 0.08 | 0.08 | 0.02 | 0.02 | 0.02 | 0.02 |
| (Li₂O+ZrO₂) /SiO₂ | 0.33 | 0.28 | 0.28 | 0.32 | 0.3 | 0.28 | 0.26 |
| (MgO+ZnO) | 0 | 0 | 0.07 | 0 | 0 | 0 | 0 |
| /ZrO₂ | | | | | | | |
| (Li₂O+Al₂O₃) /ZrO₂ | 1.67 | 2.14 | 2.14 | 2.36 | 2.21 | 1.69 | 1.86 |
| Al₂O₃/Li₂O | 0.07 | 0.15 | 0.15 | 0.03 | 0.03 | 0.04 | 0.04 |
| Li₂O/ (ZrO₂+P₂O₅) | 1.08 | 1 | 1.13 | 1.6 | 1.5 | 1.18 | 1.25 |
| P₂O₅+ZrO₂ | 13 | 13 | 11.5 | 10 | 10 | 11 | 10 |
| SiO₂/ZrO₂ | 7.78 | 10.14 | 10.29 | 10.43 | 10.57 | 9.38 | 10.86 |
| Al₂O₃/ (P₂O₅+ZrO₂) | 0.08 | 0.15 | 0.17 | 0.05 | 0.05 | 0.05 | 0.05 |
| SiO₂/ (P₂O₅+ZrO₂) | 5.38 | 5.46 | 6.26 | 7.3 | 7.4 | 6.82 | 7.6 |
| (ZrO₂+Li₂O) /Al₂O₃ | 23.0 | 10.0 | 10.0 | 46.0 | 44.0 | 42.0 | 39.0 |
| (SiO₂+Al₂O₃ ) /ZrO₂ | 7.89 | 10.43 | 10.57 | 10.50 | 10.64 | 9.44 | 10.93 |
| Crystal phase | LM, LD | LM, LD, LP | LM, LD | LM, LD | LM, LD | LM, LD | LM, LD |
| Crystallinity (%) | 75 | 78 | 73 | 80 | 73 | 75 | 78 |
| Ion exchange layer depth (µm) | 78 | 68 | 79 | 68 | 75 | 65 | 75 |
| Drop ball test height (mm) | 1700 | 1700 | 1800 | 1700 | 1700 | 1700 | 1800 |
| Fracture toughness (MPa•m^{1/2}) | 1.6 | 1.7 | 1.8 | 1.7 | 1.6 | 1.9 | 1.7 |
| Four-point bending strength (MPa) | 725 | 738 | 726 | 725 | 743 | 755 | 755 |
| Grain size (nm) | 25 | 25 | 28 | 25 | 25 | 25 | 25 |
| Vickers hardness (kgf/mm²) | 836 | 823 | 830 | 791 | 786 | 787 | 791 |
| Haze (%) | 0.11 | 0.13 | 0.14 | 0.1 | 0.11 | 0.13 | 0.12 |
| \| B \| value | 0.55 | 0.65 | 0.63 | 0.58 | 0.67 | 0.65 | 0.6 |
| Average light transmission rate of | 91 | 91 | 91 | 91 | 91 | 91 | 91 |
| 400∼800nm (%) | | | | | | | |
| Light transmission rate at 550nm (%) | 92 | 92 | 92 | 92 | 92 | 92 | 92 |
| Dielectric constant (test frequency 6.701GHz) | 6.7 | 6.6 | 6.6 | 6.8 | 6.5 | 6.1 | 6.1 |
| Dielectric loss (test frequency 6.701GHz) | 0.0065 | 0.0047 | 0.005 | 0.007 | 0.0068 | 0.0064 | 0.0065 |

Abbreviations: "LM" for lithium monosilicate, "LS" for lithium disilicate and "LP" for lithium phosphate.

**Table 14**

| Components (wt%) | 8# | 9# | 10# | 11# | 12# | 13# | 14# |
|---|---|---|---|---|---|---|---|
| SiO₂ | 70.5 | 71.5 | 72.5 | 73.5 | 74.5 | 75.5 | 68 |
| Al₂O₃ | 0.5 | 0.5 | 0.5 | 1.5 | 0.5 | 0.5 | 1.5 |
| Li₂O | 18.5 | 12.5 | 12.5 | 13 | 13 | 13 | 20 |
| Na₂O | 0.5 | 0.5 | 0.5 | 0.5 | 1 | 0.5 | 0.5 |
| P₂O₅ | 3 | 3 | 3 | 4 | 4 | 3 | 4 |
| ZrO₂ | 7 | 12 | 10 | 7 | 7 | 7 | 6 |
| K₂O | 0 | 0 | 0 | 0 | 0 | 0 | 0 |
| ZnO | 0 | 0 | 0 | 0 | 0 | 0 | 0 |
| MgO | 0 | 0 | 0 | 0.5 | 0 | 0 | 0 |
| CaO | 0 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 0 | 0 | 0 | 0 | 0 |
| TiO₂ | 0 | 0 | 0 | 0 | 0 | 0 | 0 |
| Y₂O₃ | 0 | 0 | 0.5 | 0 | 0 | 0 | 0 |
| Sb₂O₃ | 0 | 0 | 0.5 | 0 | 0 | 0.5 | 0 |
| Total | 100 | 100 | 100 | 100 | 100 | 100 | 100 |
| Al₂O₃/ (Li₂O+ZrO₂+P₂O₅) | 0.02 | 0.02 | 0.02 | 0.06 | 0.02 | 0.02 | 0.05 |
| (Li₂O+ZrO₂) /SiO₂ | 0.36 | 0.34 | 0.31 | 0.27 | 0.27 | 0.26 | 0.38 |
| (MgO+ZnO) /ZrO₂ | 0 | 0 | 0 | 0.07 | 0 | 0 | 0 |
| (Li₂O+Al₂O₃) /ZrO₂ | 2.71 | 1.08 | 1.3 | 2.07 | 1.93 | 1.93 | 3.58 |
| Al₂O₃/Li₂O | 0.03 | 0.04 | 0.04 | 0.12 | 0.04 | 0.04 | 0.08 |
| Li₂O/ (ZrO₂+P₂O₅) | 1.85 | 0.83 | 0.96 | 1.18 | 1.18 | 1.3 | 2 |
| P₂O₅+ZrO₂ | 10 | 15 | 13 | 11 | 11 | 10 | 10 |
| SiO₂/ZrO₂ | 10.07 | 5.96 | 7.25 | 10.5 | 10.64 | 10.79 | 11.33 |
| Al₂O₃/ (P₂O₅+ZrO₂) | 0.05 | 0.03 | 0.04 | 0.14 | 0.05 | 0.05 | 0.15 |
| SiO₂/ (P₂O₅+ZrO₂) | 7.05 | 4.77 | 5.58 | 6.68 | 6.77 | 7.55 | 6.8 |
| (ZrO₂+Li₂O) /Al₂O₃ | 51.0 | 49.0 | 45.0 | 13.33 | 40.0 | 40.0 | 17.33 |
| (SiO₂+Al₂O₃) /ZrO₂ | 10.14 | 6.00 | 7.30 | 10.71 | 10.71 | 10.86 | 11.58 |
| Crystal phase | LM, LD | LM, LD | LM, LD | LM, LD | LM, LD | LM, LD | LM, LD |
| Crystallinity (%) | 76 | 73 | 75 | 74 | 77 | 72 | 71 |
| Ion exchange layer depth (µm) | 74 | 55 | 60 | 67 | 55 | 70 | 41 |
| Drop ball test height (mm) | 1700 | 1700 | 1700 | 1800 | 1700 | 1700 | 1700 |
| Fracture toughness (MPa•m^{1/2}) | 1.8 | 1.9 | 1.6 | 1.7 | 1.7 | 1.8 | 1.6 |
| Four-point bending strength (MPa) | 710 | 762 | 735 | 739 | 765 | 736 | 715 |
| Grain size (nm) | 28 | 25 | 25 | 25 | 27 | 25 | 25 |
| Vickers hardness (kgf/mm²) | 801 | 820 | 825 | 804 | 865 | 837 | 803 |
| Haze (%) | 0.11 | 0.12 | 0.12 | 0.12 | 0.11 | 0.13 | 0.11 |
| \| B \| value | 0.62 | 0.68 | 0.63 | 0.58 | 0.54 | 0.57 | 0.68 |
| Average light transmission rate of 400∼800nm (%) | 91 | 91 | 91 | 91 | 91 | 91 | 91 |
| Light transmission rate at 550nm (%) | 92 | 92 | 92 | 92 | 92 | 92 | 92 |
| Dielectric constant (test frequency 6.701GHz) | 7 | 6 | 6 | 6.5 | 6.1 | 6.1 | 7.3 |
| Dielectric loss (test frequency 6.701GHz) | 0.0073 | 0.0064 | 0.0066 | 0.0047 | 0.0063 | 0.0068 | 0.0063 |

Abbreviations: "LM" for lithium monosilicate and "LS" for lithium disilicate.

**Table 15**

| Components (wt%) | 15# | 16# | 17# | 18# | 19# | 20# | 21# |
|---|---|---|---|---|---|---|---|
| SiO₂ | 68.5 | 69 | 69.5 | 76.5 | 77 | 77.5 | 78 |
| Al₂O₃ | 1.5 | 3 | 4.5 | 0.5 | 0.5 | 1.5 | 0.5 |
| Li₂O | 18 | 16 | 14 | 12.5 | 12.5 | 12.5 | 12.5 |
| Na₂O | 0 | 0 | 0 | 0 | 0 | 0 | 0.5 |
| P₂O₅ | 6 | 6 | 6 | 2.5 | 2.5 | 2.5 | 2.5 |
| ZrO₂ | 6 | 6 | 6 | 8 | 7.5 | 6 | 6 |
| K₂O | 0 | 0 | 0 | 0 | 0 | 0 | 0 |
| ZnO | 0 | 0 | 0 | 0 | 0 | 0 | 0 |
| MgO | 0 | 0 | 0 | 0 | 0 | 0 | 0 |
| CaO | 0 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 0 | 0 | 0 | 0 | 0 |
| TiO₂ | 0 | 0 | 0 | 0 | 0 | 0 | 0 |
| Y₂O₃ | 0 | 0 | 0 | 0 | 0 | 0 | 0 |
| Sb₂O₃ | 0 | 0 | 0 | 0 | 0 | 0 | 0 |
| Total | 100 | 100 | 100 | 100 | 100 | 100 | 100 |
| Al₂O₃/ (Li₂O+ZrO₂+P₂O₅) | 0.05 | 0.11 | 0.17 | 0.02 | 0.02 | 0.07 | 0.02 |
| (Li₂O+ZrO₂) /SiO₂ | 0.35 | 0.32 | 0.29 | 0.27 | 0.26 | 0.24 | 0.24 |
| (MgO+ZnO) /ZrO₂ | 0 | 0 | 0 | 0 | 0 | 0 | 0 |
| Li₂O+Al₂O₃) /ZrO₂ | 3.25 | 3.17 | 3.08 | 1.63 | 1.73 | 2.33 | 2.17 |
| Al₂O₃/Li₂O | 0.08 | 0.19 | 0.32 | 0.04 | 0.04 | 0.12 | 0.04 |
| Li₂O/ (ZrO₂+P₂O₅) | 1.5 | 1.33 | 1.17 | 1.19 | 1.25 | 1.47 | 1.47 |
| P₂O₅+ZrO₂ | 12 | 12 | 12 | 10.5 | 10 | 8.5 | 8.5 |
| SiO₂/ZrO₂ | 11.42 | 11.5 | 11.58 | 9.56 | 10.27 | 12.92 | 13.0 |
| Al₂O₃/ (P₂O₅+ZrO₂) | 0.13 | 0.25 | 0.38 | 0.05 | 0.05 | 0.18 | 0.06 |
| SiO₂/ (P₂O₅+ZrO₂) | 5.71 | 5.75 | 5.79 | 7.29 | 7.70 | 9.12 | 9.18 |
| (ZrO₂+Li₂O) / Al₂O₃ | 16.0 | 7.33 | 4.44 | 41.0 | 40.0 | 12.33 | 37.0 |
| (SiO₂+Al₂O₃) /ZrO₂ | 11.67 | 12.0 | 12.33 | 9.63 | 10.33 | 13.17 | 13.08 |
| Crystal phase | LM, LD, LP | LM, LD, LP | LM, LD, LP | LM, LD | LM, LD | LM, LD | LM, LD |
| Crystallinity (%) | 73 | 75 | 63 | 71 | 75 | 73 | 78 |
| Ion exchange layer depth (µm) | 43 | 45 | 45 | 63 | 59 | 71 | 65 |
| Drop ball test height (mm) | 1700 | 1700 | 1700 | 1700 | 1700 | 1600 | 1600 |
| Fracture toughness (mPa•m^{1/2}) | 1.7 | 1.7 | 1.7 | 1.7 | 1.7 | 1.7 | 1.7 |
| Four-point bending strength (MPa) | 715 | 720 | 705 | 738 | 748 | 718 | 725 |
| Grain size (nm) | 29 | 29 | 35 | 29 | 29 | 25 | 26 |
| Vickers hardness (kgf/mm²) | 808 | 811 | 813 | 824 | 806 | 785 | 800 |
| Haze (%) | 0.12 | 0.12 | 0.16 | 0.11 | 0.12 | 0.12 | 0.12 |
| \| B \| value | 0.63 | 0.68 | 0.65 | 0.57 | 0.63 | 0.72 | 0.75 |
| Average light transmission rate of 400∼800nm (%) | 91 | 91 | 88 | 91 | 91 | 91 | 91 |
| Light transmission rate at 550nm (%) | 92 | 92 | 92 | 92 | 92 | 92 | 92 |
| Dielectric constant (test frequency 6.701GHz) | 7 | 6.8 | 6.4 | 6 | 6 | 6.5 | 6 |
| Dielectric loss (test frequency 6.701GHz) | 0.0062 | 0.006 | 0.007 | 0.0063 | 0.0065 | 0.0047 | 0.0067 |

Abbreviations: "LM" for lithium monosilicate, "LS" for lithium disilicate and "LP" for lithium phosphate.

**Table 16**

| Components (wt%) | 22# | 23# | 24# | 25# | 26# | 27# | 28# |
|---|---|---|---|---|---|---|---|
| SiO₂ | 65 | 65.5 | 66 | 66.5 | 67 | 67.5 | 78.5 |
| Al₂O₃ | 0 | 0.5 | 0 | 0 | 4.5 | 1 | 0 |
| Li₂O | 25 | 15 | 15 | 15 | 15 | 15 | 10 |
| Na₂O | 0 | 1.5 | 0 | 6 | 0.5 | 0.5 | 0 |
| P₂O₅ | 3 | 2 | 8 | 2 | 4 | 4 | 2 |
| ZrO₂ | 7 | 15 | 6 | 5.5 | 7 | 7 | 5 |
| K₂O | 0 | 0.5 | 0 | 0 | 0 | 0 | 0 |
| ZnO | 0 | 0 | 0 | 0 | 0 | 0 | 0 |
| MgO | 0 | 0 | 0 | 0 | 0 | 0 | 0 |
| CaO | 0 | 0 | 0 | 0 | 0 | 0 | 0 |
| SrO | 0 | 0 | 5 | 0 | 0 | 0 | 0 |
| BaO | 0 | 0 | 0 | 5 | 0 | 0 | 0 |
| B₂O₃ | 0 | 0 | 0 | 0 | 2 | 0 | 0 |
| TiO₂ | 0 | 0 | 0 | 0 | 0 | 5 | 0 |
| Y₂O₃ | 0 | 0 | 0 | 0 | 0 | 0 | 4.5 |
| Sb₂O₃ | 0 | 0 | 0 | 0 | 0 | 0 | 0 |
| Total | 100 | 100 | 100 | 100 | 100 | 100 | 100 |
| Al₂O₃/ (Li₂O+ZrO₂+P₂O₅) | 0 | 0.02 | 0 | 0 | 0.17 | 0.04 | 0 |
| (Li₂O+ZrO₂) /SiO₂ | 0.49 | 0.46 | 0.32 | 0.31 | 0.33 | 0.33 | 0.19 |
| (MgO+ZnO) /ZrO₂ | 0 | 0 | 0 | 0 | 0 | 0 | 0 |
| Li₂O+Al₂O₃) /ZrO₂ | 3.57 | 1.03 | 2.5 | 2.73 | 2.79 | 2.29 | 2 |
| Al₂O₃/Li₂O | 0 | 0.03 | 0 | 0 | 0.3 | 0.07 | 0 |
| Li₂O/ (ZrO₂+P₂O₅) | 2.5 | 0.88 | 1.07 | 2 | 1.36 | 1.36 | 1.43 |
| P₂O₅+ZrO₂ | 10 | 17 | 14 | 7.5 | 11 | 11 | 7 |
| SiO₂/ZrO₂ | 9.29 | 4.37 | 11.0 | 12.09 | 9.57 | 9.64 | 15.7 |
| Al₂O₃/ (P₂O₅+ZrO₂) | 0 | 0.03 | 0 | 0 | 0.41 | 0.09 | 0 |
| SiO₂/ (P₂O₅+ZrO₂) | 6.50 | 3.85 | 4.71 | 8.87 | 6.09 | 6.14 | 11.21 |
| (ZrO₂+Li₂O) / Al₂O₃ | - | 60.0 | - | - | 4.89 | 22.0 | - |
| (SiO₂+Al₂O₃) /ZrO₂ | 9.29 | 4.4 | 11.0 | 12.09 | 10.21 | 9.79 | 15.7 |
| Crystal phase | LM, LD | LM, LD | LM, LD, LP | LM, LD | LM, LD | LM, LD | LM, LD |
| Crystallinity (%) | 71 | 75 | 73 | 72 | 78 | 76 | 74 |
| Ion exchange layer depth (µm) | 42 | 41 | 63 | 47 | 53 | 58 | 63 |
| Drop ball test height (mm) | 1500 | 1500 | 1600 | 1600 | 1600 | 1700 | 1500 |
| Fracture toughness (mPa•m^{1/2}) | 1.1 | 1.6 | 1.7 | 1.6 | 1.6 | 1.7 | 1.7 |
| Four-point bending strength (MPa) | 705 | 725 | 735 | 745 | 755 | 735 | 748 |
| Grain size (nm) | 25 | 25 | 28 | 25 | 29 | 25 | 27 |
| Vickers hardness (kgf/mm²) | 805 | 795 | 816 | 811 | 805 | 804 | 798 |
| Haze (%) | 0.14 | 0.14 | 0.14 | 0.14 | 0.18 | 0.14 | 0.14 |
| \| B \| value | 0.78 | 0.79 | 0.56 | 0.65 | 0.68 | 0.67 | 0.84 |
| Average light transmission rate of 400∼800nm (%) | 89 | 90 | 89 | 89 | 88 | 91 | 89 |
| Light transmission rate at 550nm (%) | 92 | 92 | 92 | 92 | 92 | 92 | 92 |
| Dielectric constant (test frequency 6.701GHz) | 7.5 | 6.6 | 6.6 | 6.6 | 7.1 | 7 | 5.8 |
| Dielectric loss (test frequency 6.701GHz) | 0.0095 | 0.0082 | 0.0087 | 0.0088 | 0.0051 | 0.0052 | 0.0072 |

Abbreviations: "LM" for lithium monosilicate, "LS" for lithium disilicate and "LP" for lithium phosphate.

**Table 17**

| Components (wt%) | 29# | 30# | 31# | 32# | 33# | 34# | 35# |
|---|---|---|---|---|---|---|---|
| SiO₂ | 79 | 78.5 | 78 | 60 | 60.5 | 61 | 61.5 |
| Al₂O₃ | 0 | 0 | 2 | 7.5 | 4.5 | 6 | 6.5 |
| Li₂O | 10 | 10 | 10 | 14 | 13 | 13 | 13 |
| Na₂O | 0 | 0 | 0 | 3 | 2.5 | 2 | 2 |
| P₂O₅ | 2 | 2 | 2 | 3 | 2.5 | 3.5 | 3 |
| ZrO₂ | 7 | 7 | 5 | 7 | 10 | 11 | 12 |
| K₂O | 0 | 0 | 0 | 0 | 0.5 | 1 | 0 |
| ZnO | 2 | 0 | 2 | 0 | 0 | 0 | 0.5 |
| MgO | 0 | 2 | 1 | 0 | 0.5 | 0 | 0.5 |
| CaO | 0 | 0 | 0 | 0 | 0 | 0 | 0 |
| SrO | 0 | 0 | 0 | 0 | 0 | 1 | 0 |
| BaO | 0 | 0 | 0 | 0 | 0 | 0 | 0.5 |
| B₂O₃ | 0 | 0 | 0 | 0 | 0.5 | 0 | 0 |
| TiO₂ | 0 | 0 | 0 | 0 | 0 | 1 | 0 |
| Y₂O₃ | 0 | 0 | 0 | 5 | 5 | 0 | 0 |
| Sb₂O₃ | 0 | 0.5 | 0 | 0.5 | 0.5 | 0.5 | 0.5 |
| Total | 100 | 100 | 100 | 100 | 100 | 100 | 100 |
| Al₂O₃/ (Li₂O+ZrO₂+P₂O₅) | 0 | 0 | 0.12 | 0.31 | 0.18 | 0.22 | 0.23 |
| (Li₂O+ZrO₂) /SiO₂ | 0.22 | 0.22 | 0.19 | 0.35 | 0.38 | 0.39 | 0.41 |
| (MgO+ZnO) /ZrO₂ | 0.29 | 0.29 | 0.6 | 0 | 0.05 | 0 | 0.08 |
| Li₂O+Al₂O₃) /ZrO₂ | 1.43 | 1.43 | 2.4 | 3.07 | 1.75 | 1.73 | 1.63 |
| Al₂O₃/Li₂O | 0 | 0 | 0.2 | 0.54 | 0.35 | 0.46 | 0.5 |
| Li₂O/ (ZrO₂+P₂O₅) | 1.11 | 1.11 | 1.43 | 1.4 | 1.04 | 0.9 | 0.87 |
| P₂O₅+ZrO₂ | 9 | 9 | 7 | 10 | 12.5 | 14.5 | 15 |
| SiO₂/ZrO₂ | 11.29 | 11.21 | 15.60 | 8.57 | 6.05 | 5.55 | 5.13 |
| Al₂O₃/ (P₂O₅+ZrO₂) | 0 | 0 | 0.29 | 0.75 | 0.36 | 0.41 | 0.43 |
| SiO₂/ (P₂O₅+ZrO₂) | 8.78 | 8.72 | 11.14 | 6.00 | 4.84 | 4.21 | 4.1 |
| (ZrO₂+Li₂O) / Al₂O₃ | - | - | 7.50 | 2.8 | 5.11 | 4.0 | 3.85 |
| (SiO₂+Al₂O₃) /ZrO₂ | 11.29 | 11.21 | 16.0 | 9.64 | 6.5 | 6.09 | 5.67 |
| Crystal phase | LM, LD | LM, LD | LM, LD | LM, LD | LD | LM, LD | LM, LD |
| Crystallinity (%) | 77 | 72 | 71 | 79 | 78 | 75 | 75 |
| Ion exchange layer depth (µm) | 45 | 43 | 48 | 106 | 125 | 136 | 108 |
| Drop ball test height (mm) | 1600 | 1600 | 1500 | 1500 | 1500 | 1500 | 1500 |
| Fracture toughness (mPa•m^{1/2}) | 1.4 | 1.3 | 1.1 | 1.2 | 1.3 | 1.4 | 1.1 |
| Four-point bending strength (MPa) | 705 | 715 | 705 | 789 | 772 | 765 | 735 |
| Grain size (nm) | 27 | 29 | 26 | 25 | 25 | 25 | 27 |
| Vickers hardness (kgf/mm²) | 785 | 790 | 785 | 793 | 801 | 809 | 783 |
| Haze (%) | 0.14 | 0.14 | 0.14 | 0.1 | 0.12 | 0.9 | 0.13 |
| \| B \| value | 0.76 | 0.73 | 0.75 | 0.7 | 0.34 | 0.6 | 0.66 |
| Average light transmission rate of | 89 | 89 | 89 | 89 | 91 | 91 | 91 |
| 400∼800nm (%) | | | | | | | |
| Light transmission rate at 550nm (%) | 92 | 92 | 92 | 92 | 92 | 92 | 92 |
| Dielectric constant (test frequency 6.701GHz) | 5.8 | 5.8 | 6.3 | 6.7 | 6.8 | 6.7 | 6.5 |
| Dielectric loss (test frequency 6.701GHz) | 0.0076 | 0.0071 | 0.0044 | 0.0055 | 0.0047 | 0.0048 | 0.005 |

Abbreviations: "LM" for lithium monosilicate and "LS" for lithium disilicate.

**Table 18**

| Components (wt%) | 36# | 37# | 38# | 39# | 40# | 41# | 42# |
|---|---|---|---|---|---|---|---|
| SiO₂ | 62 | 62.5 | 63 | 63.5 | 64 | 64.5 | 65.5 |
| Al₂O₃ | 9.3 | 6.5 | 6 | 5.5 | 6.5 | 4.5 | 5.5 |
| Li₂O | 13.7 | 12 | 13 | 13 | 12 | 14 | 13.5 |
| Na₂O | 1 | 2 | 2 | 1 | 2 | 2.5 | 1.5 |
| P₂O₅ | 2.5 | 3 | 2.5 | 3.5 | 4 | 4 | 3.5 |
| ZrO₂ | 10 | 13 | 11 | 12 | 9 | 10 | 9.5 |
| K₂O | 0 | 0 | 0 | 0 | 1 | 0 | 0.5 |
| ZnO | 0 | 0 | 1 | 0 | 0 | 0 | 0 |
| MgO | 0 | 0.5 | 0 | 0 | 0 | 0 | 0 |
| CaO | 1 | 0 | 0 | 0 | 0 | 0 | 0 |
| SrO | 0 | 0 | 0 | 0 | 0 | 0 | 0 |
| BaO | 0 | 0 | 0 | 0 | 0 | 0 | 0 |
| B₂O₃ | 0 | 0 | 1 | 0 | 0.5 | 0 | 0 |
| TiO₂ | 0 | 0 | 0 | 0 | 0 | 0 | 0 |
| Y₂O₃ | 0 | 0 | 0 | 1 | 0.5 | 0 | 0 |
| Sb₂O₃ | 0.5 | 0.5 | 0.5 | 0.5 | 0.5 | 0.5 | 0.5 |
| Total | 100 | 100 | 100 | 100 | 100 | 100 | 100 |
| Al₂O₃/ (Li₂O+ZrO₂+P₂O₅) | 0.35 | 0.23 | 0.23 | 0.19 | 0.26 | 0.16 | 0.21 |
| (Li₂O+ZrO₂) /SiO₂ | 0.38 | 0.40 | 0.38 | 0.39 | 0.33 | 0.37 | 0.35 |
| (MgO+ZnO) /ZrO₂ | 0 | 0.04 | 0.09 | 0 | 0 | 0 | 0 |
| (Li₂O+Al₂O₃) /ZrO₂ | 2.3 | 1.42 | 1.73 | 1.54 | 2.06 | 1.85 | 2.0 |
| Al₂O₃/Li₂O | 0.68 | 0.54 | 0.46 | 0.42 | 0.54 | 0.32 | 0.41 |
| Li₂O/ (ZrO₂+P₂O₅) | 1.1 | 0.75 | 0.96 | 0.84 | 0.92 | 1.0 | 1.04 |
| P₂O₅+ZrO₂ | 12.5 | 16 | 13.5 | 15.5 | 13 | 14 | 13 |
| SiO₂/ZrO₂ | 6.2 | 4.81 | 5.73 | 5.29 | 7.11 | 6.45 | 6.89 |
| Al₂O₃/ (P₂O₅+ZrO₂) | 0.74 | 0.41 | 0.44 | 0.35 | 0.5 | 0.32 | 0.42 |
| SiO₂/ (P₂O₅+ZrO₂) | 4.96 | 3.91 | 4.67 | 4.1 | 4.92 | 4.61 | 5.04 |
| (ZrO₂+Li₂O) /Al₂O₃ | 2.55 | 3.85 | 4.00 | 4.55 | 3.23 | 5.33 | 4.18 |
| (SiO₂+Al₂O₃) /ZrO₂ | 7.13 | 5.31 | 6.27 | 5.75 | 7.83 | 6.9 | 7.47 |
| Crystal phase | LM, LD | LD | LM, LD | LD | LD | LD | LD |
| Crystallinity (%) | 71 | 72 | 73 | 75 | 78 | 82 | 72 |
| Ion exchange layer depth (µm) | 127 | 126 | 106 | 125 | 103 | 124 | 110 |
| Drop ball test height (mm) | 1500 | 1500 | 1500 | 1500 | 1500 | 1500 | 1500 |
| Fracture toughness (mPa•m^{1/2}) | 1.2 | 1.1 | 1.3 | 1.1 | 1.5 | 1.4 | 1.6 |
| Four-point bending strength (MPa) | 749 | 758 | 736 | 749 | 758 | 763 | 772 |
| Grain size (nm) | 25 | 25 | 25 | 29 | 25 | 25 | 25 |
| Vickers hardness (kgf/mm²) | 795 | 816 | 821 | 794 | 806 | 798 | 802 |
| Haze (%) | 0.12 | 0.1 | 0.9 | 0.12 | 0.1 | 0.9 | 0.9 |
| \| B \| value | 0.65 | 0.57 | 0.63 | 0.63 | 0.65 | 0.42 | 0.54 |
| Average light transmission rate of 400∼800nm (%) | 89 | 90 | 91 | 91 | 91 | 91 | 91 |
| Light transmission rate at 550nm (%) | 92 | 92 | 92 | 92 | 92 | 92 | 92 |
| Dielectric constant (test frequency | 6.4 | 6.7 | 6.8 | 6.8 | 6.6 | 6.9 | 6.8 |
| 6.701GHz) | | | | | | | |
| Dielectric loss (test frequency 6.701GHz) | 0.0051 | 0.0048 | 0.0049 | 0.0052 | 0.0045 | 0.0054 | 0.0053 |

Abbreviations: "LM" for lithium monosilicate and "LS" for lithium disilicate.

## Claims

1. Microcrystalline glass product, comprising the following components by weight percentage: SiO₂: 65∼80%; Al₂O₃: below 5%; Li₂O: 10∼25%; ZrO₂: 5∼15%; P₂O₅: 1∼8%.

2. Microcrystalline glass product, comprising the following components by weight percentage: SiO₂: 55∼80%; Al₂O₃: below 10%; Li₂O: 8∼25%; ZrO₂: 5∼15%; P₂O₅: 1∼8%.

3. The microcrystalline glass product according to claim 1 or 2, further comprising the following components by weight percentage: K₂O: 0∼5%; and/or MgO: 0∼3%; and/or ZnO: 0∼3%; and/or Na₂O: 0∼6%; and/or SrO: 0∼5%; and/or BaO: 0∼5%; and/or CaO: 0∼5%; and/or TiO₂: 0∼5%; and/or B₂O₃: 0∼5%; and/or Y₂O₃: 0∼6%; and/or fining agent: 0∼2%.

4. The microcrystalline glass product according to claim 1 or 2, wherein the components is expressed in weight percentage, satisfying one or more of the following 10 situations:
1)Al₂O₃/ (P₂O₅+ZrO₂) is below 1.2, preferably Al₂O₃/ (P₂O₅+ZrO₂) is below 1.0, more preferably Al₂O₃/ (P₂O₅+ZrO₂) is 0.05∼0.7;
2)SiO₂/ZrO₂ is 4.0∼15.8, preferably SiO₂/ZrO₂ is 4.5∼12.0, more preferably SiO₂/ZrO₂ is 5.0∼9.5, further preferably SiO₂/ZrO₂ is 6.0∼9.0;
3)P₂O₅+ZrO₂: 6∼21%, preferably P₂O₅+ZrO₂: 7∼18%, more preferably P₂O₅+ZrO₂: 8∼16%, further preferably P₂O₅+ZrO₂: 10∼16%;
4)SiO₂/ (P₂O₅+ZrO₂) is 2.5∼12.0, preferably SiO₂/ (P₂O₅+ZrO₂) is 3.0∼10.0, more preferably SiO₂/ (P₂O₅+ZrO₂) is 3.5∼7.5, further preferably SiO₂/ (P₂O₅+ZrO₂) is 4.0∼6.5;
5) (ZrO₂+Li₂O) /Al₂O₃ is above 2.0, preferably (ZrO₂+Li₂O) /Al₂O₃ is above 2.5, more preferably (ZrO₂+Li₂O) /Al₂O₃ is 2.5∼30.0;
6) (SiO₂+Al₂O₃) /ZrO₂ is 4.0∼16.0, preferably (SiO₂+Al₂O₃) /ZrO₂ is 4.5∼12.0, more preferably (SiO₂+Al₂O₃) /ZrO₂ is 5.0∼10.0, further preferably (SiO₂+Al₂O₃) /ZrO₂ is 6.0∼ 9.5;
7) (Li₂O+ZrO₂) /SiO₂ is 0.19∼0.55, preferably (Li₂O+ZrO₂) /SiO₂ is 0.2∼0.5, more preferably (Li₂O+ZrO₂) /SiO₂ is 0.25∼0.45, further preferably (Li₂O+ZrO₂) /SiO₂ is 0.25∼ 0.4;
8) (MgO+ZnO) /ZrO₂ is below 0.65, preferably (MgO+ZnO) /ZrO₂ is below 0.4, more preferably (MgO+ZnO) /ZrO₂ is below 0.2, further preferably (MgO+ZnO) /ZrO₂ is below 0.1;
9) (Li₂O+Al₂O₃) /ZrO₂ is 0.8∼5.0, preferably (Li₂O+Al₂O₃) /ZrO₂ is 1.0∼4.0, more preferably (Li₂O+Al₂O₃) /ZrO₂ is 1.2∼3.0, further preferably (Li₂O+Al₂O₃) /ZrO₂ is 1.5∼ 2.5;
10)Li₂O/ (ZrO₂+P₂O₅) is 0.5∼3.0, preferably Li₂O/ (ZrO₂+P₂O₅) is 0.6∼2.5, more preferably Li₂O/ (ZrO₂+P₂O₅) is 0.7∼2.0, further preferably Li₂O/ (ZrO₂+P₂O₅) is 0.8∼1.5.

5. The microcrystalline glass product according to claim 1 or 2, wherein the components is expressed in weight percentage: Al₂O₃/ (Li₂O+ZrO₂+P₂O₅) is below 0.3, preferably Al₂O₃/ (Li₂O+ZrO₂+P₂O₅) is below 0.25, more preferably Al₂O₃/ (Li₂O+ZrO₂+P₂O₅) is 0.01∼0.2, further preferably Al₂O₃/ (Li₂O+ZrO₂+P₂O₅) is 0.01∼0.1; and/or Al₂O₃/Li₂O is below 0.4, preferably Al₂O₃/Li₂O is below 0.3, more preferably Al₂O₃/Li₂O is below 0.2, further preferably Al₂O₃/Li₂O is below 0.1.

6. The microcrystalline glass product according to claim 1 or 2, comprising the following components by weight percentage: SiO₂: 68∼78%, preferably SiO₂: 70∼76%; and/or Al₂O₃: 0.1∼4.5%, preferably Al₂O₃: 0.5∼3%; and/or Li₂O: 12.5∼22%, preferably Li₂O: 12.5∼20%; and/or ZrO₂: 6∼12%, preferably ZrO₂: 7∼12%; and/or P₂O₅: 1.5∼7%, preferably P₂O₅: 2∼6%; and/or K₂O: 0∼4%, preferably K₂O: 0∼2%; and/or MgO: 0∼ 2%, preferably MgO: 0∼1%; and/or ZnO: 0∼2%, preferably ZnO: 0∼1%; and/or Na₂O: 0∼4%, preferably Na₂O: 0.5∼3%; and/or SrO: 0∼2%, preferably SrO: 0∼1%; and/or BaO: 0∼2%, preferably BaO: 0∼1%; and/or CaO: 0∼2%, preferably CaO: 0∼ 1%; and/or TiO₂: 0∼2%, preferably TiO₂: 0∼1%; and/or B₂O₃: 0∼3%, preferably B₂O₃: 0∼2%; and/or Y₂O₃: 0∼4%, preferably Y₂O₃: 0∼2%; and/or fining agent: 0∼ 1%, preferably fining agent: 0∼0.5%.

7. The microcrystalline glass product according to claim 2, wherein the components is expressed in weight percentage: Al₂O₃/ (Li₂O+ZrO₂+P₂O₅) is below 0.4, preferably Al₂O₃/ (Li₂O+ZrO₂+P₂O₅) is below 0.3, more preferably Al₂O₃/ (Li₂O+ZrO₂+P₂O₅) is below 0.25; and/or Al₂O₃/Li₂O is below 0.7, preferably Al₂O₃/Li₂O is below 0.6, more preferably Al₂O₃/Li₂O is below 0.5, further preferably Al₂O₃/Li₂O is below 0.45; and/or Al₂O₃/ (P₂O₅+ZrO₂) is 0.1∼ 0.6; and/or (ZrO₂+Li₂O) /Al₂O₃ is 3.0∼20.0.

8. The microcrystalline glass product according to claim 2, comprising the following components by weight percentage: SiO₂: 58∼78%, preferably SiO₂: 60∼76%; and/or Al₂O₃: 0.1∼8%, preferably Al₂O₃: 0.5∼7%; and/or Li₂O: 9∼22%, preferably Li₂O: 10∼ 20%; and/or ZrO₂: 6∼12%, preferably ZrO₂: 7∼12%; and/or P₂O₅: 1.5∼7%, preferably P₂O₅: 2∼6%; and/or K₂O: 0∼4%, preferably K₂O: 0∼2%; and/or MgO: 0∼2%, preferably MgO: 0∼1%; and/or ZnO: 0∼2%, preferably ZnO: 0∼1%; and/or Na₂O: 0∼ 4%, preferably Na₂O: 0.5∼3%; and/or SrO: 0∼2%, preferably SrO: 0∼1%; and/or BaO: 0∼2%, preferably BaO: 0∼1%; and/or CaO: 0∼2%, preferably CaO: 0∼1%; and/or TiO₂: 0∼2%, preferably TiO₂: 0∼1%; and/or B₂O₃: 0∼3%, preferably B₂O₃: 0∼ 2%; and/or Y₂O₃: 0∼4%, preferably Y₂O₃: 0∼2%; and/or fining agent: 0∼1%, preferably fining agent: 0∼0.5%.

9. The microcrystalline glass product according to claim 1 or 2, further comprising the following components by weight percentage: La₂O₃+Gd₂O₃+Yb₂O₃+Nb₂O₅+WO₃+Bi₂O₃+Ta₂O₅+TeO₂+GeO₂ : 0 ∼ 5% , preferably La₂O₃+Gd₂O₃+Yb₂O₃+Nb₂O₅+WO₃+Bi₂O₃+Ta₂O₅+TeO₂+GeO₂ : 0 ∼ 2%, more preferably La₂O₃+Gd₂O₃+Yb₂O₃+Nb₂O₅+WO₃+Bi₂O₃+Ta₂O₅+TeO₂+GeO₂: 0∼1%.

10. The microcrystalline glass product according to claim 1 or 2, wherein the components do not contain SrO; and/or do not contain BaO; and/or do not contain MgO; and/or do not contain CaO; and/or do not contain ZnO; and/or do not contain PbO; and/or do not contain As₂O₃; and/or do not contain TiO₂; and/or do not contain B₂O₃; and/or do not contain Y₂O₃; and/or do not contain F.

11. The microcrystalline glass product according to claim 1 or 2, crystalline phase of the microcrystalline glass product contains lithium silicate crystalline phase; and/or lithium phosphate crystalline phase; and/or petalite crystalline phase; and/or quartz solid solution crystalline phase.

12. The microcrystalline glass product according to claim 1 or 2, the microcrystalline glass product contains lithium silicate crystalline phase, which has a higher weight percentage than the other crystalline phases, the preferably lithium silicate crystalline phase as a percentage by weight of the microcrystalline glass product is 10∼70%, more preferably lithium silicate crystalline phase as a percentage by weight of the microcrystalline glass product is 10∼65%, further preferably lithium silicate crystalline phase as a percentage by weight of the microcrystalline glass product is 15∼60%, much further preferably lithium silicate crystalline phase as a percentage by weight of the microcrystalline glass product is 20∼55%.

13. The microcrystalline glass product according to claim 1 or 2, the microcrystalline glass product contains lithium monosilicate crystalline phase, which has a higher weight percentage than the other crystalline phases, the preferably lithium monosilicate crystalline phase as a percentage by weight of the microcrystalline glass product is 30∼65%, more preferably lithium monosilicate crystalline phase as a percentage by weight of the microcrystalline glass product is 35∼60%, further preferably lithium monosilicate crystalline phase as a percentage by weight of the microcrystalline glass product is 40∼55%.

14. The microcrystalline glass product according to claim 1 or 2, the microcrystalline glass product contains lithium disilicate crystalline phase, which has a higher weight percentage than the other crystalline phases, the preferably lithium disilicate crystalline phase as a percentage by weight of the microcrystalline glass product is 10∼60%, more preferably lithium disilicate crystalline phase as a percentage by weight of the microcrystalline glass product is 15∼50%, further preferably lithium disilicate crystalline phase as a percentage by weight of the microcrystalline glass product is 20∼45%.

15. The microcrystalline glass product according to claim 1 or 2, the microcrystalline glass product contains lithium phosphate crystalline phase, the weight percentage of lithium phosphate crystalline phase in microcrystalline glass product is below 10%,the preferably lithium phosphate crystalline phase as a percentage by weight of the microcrystalline glass product is below 5%.

16. The microcrystalline glass product according to claim 1 or 2, the microcrystalline glass product contains quartz solid solution crystalline phase, the weight percentage of quartz solid solution crystalline phase in microcrystalline glass product is below 10%,the preferably quartz solid solution crystalline phase as a percentage by weight of the microcrystalline glass product is below 5%.

17. The microcrystalline glass product according to claim 1 or 2, the microcrystalline glass product contains petalite crystalline phase, the weight percentage of petalite crystalline phase in microcrystalline glass product is below 18%,the preferably petalite crystalline phase as a percentage by weight of the microcrystalline glass product is below 15%, more preferably petalite crystalline phase as a percentage by weight of the microcrystalline glass product is below 10%, further preferably petalite crystalline phase as a percentage by weight of the microcrystalline glass product is below 5%.

18. The microcrystalline glass product according to claim 1 or 2, the microcrystalline glass product have a four-point bending strength of above 600MPa, preferably above 650MPa, more preferably above 700MPa; and/or an ion exchange layer depth of above 20µm, preferably above 30µm, more preferably above 40µm; and/or a drop ball test height of above 1400mm, preferably above 1500mm, more preferably above 1600mm; and/or a fracture toughness of above 1MPa • m^{1/2}, preferably above 1.3MPa • m^{1/2}, more preferably above 1.5MPa • m^{1/2}; and/or a Vickers hardness of above 730kgf/mm², preferably above 750kgf/mm², more preferably above 780kgf/mm²; and/or a dielectric constant εᵣ of above 5.4, preferably above 5.8, more preferably above 6.0; and/or a dielectric loss tanδ of below 0.05, preferably below 0.04, more preferably below 0.02, further preferably below 0.01.

19. The microcrystalline glass product according to claim 1 or 2, the microcrystalline glass product has a crystallinity of above 50%, preferably above 60%, more preferably above 70%; and/or a grain size of below 80 nm, preferably below 50 nm, more preferably below 30 nm.

20. The microcrystalline glass product according to claim 1 or 2, the haze of the microcrystalline glass products with a thickness of less than 1mm is below 0.2%, preferably below 0.18%, more preferably below 0.15%; and/or the average light transmittance of 400 to 800nm is above 87%, preferably above 89%, more preferably above 90%; and/or the light transmittance of 550nm is above 88%, preferably above 90%, more preferably above 91%; and/or an average light |B| value of 400 to 800 nm is below 0.9, preferably below 0.8, more preferably below 0.7.

21. The microcrystalline glass product according to claim 20, the microcrystalline glass product has a thickness of 0.2∼1 mm, preferably 0.3∼0.9 mm, more preferably 0.5∼0.8 mm, further preferably 0.55 mm or 0.6 mm or 0.68 mm or 0.7 mm or 0.75 mm.

22. The microcrystalline glass product according to claim 1 or 2, the microcrystalline glass product contains colorants.

23. The microcrystalline glass product according to claim 22, the colorants comprise the following components by weight percentage: NiO: 0∼4%; and/or Ni₂O₃: 0∼4%; and/or CoO: 0∼2%; and/or Co₂O₃: 0∼2%; and/or Fe₂O₃: 0∼7%; and/or MnO₂: 0∼4%; and/or Er₂O₃: 0∼8%; and/or Nd₂O₃ : 0∼8%; and/or CU₂O: 0∼4%; and/or Pr₂O₃: 0∼ 8%; and/or CeO₂: 0∼4%.

24. Microcrystalline glass, comprising the following components by weight percentage: SiO₂: 65∼80%; Al₂O₃: below 5%; Li₂O: 10∼25%; ZrO₂: 5∼15%; P₂O₅: 1∼8%.

25. Microcrystalline glass, comprising the following components by weight percentage: SiO₂: 55∼80%; Al₂O₃: below 10%; Li₂O: 8∼25%; ZrO₂: 5∼15%; P₂O₅: 1∼8%.

26. The microcrystalline glass according to claim 24 or 25, further comprising the following components by weight percentage: K₂O: 0∼5%; and/or MgO: 0∼3%; and/or ZnO: 0∼ 3%; and/or Na₂O: 0∼6%; and/or SrO: 0∼5%; and/or BaO: 0∼5%; and/or CaO: 0∼ 5%; and/or TiO₂: 0∼5%; and/or B₂O₃: 0∼5%; and/or Y₂O₃: 0∼6%; and/or fining agent: 0∼2%.

27. The microcrystalline glass according to claim 24 or 25, wherein the components is expressed in weight percentage , satisfying one or more of the following 10 situations:
1)Al₂O₃/ (P₂O₅+ZrO₂) is below 1.2, preferably Al₂O₃/ (P₂O₅+ZrO₂) is below 1.0, more preferably Al₂O₃/ (P₂O₅+ZrO₂) is 0.05∼0.7;
2)SiO₂/ZrO₂ is 4.0∼15.8, preferably SiO₂/ZrO₂ is 4.5∼12.0, more preferably SiO₂/ZrO₂ is 5.0∼9.5, further preferably SiO₂/ZrO₂ is 6.0∼9.0;
3)P₂O₅+ZrO₂: 6∼21%, preferably P₂O₅+ZrO₂: 7∼18%, more preferably P₂O₅+ZrO₂: 8∼16%, further preferably P₂O₅+ZrO₂: 10∼16%;
4)SiO₂/ (P₂O₅+ZrO₂) is 2.5∼12.0, preferably SiO₂/ (P₂O₅+ZrO₂) is 3.0∼10.0, more preferably SiO₂/ (P₂O₅+ZrO₂) is 3.5∼7.5, further preferably SiO₂/ (P₂O₅+ZrO₂) is 4.0∼6.5;
5) (ZrO₂+Li₂O) /Al₂O₃ is above 2.0, preferably (ZrO₂+Li₂O) /Al₂O₃ is above 2.5, more preferably (ZrO₂+Li₂O) /Al₂O₃ is 2.5∼30.0;
6) (SiO₂+Al₂O₃) /ZrO₂ is 4.0∼16.0, preferably (SiO₂+Al₂O₃) /ZrO₂ is 4.5∼12.0, more preferably (SiO₂+Al₂O₃) /ZrO₂ is 5.0∼10.0, further preferably (SiO₂+Al₂O₃) /ZrO₂ is 6.0∼ 9.5;
7) (Li₂O+ZrO₂) /SiO₂ is 0.19∼0.55, preferably (Li₂O+ZrO₂) /SiO₂ is 0.2∼0.5, more preferably (Li₂O+ZrO₂) /SiO₂ is 0.25∼0.45, further preferably (Li₂O+ZrO₂) /SiO₂ is 0.25∼ 0.4;
8) (MgO+ZnO) /ZrO₂ is below 0.65, preferably (MgO+ZnO) /ZrO₂ is below 0.4, more preferably (MgO+ZnO) /ZrO₂ is below 0.2, further preferably (MgO+ZnO) /ZrO₂ is below 0.1;
9) (Li₂O+Al₂O₃) /ZrO₂ is 0.8∼5.0, preferably (Li₂O+Al₂O₃) /ZrO₂ is 1.0∼4.0, more preferably (Li₂O+Al₂O₃) /ZrO₂ is 1.2∼3.0, further preferably (Li₂O+Al₂O₃) /ZrO₂ is 1.5∼ 2.5;
10)Li₂O/ (ZrO₂+P₂O₅) is 0.5∼3.0, preferably Li₂O/ (ZrO₂+P₂O₅) is 0.6∼2.5, more preferably Li₂O/ (ZrO₂+P₂O₅) is 0.7∼2.0, further preferably Li₂O/ (ZrO₂+P₂O₅) is 0.8∼1.5.

28. The microcrystalline glass according to claim 24 or 25, wherein the components is expressed in weight percentage:Al₂O₃/ (Li₂O+ZrO₂+P₂O₅) is below 0.3, preferably Al₂O₃/ (Li₂O+ZrO₂+P₂O₅) is below 0.25, more preferably Al₂O₃/ (Li₂O+ZrO₂+P₂O₅) is 0.01 ∼ 0.2,further preferably Al₂O₃/ (Li₂O+ZrO₂+P₂O₅) is 0.01∼0.1; and/or Al₂O₃/Li₂O is below 0.4, preferably Al₂O₃/Li₂O is below 0.3, more preferably Al₂O₃/Li₂O is below 0.2, further preferably Al₂O₃/Li₂O is below 0.1.

29. The microcrystalline glass according to claim 24 or 25, comprising the following components by weight percentage: SiO₂: 68∼78%, preferably SiO₂: 70∼76%; and/or Al₂O₃: 0.1∼4.5%, preferably Al₂O₃: 0.5∼3%; and/or Li₂O: 12.5∼22%, preferably Li₂O: 12.5∼20%; and/or ZrO₂: 6∼12%, preferably ZrO₂: 7∼12%; and/or P₂O₅: 1.5∼7%, preferably P₂O₅: 2∼6%; and/or K₂O: 0∼4%, preferably K₂O: 0∼2%; and/or MgO: 0∼ 2%, preferably MgO: 0∼1%; and/or ZnO: 0∼2%, preferably ZnO: 0∼1%; and/or Na₂O: 0∼4%, preferably Na₂O: 0.5∼3%; and/or SrO: 0∼2%, preferably SrO: 0∼1%; and/or BaO: 0∼2%, preferably BaO: 0∼1%; and/or CaO: 0∼2%, preferably CaO: 0∼ 1%; and/or TiO₂: 0∼2%, preferably TiO₂: 0∼1%; and/or B₂O₃: 0∼3%, preferably B₂O₃: 0∼2%; and/or Y₂O₃: 0∼4%, preferably Y₂O₃: 0∼2%; and/or fining agent: 0∼ 1%, preferably fining agent: 0∼0.5%.

30. The microcrystalline glass according to claim 25, wherein the components is expressed in weight percentage : Al₂O₃/ (Li₂O+ZrO₂+P₂O₅ ) is below 0.4,preferably Al₂O₃/ (Li₂O+ZrO₂+P₂O₅) is below 0.3,more preferably Al₂O₃/ (Li₂O+ZrO₂+P₂O₅) is below 0.25; and/or Al₂O₃/Li₂O is below 0.7, preferably Al₂O₃/Li₂O is below 0.6, more preferably Al₂O₃/Li₂O is below 0.5, further preferably Al₂O₃/Li₂O is below 0.45; and/or Al₂O₃/ (P₂O₅+ZrO₂) is 0.1∼ 0.6; and/or (ZrO₂+Li₂O) /Al₂O₃ is 3.0∼20.0.

31. The microcrystalline glass according to claim 25, comprising the following components by weight percentage:SiO₂: 58∼78%, preferably SiO₂: 60∼76%; and/or Al₂O₃: 0.1∼8%, preferably Al₂O₃: 0.5∼7%; and/or Li₂O: 9∼22%, preferably Li₂O: 10∼20%; and/or ZrO₂: 6~12%, preferably ZrO₂: 7~12%; and/or P₂O₅: 1.5~7%, preferably P₂O₅: 2~ 6%; and/or K₂O: 0~4%, preferably K₂O: 0~2%; and/or MgO: 0~2%, preferably MgO: 0~1%; and/or ZnO: 0~2%, preferably ZnO: 0~1%; and/or Na₂O: 0~4%, preferably Na₂O: 0.5~3%; and/or SrO: 0~2%, preferably SrO: 0~1%; and/or BaO: 0~ 2%, preferably BaO: 0~1%; and/or CaO: 0~2%, preferably CaO: 0~1%; and/or TiO₂: 0~2%, preferably TiO₂: 0~1%; and/or B₂O₃: 0~3%, preferably B₂O₃: 0~2%; and/or Y₂O₃: 0~4%, preferably Y₂O₃: 0~2%; and/or fining agent: 0~1%, preferably fining agent: 0~0.5%.

32. The microcrystalline glass according to claim 24 or 25, further comprising the following components by weight percentage:La₂O₃+Gd₂O₃+Yb₂O₃+Nb₂O₅+WO₃+Bi₂O₃+Ta₂O₅+TeO₂+GeO₂ : 0 ~ 5%,preferably La₂O₃+Gd₂O₃+Yb₂O₃+Nb₂O₅+WO₃+Bi₂O₃+Ta₂O₅+TeO₂+GeO₂ : 0 ~ 2%,more preferably La₂O₃+Gd₂O₃+Yb₂O₃+Nb₂O₅+WO₃+Bi₂O₃+Ta₂O₅+TeO₂+GeO₂: 0~1%.

33. The microcrystalline glass according to claim 24 or 25, wherein the components do not contain SrO; and/or do not contain BaO; and/or do not contain MgO; and/or do not contain CaO; and/or do not contain ZnO; and/or do not contain PbO; and/or do not contain As₂O₃; and/or do not contain TiO₂; and/or do not contain B₂O₃; and/or do not contain Y₂O₃; and/or do not contain F.

34. The microcrystalline glass according to claim 24 or 25, crystalline phase of the microcrystalline glass contains lithium silicate crystalline phase; and/or lithium phosphate crystalline phase; and/or petalite crystalline phase; and/or quartz solid solution crystalline phase.

35. The microcrystalline glass according to claim 24 or 25, the microcrystalline glass contains lithium silicate crystalline phase, which has a higher weight percentage than the other crystalline phases, the preferably lithium silicate crystalline phase as a percentage by weight of the microcrystalline glass is 10~70%, more preferably lithium silicate crystalline phase as a percentage by weight of the microcrystalline glass is 10~65%, further preferably lithium silicate crystalline phase as a percentage by weight of the microcrystalline glass product is 15~60%, much further preferably lithium silicate crystalline phase as a percentage by weight of the microcrystalline glass is 20~55%.

36. The microcrystalline glass according to claim 24 or 25, the microcrystalline glass contains lithium monosilicate crystalline phase, which has a higher weight percentage than the other crystalline phases, the preferably lithium monosilicate crystalline phase as a percentage by weight of the microcrystalline glass is 30~65%, more preferably lithium monosilicate crystalline phase as a percentage by weight of the microcrystalline glass is 35~60%, further preferably lithium monosilicate crystalline phase as a percentage by weight of the microcrystalline glass is 40~55%.

37. The microcrystalline glass according to claim 24 or 25, the microcrystalline glass contains lithium disilicate crystalline phase, which has a higher weight percentage than the other crystalline phases, the preferably lithium disilicate crystalline phase as a percentage by weight of the microcrystalline glass is 10~60%, more preferably lithium disilicate crystalline phase as a percentage by weight of the microcrystalline glass is 15~50%, further preferably lithium disilicate crystalline phase as a percentage by weight of the microcrystalline glass is 20~ 45%.

38. The microcrystalline glass according to claim 24 or 25, the microcrystalline glass contains lithium phosphate crystalline phase, the weight percentage of lithium phosphate crystalline phase in microcrystalline glass is below 10%,the preferably lithium phosphate crystalline phase as a percentage by weight of the microcrystalline glass is below 5%.

39. The microcrystalline glass according to claim 24 or 25, the microcrystalline glass contains quartz solid solution crystalline phase, the weight percentage of quartz solid solution crystalline phase in microcrystalline glass is below 10%,the preferably quartz solid solution crystalline phase as a percentage by weight of the microcrystalline glass is below 5%.

40. The microcrystalline glass according to claim 24 or 25, the microcrystalline glass contains petalite crystalline phase, the weight percentage of petalite crystalline phase in microcrystalline glass is below 18%,the preferably petalite crystalline phase as a percentage by weight of the microcrystalline glass is below 15%, more preferably petalite crystalline phase as a percentage by weight of the microcrystalline glass is below 10%, further preferably petalite crystalline phase as a percentage by weight of the microcrystalline glass is below 5%.

41. The microcrystalline glass according to claim 24 or 25, the microcrystalline glass have a crystallinity of above 50%, preferably above 60%, more preferably above 70%; and/or a grain size of below 80nm, preferably below 50nm, more preferably below 30nm; and/or a coefficient of thermal expansion of 70 × 10⁻⁷/K~90 × 10⁻⁷/K; and/or a refractive index of 1.5520~1.5700.

42. The microcrystalline glass according to claim 24 or 25, the microcrystalline glass have a body drop height of above 1700mm, preferably above 1900mm, more preferably above 2000mm; and/or a Vickers hardness of above 630kgf/mm², preferably above 650kgf/mm², more preferably above 680kgf/mm²; and/or a dielectric constant of above 5.4, preferably of above 5.8, more preferably of above 6.0; and/or a dielectric loss of below 0.05, preferably of below 0.04, more preferably of below 0.03, further preferably of below 0.01; and/or a surface resistance of above 1 × 10⁹ Ω •cm, preferably of above 1 × 10¹⁰ Ω •cm, more preferably above 1 × 10¹¹Ω•cm.

43. The microcrystalline glass according to claim 24 or 25, the haze of the microcrystalline glass with a thickness of less than 1mm is below 0.2%, preferably below 0.18%, more preferably below 0.15%; and/or the average light transmittance of 400~ 800nm is above 87%, preferably above 89%, more preferably above 90%; and/or the light transmittance of 550nm is above 88%, preferably above 90%, more preferably above 91%; and/or an average light |B| value of 400~ 800 nm is below 0.9, preferably below 0.8, more preferably below 0.7.

44. The microcrystalline glass according to claim 43, the microcrystalline glass has a thickness of 0.2~1 mm, preferably 0.3~0.9 mm, more preferably 0.5~0.8 mm, further preferably 0.55 mm or 0.6 mm or 0.68 mm or 0.7 mm or 0.75 mm.

45. The microcrystalline glass according to claim 24 or 25, the microcrystalline glass contains colorants.

46. The microcrystalline glass according to claim 45, the colorants comprise the following components by weight percentage: NiO: 0~4%; and/or Ni₂O₃: 0~4%; and/or CoO: 0~ 2%; and/or Co₂O₃: 0~2%; and/or Fe₂O₃: 0~7%; and/or MnO₂: 0~4%; and/or Er₂O₃: 0~8%; and/or Nd₂O₃ : 0~8%; and/or Cu₂O: 0~4%; and/or Pr₂O₃: 0~8%; and/or CeO₂: 0~4%.

47. Matrix glass, comprising the following components by weight percentage: SiO₂: 65~ 80%; Al₂O₃: below 5%; Li₂O: 10~25%; ZrO₂: 5~15%; P₂O₅: 1~8%.

48. Matrix glass, comprising the following components by weight percentage: SiO₂: 55~ 80%; Al₂O₃: below 10%; Li₂O: 8~25%; ZrO₂: 5~15%; P₂O₅: 1~8%.

49. The matrix glass according to claim 47 or 48, further comprising the following components by weight percentage: K₂O: 0~5%; and/or MgO: 0~3%; and/or ZnO: 0~ 3%; and/or Na₂O: 0~6%; and/or SrO: 0~5%; and/or BaO: 0~5%; and/or CaO: 0~ 5%; and/or TiO₂: 0~5%; and/or B₂O₃: 0~5%; and/or Y₂O₃: 0~6%; and/or fining agent: 0~2%.

50. The matrix glass according to claim 47 or 48, wherein the components is expressed in weight percentage , satisfying one or more of the following 10 situations:
1)Al₂O₃/ (P₂O₅+ZrO₂) is below 1.2, preferably Al₂O₃/ (P₂O₅+ZrO₂) is below 1.0, more preferably Al₂O₃/ (P₂O₅+ZrO₂) is 0.05~0.7;
2)SiO₂/ZrO₂ is 4.0~15.8, preferably SiO₂/ZrO₂ is 4.5~12.0, more preferably SiO₂/ZrO₂ is 5.0~9.5, further preferably SiO₂/ZrO₂ is 6.0~9.0;
3)P₂O₅+ZrO₂: 6~21%, preferably P₂O₅+ZrO₂: 7~18%, more preferably P₂O₅+ZrO₂: 8~16%, further preferably P₂O₅+ZrO₂: 10~16%;
4)SiO₂/ (P₂O₅+ZrO₂) is 2.5~12.0, preferably SiO₂/ (P₂O₅+ZrO₂) is 3.0~10.0, more preferably SiO₂/ (P₂O₅+ZrO₂) is 3.5~7.5, further preferably SiO₂/ (P₂O₅+ZrO₂) is 4.0~6.5;
5) (ZrO₂+Li₂O) /Al₂O₃ is above 2.0, preferably (ZrO₂+Li₂O) /Al₂O₃ is above 2.5, more preferably (ZrO₂+Li₂O) /Al₂O₃ is 2.5~30.0;
6) (SiO₂+Al₂O₃) /ZrO₂ is 4.0~16.0, preferably (SiO₂+Al₂O₃) /ZrO₂ is 4.5~12.0, more preferably (SiO₂+Al₂O₃) /ZrO₂ is 5.0~10.0, further preferably (SiO₂+Al₂O₃) /ZrO₂ is 6.0~ 9.5;
7) (Li₂O+ZrO₂) /SiO₂ is 0.19~0.55, preferably (Li₂O+ZrO₂) /SiO₂ is 0.2~0.5, more preferably (Li₂O+ZrO₂) /SiO₂ is 0.25~0.45, further preferably (Li₂O+ZrO₂) /SiO₂ is 0.25~ 0.4;
8) (MgO+ZnO) /ZrO₂ is below 0.65, preferably (MgO+ZnO) /ZrO₂ is below 0.4, more preferably (MgO+ZnO) /ZrO₂ is below 0.2, further preferably (MgO+ZnO) /ZrO₂ is below 0.1;
9) (Li₂O+Al₂O₃) /ZrO₂ is 0.8~5.0, preferably (Li₂O+Al₂O₃) /ZrO₂ is 1.0~4.0, more preferably (Li₂O+Al₂O₃) /ZrO₂ is 1.2~3.0, further preferably (Li₂O+Al₂O₃) /ZrO₂ is 1.5~ 2.5;
10)Li₂O/ (ZrO₂+P₂O₅) is 0.5~3.0, preferably Li₂O/ (ZrO₂+P₂O₅) is 0.6~2.5, more preferably Li₂O/ (ZrO₂+P₂O₅) is 0.7~2.0, further preferably Li₂O/ (ZrO₂+P₂O₅) is 0.8~1.5.

51. The matrix glass according to claim 47 or 48, wherein the components is expressed in weight percentage:Al₂O₃/ ( Li₂O+ZrO₂+P₂O₅ ) is below 0.3 , preferably Al₂O₃/ (Li₂O+ZrO₂+P₂O₅) is below 0.25, more preferably Al₂O₃/ (Li₂O+ZrO₂+P₂O₅) is 0.01 ~ 0.2,further preferably Al₂O₃/ (Li₂O+ZrO₂+P₂O₅) is 0.01~0.1; and/or Al₂O₃/Li₂O is below 0.4, preferably Al₂O₃/Li₂O is below 0.3, more preferably Al₂O₃/Li₂O is below 0.2, further preferably Al₂O₃/Li₂O is below 0.1.

52. The matrix glass according to claim 47 or 48, comprising the following components by weight percentage:SiO₂: 68~78%, preferably SiO₂: 70~76%; and/or Al₂O₃: 0.1~4.5%, preferably Al₂O₃: 0.5~3%; and/or Li₂O: 12.5~22%, preferably Li₂O: 12.5~20%; and/or ZrO₂: 6~12%, preferably ZrO₂: 7~12%; and/or P₂O₅: 1.5~7%, preferably P₂O₅: 2~ 6%; and/or K₂O: 0~4%, preferably K₂O: 0~2%; and/or MgO: 0~2%, preferably MgO: 0~1%; and/or ZnO: 0~2%, preferably ZnO: 0~1%; and/or Na₂O: 0~4%, preferably Na₂O: 0.5~3%; and/or SrO: 0~2%, preferably SrO: 0~1%; and/or BaO: 0~ 2%, preferably BaO: 0~1%; and/or CaO: 0~2%, preferably CaO: 0~1%; and/or TiO₂: 0~2%, preferably TiO₂: 0~1%; and/or B₂O₃: 0~3%, preferably B₂O₃: 0~2%; and/or Y₂O₃: 0~4%, preferably Y₂O₃: 0~2%; and/or fining agent: 0~1%, preferably fining agent: 0~0.5%.

53. The matrix glass according to claim 48, wherein the components is expressed in weight percentage:Al₂O₃/ (Li₂O+ZrO₂+P₂O₅) is below 0.4,preferably Al₂O₃/ (Li₂O+ZrO₂+P₂O₅) is below 0.3,more preferablyAl₂O₃/ (Li₂O+ZrO₂+P₂O₅) is below 0.25; and/orAl₂O₃/Li₂O is below 0.7, preferably Al₂O₃/Li₂O is below 0.6, more preferably Al₂O₃/Li₂O is below 0.5, further preferably Al₂O₃/Li₂O is below 0.45 ; and/or Al₂O₃/ (P₂O₅+ZrO₂) is 0.1~0.6; and/or (ZrO₂+Li₂O) /Al₂O₃ is 3.0~20.0.

54. The matrix glass according to claim 48, comprising the following components by weight percentage:SiO₂: 58~78%, preferably SiO₂: 60~76%; and/or Al₂O₃: 0.1~8%, preferably Al₂O₃: 0.5~7%; and/or Li₂O: 9~22%, preferably Li₂O: 10~20%; and/or ZrO₂: 6~ 12%, preferably ZrO₂: 7~12%; and/or P₂O₅: 1.5~7%, preferably P₂O₅: 2~6%; and/or K₂O: 0~4%, preferably K₂O: 0~2%; and/or MgO: 0~2%, preferably MgO: 0~1%; and/or ZnO: 0~2%, preferably ZnO: 0~1%; and/or Na₂O: 0~4%, preferably Na₂O: 0.5~3%; and/or SrO: 0~2%, preferably SrO: 0~1%; and/or BaO: 0~2%, preferably BaO: 0~1%; and/or CaO: 0~2%, preferably CaO: 0~1%; and/or TiO₂: 0~2%, preferably TiO₂: 0~1%; and/or B₂O₃: 0~3%, preferably B₂O₃: 0~2%; and/or Y₂O₃: 0~ 4%, preferably Y₂O₃: 0~2%; and/or fining agent: 0~1%, preferably fining agent: 0~ 0.5%.

55. The matrix glass according to claim 47 or 48, further comprising the following components by weight percentage:La₂O₃+Gd₂O₃+Yb₂O₃+Nb₂O₅+WO₃+Bi₂O₃+Ta₂O₅+TeO₂+GeO₂ : 0 ~ 5%,preferably La₂O₃+Gd₂O₃+Yb₂O₃+Nb₂O₅+WO₃+Bi₂O₃+Ta₂O₅+TeO₂+GeO₂ : 0 ~ 2%,more preferably La₂O₃+Gd₂O₃+Yb₂O₃+Nb₂O₅+WO₃+Bi₂O₃+Ta₂O₅+TeO₂+GeO₂: 0~1%.

56. The matrix glass according to claim 47 or 48, wherein the components do not contain SrO; and/or do not contain BaO; and/or do not contain MgO; and/or do not contain CaO; and/or do not contain ZnO; and/or do not contain PbO; and/or do not contain As₂O₃; and/or do not contain TiO₂; and/or do not contain B₂O₃; and/or do not contain Y₂O₃; and/or do not contain F.

57. The matrix glass according to claim 47 or 48, the matrix glass having a coefficient of thermal expansion of 65 × 10⁻⁷/K~80 × 10⁻⁷/K; and/or a refractive index of 1.5400~1.5600.

58. Microcrystalline glass forming body, **characterized in that** it contains the microcrystalline glass of any one of claims 24 to 46.

59. Glass cover, it contains the microcrystalline glass product of any one of claims 1 to 23, and/or the microcrystalline glass of any one of claims 24 to 46, and/or the matrix glass of any one of claims 47 to 57, and/or the microcrystalline glass forming body of claim 58.

60. Glass component, it contains the microcrystalline glass product of any one of claims 1 to 23, and/or the microcrystalline glass of any one of claims 24 to 46, and/or the matrix glass of any one of claims 47 to 57, and/or the microcrystalline glass forming body of claim 58.

61. Display device, it contains the microcrystalline glass product of any one of claims 1 to 23, and/or the microcrystalline glass of any one of claims 24 to 46, and/or the matrix glass of any one of claims 47 to 57, and/or the microcrystalline glass forming body of claim 58, and/or a glass cover as described in claim 59, and/or a glass component as described in claim 60.

62. Electronic device, it contains the microcrystalline glass product of any one of claims 1 to 23, and/or the microcrystalline glass of any one of claims 24 to 46, and/or the matrix glass of any one of claims 47 to 57, and/or the microcrystalline glass forming body of claim 58, and/or a glass cover as described in claim 59, and/or a glass component as described in claim 60.

63. The method of manufacturing microcrystalline glass product according to any one of claims 1 to 23, **characterized in that** the method comprises the steps of: forming a matrix glass, forming the matrix glass into microcrystalline glass by a crystallization process, and then forming the microcrystalline glass products by a chemical strengthening process.

64. The method of manufacturing microcrystalline glass product according to claim 63, **characterized in that** the crystallization process comprises the steps of: increasing the temperature to a specified crystallization treatment temperature, maintaining the temperature for a certain period of time after reaching the crystallization treatment temperature, and then cooling it down, which is 580 to 750°C, preferably 600 to 700°C, and maintaining the temperature at the crystallization treatment temperature for 0 to 8 hours, preferably 1 to 6 hours.

65. The method for manufacturing microcrystalline glass product according to claim 63, **characterized in that** the crystallization process comprises the steps of: performing the nucleation process at a 1st temperature, followed by the crystal growth process at a 2nd temperature higher than the nucleation process temperature.

66. The method for manufacturing microcrystalline glass product according to claim 65, **characterized in that** the crystallization process comprises the steps of: the 1st temperature being 470~580°C and the 2nd temperature being 600~750°C; the holding time at the 1st temperature being 0~24 hours, preferably 2~15 hours; the holding time at the 2nd temperature is 0~10 hours, preferably 0.5~6 hours.

67. The method of manufacturing a microcrystalline glass product according to claim 63, **characterized in that** the chemical strengthening process comprises: submerging the microcrystalline glass in a salt bath of molten Na salt at a temperature of 350°C~470°C for 1 ~ 36 hours, preferably in the temperature range of 380°C~460°C, and preferably in the time range of 2~24 hours; and/or submerging the microcrystalline glass in a salt bath of molten K salt in a salt bath for 1~36 hours, preferably in the time range of 2~24 hours; and/or microcrystalline glass immersed in a mixed salt bath of molten K and Na salts at a temperature of 360°C~450°C for 1~36 hours, preferably in the time range of 2~24 hours.

68. The method of manufacturing microcrystalline glass according to any one of claims 24 to 46, **characterized in that** the method comprises the steps of: forming a matrix glass, forming the matrix glass into microcrystalline glass by a crystallization process.

69. The method of manufacturing microcrystalline glass according to claim 68, **characterized in that** the crystallization process comprises the steps of: increasing the temperature to a specified crystallization treatment temperature, maintaining the temperature for a certain time after reaching the crystallization treatment temperature, and then cooling it down, which is 580~750°C, preferably 600~700°C, and maintaining the temperature at the crystallization treatment temperature for 0~8 hours, preferably 1~6 hours.

70. The method for manufacturing microcrystalline glass according to claim 68, **characterized in that** the crystallization process comprises the steps of: performing the nucleation process at a 1st temperature, followed by the crystal growth process at a 2nd temperature higher than the nucleation process temperature.

71. The method for manufacturing microcrystalline glass according to claim 70, **characterized in that** the crystallization process comprises the steps of:the 1st temperature being 470~580°C and the 2nd temperature being 600~750°C; the holding time at the 1st temperature being 0~24 hours, the preferably, 2~15 hours; the holding time at the 2nd temperature is 0~10 hours, preferably 0.5~6 hours.

72. Method of manufacturing microcrystalline glass forming body, **characterized in that** the method includes grinding or polishing the microcrystalline glass to make microcrystalline glass forming body, or making microcrystalline glass forming body by heat bending process or pressing process of matrix glass or microcrystalline glass at a certain temperature.

73. Method of manufacturing microcrystalline glass forming body, **characterized in that** the method comprises the following steps: subjecting the matrix glass to a crystallization heat treatment process, including heating up, holding nucleation, heating up, holding crystallization, and cooling down to room temperature to form pre-crystallized glass; and thermally processing and molding the pre-crystallized glass to obtain the microcrystalline glass forming body.

74. Method of manufacturing a microcrystalline glass forming body, **characterized in that** the method comprises the steps of:
1)Heating preheating: the matrix glass or pre-crystallized glass or microcrystalline glass placed in the mold, the mold in the heat bender through each heating site in turn, and stay in each site for a certain period of time insulation, preheating zone temperature of 400~800 °C, the pressure of 0.01~0.05MPa, the time of 40~200s.
2)Pressurized forming: the mold is transferred to the forming site after preheating, and the hot bender applies a certain pressure to the mold, with a pressure range of 0.1~0.8 MPa, a temperature range of 650~850°C at the forming site, and a forming time range of 40~200 s.
3)Holding pressure cooling: transfer the mold to the cooling site to cool down station by station, cooling temperature range of 750~500 °C, pressure of 0.01~0.05Mpa, time of 40~200s.
